(19) Europäisches Patentamt
European Patent Office
Office européen des brevets

(11) **EP 2 824 956 A1**

(12) **EUROPEAN PATENT APPLICATION**
published in accordance with Art. 153(4) EPC

(43) Date of publication:
**14.01.2015 Bulletin 2015/03**

(21) Application number: **13757387.9**

(22) Date of filing: **04.03.2013**

(51) Int Cl.:
**H04W 16/28** (2009.01)          **H04W 28/16** (2009.01)
**H04W 72/04** (2009.01)          **H04W 72/12** (2009.01)

(86) International application number:
**PCT/JP2013/055785**

(87) International publication number:
**WO 2013/133193 (12.09.2013 Gazette 2013/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **09.03.2012   JP 2012052979**

(71) Applicant: **Sharp Kabushiki Kaisha
Osaka-shi, Osaka 545-8522 (JP)**

(72) Inventor: **OUCHI, Wataru
Osaka-shi, Osaka 545-8522 (JP)**

(74) Representative: **Müller - Hoffmann & Partner
Patentanwälte
St.-Martin-Strasse 58
81541 München (DE)**

(54) **BASE STATION, TERMINAL, COMMUNICATION METHOD AND INTEGRATED CIRCUIT**

(57)     A terminal that generates a base sequence for a sounding reference signal (SRS) on the basis of a specific parameter, including a reception unit that receives a radio resource control signal containing a first parameter and a second parameter, and that receives a downlink control information (DCI) format containing a field (SRS request) that specifies whether or not to request transmission of the SRS, and an uplink reference signal generation unit that determines whether the first parameter or the second parameter is to be used as the specific parameter that is applied to the base sequence, on the basis of the DCI format.

FIG. 5

START

→ S501 CONFIGURE PARAMETERS RELATING TO BASE SEQUENCE FOR SRS

→ S502 CONFIGURE PARAMETERS RELATING TO TRANSMISSION POWER CONTROL ON SRS

→ S503 SET PATH LOSS AND TRANSMISSION POWER ON BASIS OF RESULT OF RSRP MEASUREMENT

→ S504 SET SRS BASE SEQUENCE IN ACCORDANCE WITH DCI FORMAT IN WHICH SRS REQUEST DETECTED

→ S505 TRANSMIT SRS

END

**Description**

TECHNICAL FIELD

The present invention relates to a base station, a terminal, a communication method, and an integrated circuit.

BACKGROUND ART

In a communication system based on WCDMA (Wideband Code Division Multiple Access), LTE (Long Term Evolution), or LTE-A (LTE-Advanced) developed by the 3GPP (Third Generation Partnership Project), or Wireless LAN or WiMAX (Worldwide Interoperability for Microwave Access) developed by IEEE (The Institute of Electrical and Electronics Engineers), a base station (cell, transmission station, transmission apparatus, eNodeB) and a terminal (mobile terminal, reception station, mobile station, reception apparatus, UE (User Equipment)) each have a plurality of transmission/reception antennas and use a MIMO (Multi Input Multi Output) technique to thereby spatially multiplex data signals and achieve high-speed data communication.

In order to implement data communication between a base station and a terminal in such a communication system, a base station needs to perform various types of control on a terminal. Therefore, a base station communicates control information to a terminal using a predetermined resource to thereby perform data communication in the downlink and uplink. For example, a base station communicates, to a terminal, information about resource allocation, information about modulation and coding of data signals, information about the spatial multiplexing counts of data signals, information about transmission power control, and the like to thereby implement data communication. For such control information, a method described in NPL 1 can be used.

As communication methods in the downlink using a MIMO technique, various schemes can be used. For example, a multi-user MIMO scheme in which the same resource is allocated to different terminals, a CoMP (Cooperative Multipoint, Coordinated Multipoint) scheme in which a plurality of base stations perform data communication in a mutually coordinated manner, or the like can be used.

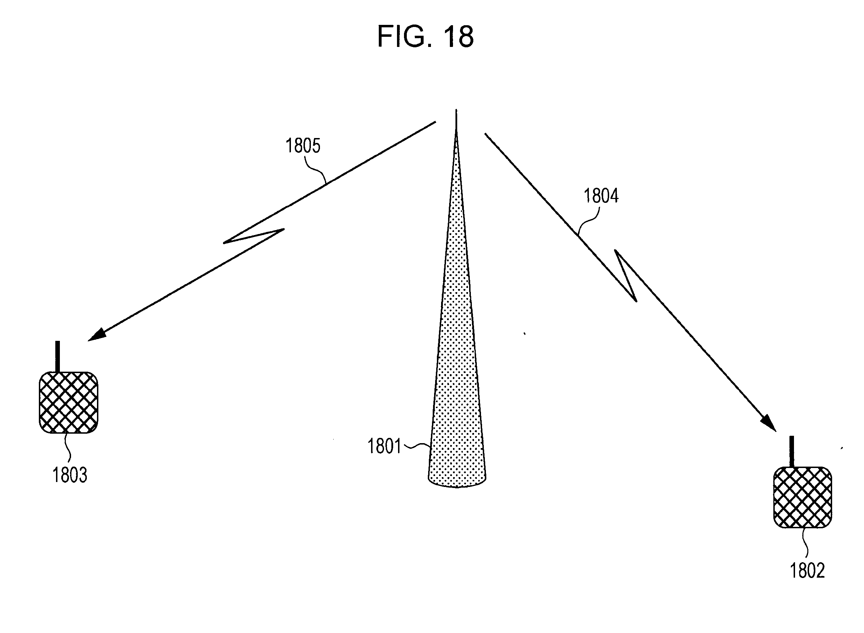

Fig. 18 is a diagram illustrating an example in which a multi-user MIMO scheme is carried out. In Fig. 18, a base station 1801 performs data communication with a terminal 1802 via a downlink 1804 and performs data communication with a terminal 1803 via a downlink 1805. In this case, the terminal 1802 and terminal 1803 perform data communication on the basis of multi-user MIMO. In the downlink 1804 and downlink 1805, the same resource is used. The resource is constituted by a resource in the frequency direction and a resource in the time direction. The base station 1801 uses a precoding technique or the like and performs beam control on each of the downlink 1804 and downlink 1805 to thereby maintain mutual orthogonality and reduce co-channel interference. In this way, the base station 1801 can implement data communication with the terminal 1802 and terminal 1803 using the same resource.

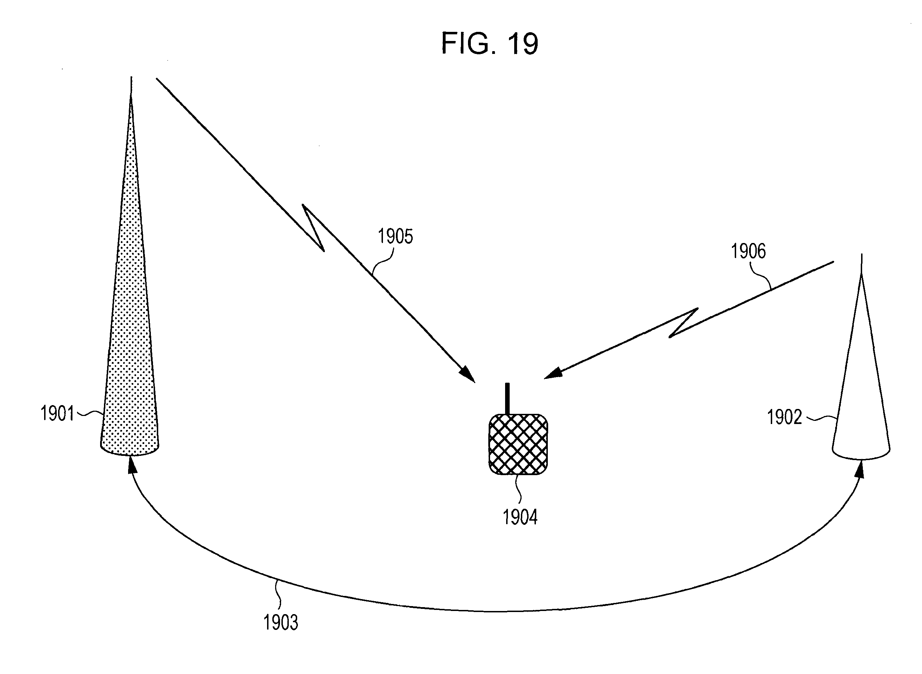

Fig. 19 is a diagram illustrating an example in which a downlink CoMP scheme is carried out. Fig. 19 illustrates a case where a wireless communication system is structured using a heterogeneous network configuration, which is constituted by a macro base station 1901 having wide coverage and an RRH (Remote Radio Head) 1902 having coverage narrower than that of the macro base station 1901. Here, a case will be considered where the coverage of the macro base station 1901 is configured so as to include part or all of the coverage of the RRH 1902. In the example illustrated in Fig. 19, the macro base station 1901 and RRH 1902 constitute a heterogeneous network configuration, cooperate with each other, and perform data communication with a terminal 1904 via a downlink 1905 and a downlink 1906 respectively. The macro base station 1901 is connected to the RRH 1902 via a line 1903 and can transmit to and receive from the RRH 1902 control signals and data signals. As the line 1903, a wire line, such as an optical fiber, or a radio link using a relay technique can be used. In this case, the macro base station 1901 and RRH 1902 use partially or entirely the same frequency (resource) to thereby enable increase of the total spectral efficiency (transmission capacity) in the area of the coverage provided by the macro base station 1901.

In the case where the terminal 1904 is located in the vicinity of the base station 1901 or RRH 1902, the terminal 1904 can perform single-cell communication with the base station 1901 or RRH 1902. In the case where the terminal 1904 is located in the vicinity of the edge (cell edge) of the coverage provided by the RRH 1902, a measure against co-channel interference from the macro base station 1901 is needed. A method has been studied of reducing or suppressing interference with the terminal 1904 located in the cell edge area by using a CoMP scheme in which the macro base station 1901 and RRH 1902 cooperate with each other for multi-cell communication (coordinated communication, multipoint communication, CoMP) between the macro base station 1901 and the RRH1902. For example, a method described in NPL 2 has been studied as such a CoMP scheme.

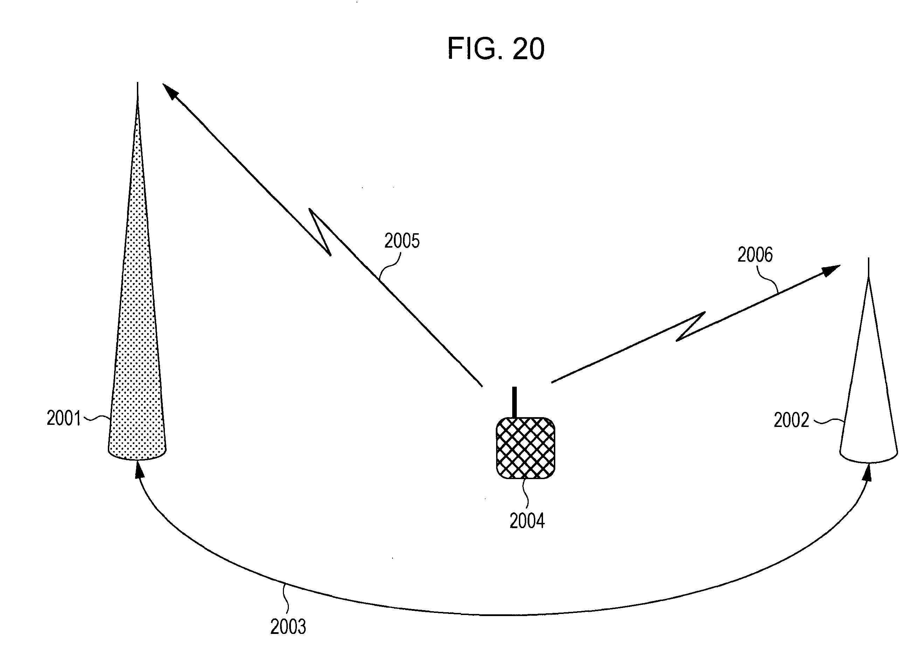

Fig. 20 is a diagram illustrating an example in which an uplink CoMP scheme is carried out. Fig. 20 illustrates a case where a wireless communication system is structured using a heterogeneous network configuration, which is constituted by a macro base station 2001 having wide coverage and an RRH (Remote Radio Head) 2002 having coverage narrower than that of the macro base station. Here, a case will be considered where the coverage of the macro base station 2001 is configured so as to include part or all of the coverage of the RRH 2002. In the example illustrated in Fig. 20, the macro base station 2001 and RRH 2002 constitute a heterogeneous network configuration, cooperate with each other, and perform data communication with a terminal 2004 via an uplink 2005 and an uplink 2006 respectively. The macro base station 2001 is connected to the RRH 2002 via a line 2003 and can transmit to and receive from the RRH 2002 reception signals, control signals, and data signals. As the line 2003, a wire line, such as an optical fiber, or a radio link using a relay technique can be used. In this case, the macro base station 2001 and RRH 2002 use partially or entirely the same frequency (resource) to thereby enable increase of the total spectral efficiency (transmission capacity) in the area of the coverage provided by the macro base station 2001.

In the case where the terminal 2004 is located in the vicinity of the base station 2001 or RRH 2002, the terminal 2004 can perform single-cell communication with the base station 2001 or RRH 2002. In this case, if the terminal 2004 is located in the vicinity of the base station 2001, the base station 2001 receives and demodulates a signal received via the uplink 2005. If the terminal 2004 is located in the vicinity of the RRH 2002, the RRH 2002 receives and demodulates a signal received via the uplink 2006. If the terminal 2004 is located in the vicinity of the edge (cell edge) of the coverage provided by the RRH 2002 or in the vicinity of a midpoint between the base station 2001 and the RRH 2002, the macro base station 2001 receives a signal received via the uplink 2005 and the RRH 2002 receives a signal received via the uplink 2006. Thereafter, the macro base station 2001 and RRH 2002 transmit and receive to/from each other via the line 2003 the signals received from the terminal 2004, combine the signals received from the terminal 2004, and demodulate the combined signal. With the processing described above, improvement of the characteristics of data communication is expected. This is a method called Joint Reception (JR), with which it is possible to improve the characteristics of data communication in the cell edge area or in an area in the vicinity of a midpoint between the macro base station 2001 and the RRH 2002 by using a CoMP scheme in which the macro base station 2001 and RRH 2002 cooperate with each other for uplink multi-cell communication (coordinated communication, multipoint communication, CoMP).

CITATION LIST

[Non-Patent Document]

NPL 1: 3rd Generation Partnership Project; Technical Specification Group Radio Access Network; Evolved Universal Terrestrial Radio Access (E-UTRA); Physical layer procedures (Release 10), March 2011, 3GPP TS 36.212 V10.1.0 (2011-03)
NPL 2: 3rd Generation Partnership Project; Technical Specification Group Radio Access Network; Further Advancements for E-UTRA Physical Layer Aspects (Release 9), March 2010, 3GPP TR 36.814 V9.0.0 (2010-03)

DISCLOSURE OF THE INVENTION

Problems to be Solved by the Invention

However, in a communication system in which coordinated communication, such as a CoMP scheme, can be performed, if the number of terminals increases, the orthogonality between terminals cannot be maintained only with interference coordination using a single cell ID, and interference between Sounding Reference Signals (SRSs) in the cell increases.

The present invention has been made in view of the problem described above and an object thereof is to provide a base station, a terminal, a communication method, and an integrated circuit with which interference between SRSs is randomized in a communication system in which a base station and a terminal communicate with each other.

Means for Solving the Problems

(1) The present invention has been made in order to solve the above-described problem. A terminal according to an aspect of the present invention is a terminal that communicates with a base station, the terminal including a reception unit that receives a downlink control information (DCI) format containing a field (SRS request) that specifies whether or not to request transmission of a sounding reference signal (SRS), and an uplink reference signal generation unit that sets a base sequence for the SRS on the basis of a first parameter in a case where the DCI format is a first DCI format, and sets a base sequence for the SRS on the basis of a second parameter in a case where the DCI format is a second DCI format.

(2) A terminal according to an aspect of the present invention is the above-described terminal in which the first DCI format is an uplink grant and the second DCI format is a downlink assignment.

(3) A terminal according to an aspect of the present invention is the above-described terminal in which the first parameter is a parameter that has been set for a physical uplink shared channel demodulation reference signal (PUSCH DMRS), and the second parameter is a parameter that has been set for a physical uplink control channel demodulation reference signal (PUCCH DMRS).

(4) A terminal according to an aspect of the present invention is the above-described terminal in which the first parameter is a parameter that has been set for a physical uplink shared channel demodulation reference signal (PUSCH DMRS), and the second parameter is a parameter that has been set for the SRS.

(5) A terminal according to an aspect of the present invention is the above-described terminal in which the first parameter is a parameter that is set so as to be terminal-specific, and the second parameter is a parameter that is set so as to be cell-specific.

(6) A terminal according to an aspect of the present invention is the above-described terminal in which the first parameter and the second parameter are independently set so as to be specific to the SRS.

(7) A base station according to an aspect of the present invention is a base station that communicates with a terminal, the base station including a transmission unit that transmits to the terminal a downlink control information (DCI) format containing a field (SRS request) that specifies whether or not to request transmission of a sounding reference signal (SRS), and that transmits to the terminal a radio resource control signal in which a plurality of parameters used in order to generate a base sequence for a certain uplink signal have been configured.

(8) A base station according to an aspect of the present invention is the above-described base station further including a radio resource control unit that sets the plurality of parameters so as to be specific to the SRS.

(9) A base station according to an aspect of the present invention is the above-described base station in which the radio resource control unit sets at least one of the plurality of parameters so as to be specific to a physical uplink shared channel demodulation reference signal.

(10) A base station according to an aspect of the present invention is the above-described base station in which the radio resource control unit sets at least one of the plurality of parameters so as to be specific to a physical uplink control channel demodulation reference signal.

(11) A base station according to an aspect of the present invention is the above-described base station in which the radio resource control unit sets at least one of the plurality of parameters so as to be cell-specific, and sets at least one of the plurality of parameters so as to be terminal-specific.

(12) A communication method according to an aspect of the present invention is a communication method for a terminal that communicates with a base station, the method including receiving a downlink control information (DCI) format containing a field (SRS request) that specifies whether or not to request transmission of a sounding reference signal (SRS), setting a base sequence for the SRS on the basis of a first parameter in a case where the DCI format is a first DCI format, setting a base sequence for the SRS on the basis of a second parameter in a case where the DCI format is a second DCI format, and transmitting the SRS based on the sequence to the base station.

(13) A communication method according to an aspect of the present invention is the above-described communication method in which the first DCI format is an uplink grant and the second DCI format is a downlink assignment.

(14) A communication method according to an aspect of the present invention is the above-described communication method in which the first parameter is a parameter that is set for a physical uplink shared channel demodulation reference signal (PUSCH DMRS), and the second parameter is a parameter that is set for a physical uplink control channel demodulation reference signal (PUCCH DMRS).

(15) A communication method according to an aspect of the present invention is the above-described communication method in which the first parameter is a parameter that is set so as to be terminal-specific, and the second parameter is a parameter that is set so as to be cell-specific.

(16) A communication method according to an aspect of the present invention is the above-described communication method in which the first parameter and the second parameter are independently set so as to be specific to the SRS.

(17) A communication method according to an aspect of the present invention is a communication method for a base station that communicates with a terminal, the method including transmitting to the terminal a downlink control information (DCI) format containing a field (SRS request) that specifies whether or not to request transmission of a sounding reference signal (SRS), and transmitting to the terminal a radio resource control signal in which a plurality of parameters used in order to generate a base sequence for a certain uplink signal have been configured.

(18) A communication method according to an aspect of the present invention is the above-described communication method in which the plurality of parameters are set so as to be specific to the SRS.

(19) An integrated circuit according to an aspect of the present invention is an integrated circuit that is mounted in a terminal that communicates with a base station, the integrated circuit causing the terminal to implement a function of receiving a downlink control information (DCI) format containing a field (SRS request) that specifies whether or not to request transmission of a sounding reference signal (SRS), a function of setting a base sequence for the SRS on the basis of a first parameter in a case where the DCI format is a first DCI format, and a function of setting a base sequence for the SRS on the basis of a second parameter in a case where the DCI format is a second DCI format.

(20) An integrated circuit according to an aspect of the present invention is an integrated circuit that is mounted in a base station that communicates with a terminal, the integrated circuit causing the base station to implement a function of transmitting to the terminal a downlink control information (DCI) format containing a field (SRS request) that specifies whether or not to request transmission of a sounding reference signal (SRS), and a function of transmitting to the terminal a radio resource control signal in which a plurality of parameters used in order to generate a base sequence for a certain uplink signal have been configured.

(21) An integrated circuit according to an aspect of the present invention is the above-described integrated circuit, the integrated circuit causing the base station to further implement a function of setting the plurality of parameters so as to be specific to the SRS.

Consequently, a base station can perform, on a terminal, appropriate control of a base sequence for an SRS to be transmitted to the base station or an RRH. That is, a base station can perform appropriate interference control.

Effects of the Invention

According to the present invention, in a communication system in which a base station and a terminal communicate with each other, the channel estimation accuracy can be improved by randomizing an SRS base sequence.

BRIEF DESCRIPTION OF THE DRAWINGS

[Fig. 1] Fig. 1 is a schematic diagram illustrating a communication system in which data transmission is performed according to a first embodiment of the present invention.

[Fig. 2] Fig. 2 is a diagram illustrating an example of channels on which a base station 101 performs mapping.

[Fig. 3] Fig. 3 is a schematic block diagram illustrating a configuration of the base station 101 according to the first embodiment of the present invention.

[Fig. 4] Fig. 4 is a schematic block diagram illustrating a configuration of a terminal 102 according to the first embodiment of the present invention.

[Fig. 5] Fig. 5 is a flowchart illustrating the details of SRS transmission processing performed by the terminal according to the first embodiment of the present invention.

[Fig. 6] Fig. 6 is a flowchart illustrating an example of a method of configuring a base sequence for an SRS according to the first embodiment of the present invention.

[Fig. 7] Fig. 7 is a flowchart illustrating an example of a method of configuring a base sequence for an SRS according to a second embodiment of the present invention.

[Fig. 8] Fig. 8 is a flowchart illustrating an example of a method of configuring a base sequence for an SRS according to a third embodiment of the present invention.

[Fig. 9] Fig. 9 is a flowchart illustrating an example of a method of configuring a base sequence for an SRS according to a fourth embodiment of the present invention.

[Fig. 10] Fig. 10 is a diagram illustrating an example of the details of parameter settings relating to uplink power control.

[Fig. 11] Fig. 11 is a diagram illustrating another example of the details of parameter settings relating to uplink power control.

[Fig. 12] Fig. 12 is a diagram illustrating the details of path loss reference resources.

[Fig. 13] Fig. 13 is a diagram illustrating an example of a second parameter setting relating to uplink power control in a fifth embodiment of the present invention.

[Fig. 14] Fig. 14 is a diagram illustrating an example of first parameter settings relating to uplink power control and second parameter settings relating to uplink power control which are included in each radio resource configuration.

[Fig. 15] Fig. 15 is a diagram illustrating examples of second parameter settings relating to cell-specific uplink power control.

[Fig. 16] Fig. 16 is a diagram illustrating examples of first parameter settings relating to terminal-specific uplink power control and second parameter settings relating to terminal-specific uplink power control.

[Fig. 17] Fig. 17 illustrates an example of parameters relating to uplink power control which are configured for respective uplink physical channels according to a seventh embodiment of the present invention.

[Fig. 18] Fig. 18 is a diagram illustrating an example in which a multi-user MIMO scheme is carried out.

[Fig. 19] Fig. 19 is a diagram illustrating an example in which a downlink CoMP scheme is carried out.

[Fig. 20] Fig. 20 is a diagram illustrating an example in which an uplink CoMP scheme is carried out.

BEST MODE FOR CARRYING OUT THE INVENTION

[First Embodiment]

The first embodiment of the present invention will be described. In the first embodiment, a base station 101 and/or an RRH 103 transmits a plurality of cell IDs (cell identities) to a terminal 102, and transmits a Downlink Control Information (DCI) format containing a field (SRS request) that specifies whether or not to request transmission of a Sounding Reference Signal (SRS) to the terminal 102, using a specific control channel region (PDCCH, E-PDCCH). The terminal 102 detects the SRS request from the received DCI format and determines whether or not an SRS transmission request has been made. In the case where an SRS transmission request has been made (positive SRS request), the terminal 102 sets the base sequence for an SRS on the basis of the first cell ID if the received DCI format is the first format, or sets the base sequence for an SRS on the basis of the second cell ID if the received DCI format is the second format, and transmits the SRS to the base station 101 or RRH 103. Note that a cell ID may be called a parameter communicated from the higher layer.

The base station 101 or RRH 103 transmits to the terminal a Radio Resource Control (RRC) signal containing a parameter or a physical quantity used to set the base sequence for an SRS.

The first format may be an uplink grant and the second format may be a downlink assignment. Note that an uplink grant is transmitted in order to perform scheduling of a Physical Uplink Shared Channel (PUSCH). A downlink assignment is transmitted in order to specify resource allocation for a Physical Downlink Shared Channel (PDSCH), scheduling of a PDSCH codeword, or the like. Formats for MIMO are configured for an uplink grant and for a downlink assignment respectively. For example, an uplink grant corresponds to DCI format 0, DCI format 4, or the like, and a downlink assignment corresponds to DCI format 1A, DCI format 2B, DCI format 2C, or the like.

In the first embodiment, the terminal 102 may set the base sequence for an SRS on the basis of the third cell ID if the received DCI format is the third format, set the base sequence for an SRS on the basis of the fourth cell ID if the received DCI format is the fourth format, or set the base sequence for an SRS on the basis the n-th cell ID if the received DCI format is the n-th (n is an integer) format, and transmit the SRS to the base station 101 or RRH 103.

The terminal 102 can set the sequence for an SRS on the basis of a specific cell ID in accordance with the received DCI format.

For example, in the case where the terminal 102 transmits an SRS to the base station 101 and RRH 103 respectively, the terminal 102 may set the base sequence for the SRS on the basis of a different cell ID. Even if different terminals 102 transmit SRSs to the base station 101 and RRH 103 using the same resource, the base sequences are different from each other and therefore the base station 101 and RRH 103 can each separate the two SRSs, and the channel estimation accuracy can be maintained.

A communication system according to the first embodiment includes the base station 101, the RRH (Remote Radio Head) 103, and the terminal 102. Here, the base station 101 may be called a macro base station, the first base station apparatus, a transmission apparatus, a cell, a transmission point, a transmission antenna group, a transmission antenna port group, a reception antenna port group, a reception point, the first communication apparatus, a component carrier, an eNodeB, a point of transmission, a point of reception, a point, a point of transmission/reception, a reference point, or a point of reference. The RRH 103 may be called a remote antenna, a distributed antenna, the n-th (n is an integer) base station, a transmission apparatus, a cell, a transmission point, a transmission antenna group, a transmission antenna port group, a reception point, the n-th (n is an integer) communication apparatus, a component carrier, an eNodeB, a point of transmission, a point of reception, a point, a point of transmission/reception, a reference point, or a point of reference. The terminal 102 may be called a terminal apparatus, a mobile terminal, a mobile station, a reception point, a reception terminal, a reception apparatus, the m-th (m is an integer) communication apparatus, a transmission antenna port group, a transmission point, a reception antenna group, a reception antenna port group, a UE, a point of transmission, a point of reception, a point, or a point of transmission/reception.

In downlink communication, the base station 101 or RRH 103 may be called a Transmission Point (TP). In uplink communication, the base station 101 or RRH 103 may be called a Reception Point (RP). The base station 101 or RRH 103 may be called a Path loss Reference Point (PRP) for measuring the downlink path loss. Note that the base station 101 or RRH 103 can configure, for the terminal 102, a Component Carrier (CC) corresponding to the serving cell.

At least one of the plurality of cell IDs described above may be configured so as to be specific to a specific reception point (RP specific). At least one of the plurality of cell IDs described above may be configured so as to be common to a plurality of reception points (RP common). At least one of the plurality of cell IDs described above may be configured so as to be terminal-specific (UE-specific, Dedicated). At least one of the plurality of cell IDs described above may be configured so as to be cell-specific (common). For example, in the case where coordinated reception (JR: Joint Reception) is performed at a plurality of reception points, the terminal 102 may set the base sequence for an SRS on the basis of a cell ID configured so as to be common to the reception points. In the case where coordinated reception (JR: Joint Reception) is performed at a plurality of reception points, the terminal 102 may set the base sequence for an SRS on the basis of a cell ID configured so as to be cell-specific.

At least one of the plurality of cell IDs may be applied to the base sequence for a Physical Uplink Shared Channel Demodulation Reference Signal (PUSCH DMRS). At least one of the plurality of cell IDs may be applied to the base sequence for a Physical Uplink Control Channel Demodulation Reference Signal (PUCCH DMRS).

In the case of performing reception point selection (PS: Point Selection), the terminal 102 may set the base sequence for an SRS on the basis of a cell ID configured so as to be specific to a specific reception point. In the case of performing reception point selection (PS: Point Selection), the terminal 102 may set the base sequence for an SRS on the basis of a cell ID configured so as to be terminal-specific. Note that reception point selection may be dynamically performed. Alternatively, reception point selection may be semi-statically performed.

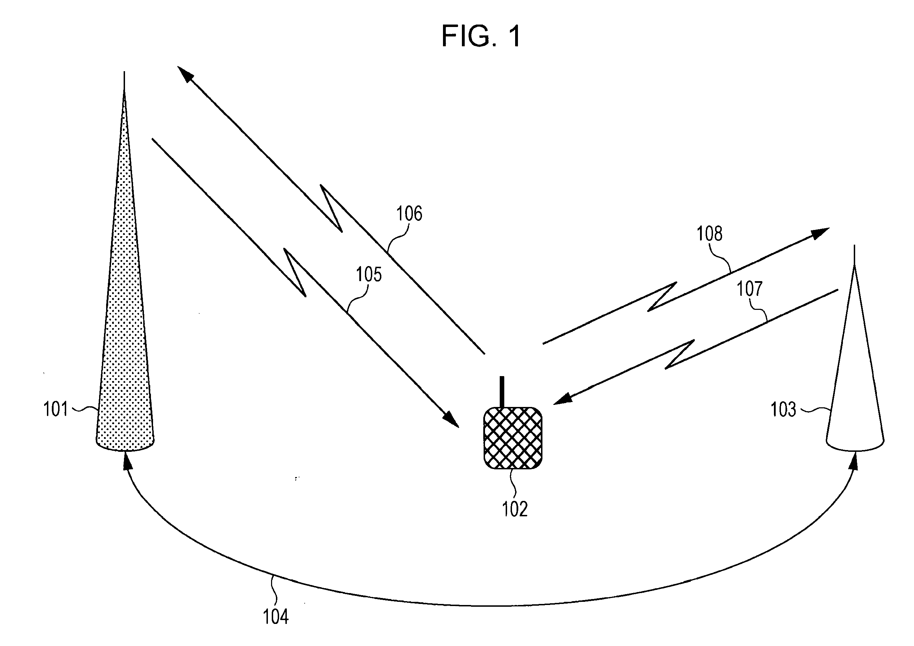

Fig. 1 is a schematic diagram illustrating a communication system in which data transmission is performed according to the first embodiment of the present invention. In Fig. 1, the base station (macro base station) 101 performs transmission and reception of control information and information data via a downlink 105 and an uplink 106 in order to perform data communication with the terminal 102. Similarly, the RRH 103 performs transmission and reception of control information and information data via a downlink 107 and an uplink 108 in order to perform data communication with the terminal 102. As a line 104, a wire line, such as an optical fiber, or a radio link using a relay technique can be used. In this case, the macro base station 101 and RRH 103 use partially or entirely the same frequency (resource) to thereby enable increase of the total spectral efficiency (transmission capacity) in the area of the coverage provided by the macro base station 101. A network configured such that neighboring stations (for example, a macro base station and an RRH) use the same frequency as described above is called a Single Frequency Network (SFN). In Fig. 1, a cell ID is communicated from the base station 101 and is used for a Cell-specific Reference Signal (CRS) or a terminal-specific reference signal (DL DMRS: Downlink Demodulation Reference Signal, UE-RS: UE-specific Reference Signal). A cell ID can also be communicated from the RRH 103. A cell ID communicated from the RRH 103 may be the same cell ID communicated from the base station 101 or may be different from a cell ID communicated from the base station 101. Note that the base station 101 described below may indicate the base station 101 and RRH 103 illustrated in Fig. 1. Note that, description of operations between the base station 101 and the RRH 103 described below may indicate operations between macro base stations or between RRHs.

In the description of embodiments of the present invention, computation of a power includes computation of the value of a power, calculation of a power includes calculation of the value of a power, measurement of a power includes measurement of the value of a power, and reporting of a power includes reporting of the value of a power. As described above, the term "power" also means the value of a power as appropriate.

The number of resource blocks can be changed in accordance with a frequency bandwidth (system bandwidth) used by the communication system. For example, the base station 101 can use 6 to 110 resource blocks in a system band, and the unit is also called a component carrier (CC: Component Carrier, Carrier Component). The base station 101 can configure a plurality of component carriers for the terminal 102 by means of frequency aggregation (carrier aggregation). For example, the base station 101 can form, for the terminal 102, one component carrier using 20 MHz and configure five component carriers contiguously and/or non-contiguously in the frequency direction to thereby attain the total bandwidth of 100 MHz that is available to the communication system. In the case where carrier aggregation has been configured, the terminal 102 recognizes an added serving cell to be a secondary cell and recognizes a serving cell that has been configured at the time of initial connection or handover to be a primary cell. In the case where information about the primary cell or information about the secondary cell is communicated by the base station 101, the terminal 102 configures the information about the cells.

Here, modulation processing, error correction coding processing, and the like are performed on the control information using a predetermined modulation scheme and a coding scheme, and a control signal is generated. The control signal is transmitted and received via the first control channel (first physical control channel) or the second control channel (second physical control channel) that is different from the first control channel. Note that a physical control channel mentioned here is a type of physical channel and is a control channel defined in a physical frame.

From one point of view, the first control channel (PDCCH: Physical Downlink Control Channel) is a physical control channel that uses the same transmission port (antenna port) as a Cell-specific Reference Signal (CRS). The second control channel (E-PDCCH: Enhanced PDCCH, Extended PDCCH, X-PDCCH, PDCCH on PDSCH) is a physical control channel that is transmitted using the same transmission port as a terminal-specific reference signal. The terminal 102 demodulates a control signal mapped onto the first control channel using a cell-specific reference signal, and demodulates a control signal mapped onto the second control channel using a terminal-specific reference signal. A cell-specific reference signal is a reference signal common to all terminals 102 in the cell and is inserted in every resource block in the system band. Therefore, a cell-specific reference signal is a reference signal available to any terminal 102. Accordingly, any terminal 102 can demodulate the first control channel. On the other hand, a terminal-specific reference signal is a reference signal that is inserted only in an allocated resource block and therefore beam forming processing can be adaptively performed on a terminal-specific reference signal as in the case of a data signal. Accordingly, in the second control channel, a gain from adaptive beam forming can be obtained.

From a different point of view, the first control channel is a physical control channel in OFDM symbols located in the front of a physical subframe, and is arranged in these OFDM symbols throughout the system bandwidth (component carrier (CC: Component Carrier, Carrier Component)). The second control channel is a physical control channel in OFDM symbols located behind the first control channel in a physical subframe, and can be arranged in these OFDM symbols in part of the system bandwidth. The first control channel is arranged in OFDM symbols which are located in the front of a physical subframe and are dedicated to control channels and therefore the first control channel can be received and demodulated before OFDM symbols in the back which are for physical data channels are processed. The terminal 102 that watches (monitors) only OFDM symbols dedicated to control channels can receive the first control channel. Resources used as the first control channel can be arranged dispersedly throughout a CC and therefore inter-cell interference relating to the first control channel can be randomized. On the other hand, the second control channel is arranged in OFDM symbols in the back which are for shared channels (physical data channels) that the terminal 102 in which communication is in progress usually receives. The base station 101 can orthogonal-multiplex (multiplex without interference) the second control channels or the second control channel and a physical data channel by frequency-division-multiplexing the second control channel.

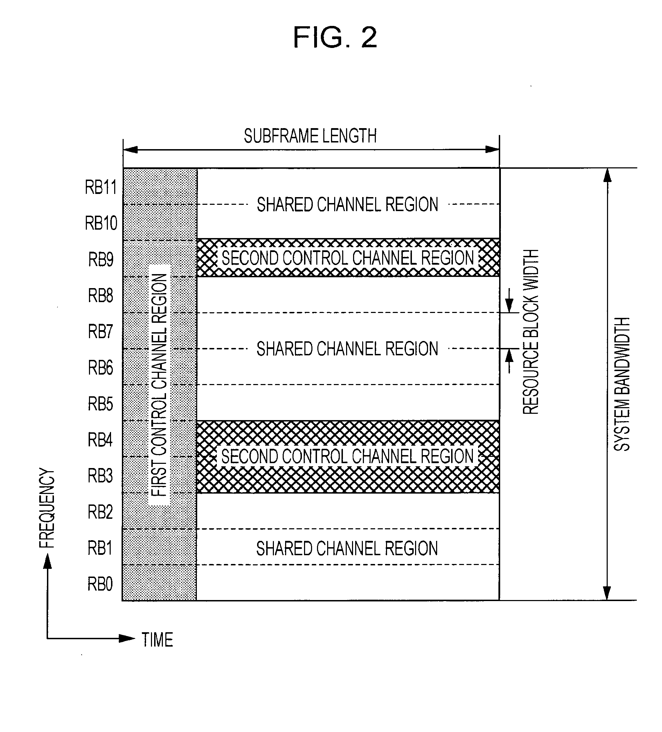

Fig. 2 is a diagram illustrating an example of channels on which the base station 101 performs mapping. Fig. 2 illustrates a case where a frequency band constituted by 12 resource block pairs is used as a system bandwidth. A PDCCH, which is the first control channel, is arranged in one, two, or three OFDM symbols in the front of a subframe. The first control channel is arranged throughout the system bandwidth in the frequency direction. Shared channels are arranged in OFDM symbols other than those for the first control channel.

Here, the configuration of a PDCCH will be described in detail. A PDCCH is constituted by a plurality of Control Channel Elements (CCEs). The number of CCEs used in each downlink component carrier depends on the bandwidth of the downlink component carrier, the number of OFDM symbols that constitute the PDCCH, and the number of transmission ports for downlink reference signals determined in accordance with the number of transmission antennas of the base station 101 which are used in communication. A CCE is constituted by a plurality of downlink resource elements. Note that a downlink resource element is a resource defined by one OFDM symbol and one subcarrier.

A CCE used in communication between the base station 101 and the terminal 102 is given a number (index) for identifying the CCE. The numbering of CCEs is performed on the basis of a rule determined in advance. Here, CCE_t represents a CCE having the CCE number t. A PDCCH is constituted by an aggregation composed of a plurality of CCEs (CCE aggregation). The number of CCEs that constitutes such an aggregation is called "CCE aggregation level". The CCE aggregation level of a PDCCH is configured by the base station 101 in accordance with a coding rate configured for the PDCCH and the number of bits of DCI contained in the PDCCH. Note that a possible combination of CCE aggregation levels that may be used for the terminal 102 is determined in advance. Furthermore, an aggregation composed of n CCEs is referred to as "CCE aggregation level n".

One Resource Element Group (REG) is constituted by four downlink resource elements that are contiguous in the frequency domain. One CCE is constituted by nine different REGs that are dispersed in the frequency domain and time domain. Specifically, interleave is performed on the entire downlink component carrier on an REG basis by using a block interleaver on every numbered REG, and one CCE is constituted by nine REGs that have been obtained after the interleave and have consecutive numbers.

For each terminal 102, a space (SS: Search Space) in which a PDCCH is searched for is configured. An SS is constituted by a plurality of CCEs. An SS is constituted by a plurality of CCEs having consecutive numbers including a CCE having the smallest number, and the number of the plurality of CCEs having consecutive numbers is determined in advance. An SS of each CCE aggregation level is constituted by an aggregate of a plurality of candidate PDCCHs. SSs are classified into a cell-specific search space (CSS: Cell-specific SS) which are constituted by CCEs having numbers that are common in the cell, including a CCE having the smallest number, and a terminal-specific search space (USS: UE-specific SS) which are constituted by CCEs having numbers that are specific to the terminal, including a CCE having the smallest number. In a CSS, a PDCCH, onto which control information that a plurality of terminals 102 reads, such as system information or information about paging, is allocated, or a PDCCH, onto which a downlink/uplink grant indicating specification of fallback to a lower level transmission scheme or of random access is allocated, is arranged.

The base station 101 transmits a PDCCH using one or more CCEs in an SS configured by the terminal 102. The terminal 102 decodes a reception signal using one or more CCEs in the SS to thereby perform processing for detecting a PDCCH addressed to the terminal 102 (which is called blind decoding). The terminal 102 configures a different SS for each CCE aggregation level. Then, the terminal 102 performs blind decoding using a predetermined combination of CCEs in an SS that differs depending on the CCE aggregation level. In other words, the terminal 102 performs blind decoding on each candidate PDCCH in an SS that differs depending on the CCE aggregation level. The series of processing performed in the terminal 102 may be called monitoring of a PDCCH.

The second control channel (E-PDCCH: Enhanced PDCCH, Extended PDCCH, X-PDCCH, PDCCH on PDSCH) is arranged in OFDM symbols other than those for the first control channel. The second control channel and a shared channel are arranged in different resource blocks respectively. Resource blocks in which the second control channel and a shared channel can be arranged are configured for each terminal 102. In resource blocks in which the second control channel region can be arranged, a shared channel (data channel) addressed to the terminal 102 or another terminal can be configured. Regarding the start position of OFDM symbols in which the second control channel is arranged, a method similar to a shared channel can be used. That is, the base station 101 can determine the start position by configuring some resources for the first control channel as a Physical Control Format Indicator Channel (PCFICH), and mapping information that indicates the number of OFDM symbols of the first control channel.

The start position of OFDM symbols in which the second control channel is arranged can be defined in advance, such that the start position is the fourth OFDM symbol in the front of a subframe, for example. In this case, if the number of OFDM symbols for the first control channel is equal to or less than two, a signal is not mapped onto the second and third OFDM symbols in a resource block pair in which the second control channel is arranged, and the second and third OFDM symbols are configured as null. Note that, onto a resource configured as null, another control signal or a data signal can be further mapped. The start position of OFDM symbols that constitute the second control channel can be configured using control information from the higher layer. Furthermore, a subframe illustrated in Fig. 2 is time-multiplexed (TDM: Time Division Multiplexing), and the second control channel can be configured for each subframe.

An SS for searching for an E-PDCCH can be constituted using a plurality of CCEs as in the case of a PDCCH. That is, a resource element group is constituted by a plurality of resource elements in a region configured as a region for the second control channel illustrated in Fig. 2, and a CCE is constituted by a plurality of resource elements. In this way, an SS for searching for (monitoring) an E-PDCCH can be configured as in the case of a PDCCH described above.

Alternatively, an SS for searching for an E-PDCCH can be constituted by one or more resource blocks differently from the case of a PDCCH. That is, a resource block in a region configured as a region for the second control channel illustrated in Fig. 2 is assumed to be a unit, and an SS for searching for an E-PDCCH is constituted by an aggregate (RB aggregation) composed of one or more resource blocks. The number of RBs that constitute such an aggregation is called "RB aggregation level". An SS is constituted by a plurality of RBs having consecutive numbers, including an RB having the smallest number, and the number of one or more RBs having consecutive numbers is determined in advance. An SS of each RB aggregation level is constituted by an aggregate of a plurality of candidate E-PDCCHs.

The base station 101 transmits an X-PDCCH using one or more RBs in an SS configured by the terminal 102. The terminal 102 decodes a reception signal using one or more RBs in the SS to thereby perform processing for detecting an E-PDCCH addressed to the terminal 102 (perform blind decoding). The terminal 102 configures a different SS for each RB aggregation level. Then, the terminal 102 performs blind decoding using a predetermined combination of RBs in an SS that differs depending on the RB aggregation level. In other words, the terminal 102 performs blind decoding on each candidate E-PDCCH in an SS that differs depending on the RB aggregation level (monitors an E-PDCCH). The terminal 102 can identify a DCI format contained in a PDCCH when performing blind decoding. The number of bits that constitute a DCI format differs depending on the type of the DCI format and therefore the terminal 102 can determine the type of a DCI format on the basis of the number of bits that constitute the DCI format.

In the case where the base station 101 communicates a control signal to the terminal 102 via the second control channel, the base station 101 configures monitoring of the second control channel for the terminal 102, and maps a control signal for the terminal 102 onto the second control channel. In the case where the base station 101 communicates a control signal to the terminal 102 via the first control channel, the base station 101 maps a control signal for the terminal 102 onto the first control channel without configuring monitoring of the second control channel for the terminal 102.

On the other hand, in the case where monitoring of the second control channel is configured by the base station 101, the terminal 102 performs blind decoding of a control signal addressed to the terminal 102 on the second control channel. In the case where monitoring of the second control channel is not configured by the base station 101, the terminal 102 does not perform blind decoding of a control signal addressed to the terminal 102 on the second control channel.

Hereinafter, a control signal that is mapped onto the second control channel will be described. A control signal that is mapped onto the second control channel is processed for control information for each terminal 102, and scramble processing, modulation processing, layer mapping processing, precoding processing, and the like are performed on the control signal similarly to a data signal. Precoding processing specific to the terminal 102 is performed on a control signal that is mapped onto the second control channel together with a terminal-specific reference signal. In this case, it is preferable that the precoding processing be performed using a precoding weight suitable for the terminal 102. For example, common precoding processing is performed on a signal mapped onto the second control channel and a terminal-specific reference signal which are in the same resource block.

Control signals can be mapped onto the second control channels in such a manner that pieces of control information respectively contained in the forward slot (first slot) and the backward slot (second slot) in a subframe are different from each other. For example, a control signal containing information about assignment, to a downlink shared channel, of a data signal to be transmitted by the base station 101 to the terminal 102 (downlink assignment information) is mapped onto the forward slot in a subframe. A control signal containing information about assignment, to an uplink shared channel, of a data signal to be transmitted by the terminal 102 to the base station 101 (uplink assignment information) is mapped onto the backward slot in a subframe. Note that a control signal containing uplink assignment information from the base station 101 to the terminal 102 may be mapped onto the forward slot in a subframe, and a control signal containing downlink assignment information from the terminal 102 to the base station 101 may be mapped onto the backward slot in a subframe.

A data signal addressed to the terminal 102 or another terminal 102 may be mapped onto the forward and/or backward slot in the second control channel. A control signal addressed to the terminal 102 or a terminal (including the terminal 102) for which the second control channel has been configured may be mapped onto the forward and/or backward slot in the second control channel.

A terminal-specific reference signal is multiplexed, by the base station 101, with a control signal that is mapped onto the second control channel. The terminal 102 performs demodulation processing on the control signal mapped onto the second control channel using the multiplexed terminal-specific reference signal. Furthermore, terminal-specific reference signals relating to some or all of antenna ports 7 to 14 are used. In this case, a control signal mapped onto the second control channel can be transmitted by means of MIMO using a plurality of antenna ports.

For example, a terminal-specific reference signal in the second control channel is transmitted using an antenna port and a scramble code specified in advance. Specifically, a terminal-specific reference signal in the second control channel is generated using the antenna port 7 and a scramble ID specified in advance.

For example, a terminal-specific reference signal in the second control channel is generated using an antenna port and a scramble ID that are communicated by means of RRC signaling or PDCCH signaling. Specifically, as an antenna port used for a terminal-specific reference signal in the second control channel, either the antenna port 7 or antenna port 8 is communicated by means of RRC signaling or PDCCH signaling. As a scramble ID used for a terminal-specific reference signal in the second control channel, the value of any one of 0 to 3 is communicated by means of RRC signaling or PDCCH signaling.

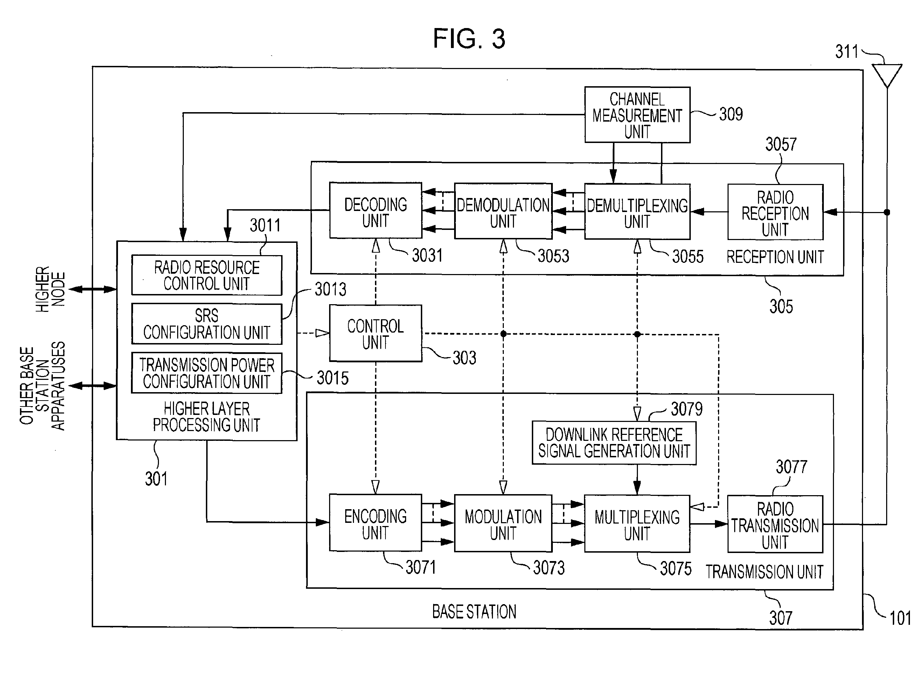

Fig. 3 is a schematic block diagram illustrating a configuration of the base station 101 of the present invention. As illustrated, the base station 101 includes a higher layer processing unit 301, a control unit 303, a reception unit 305, a transmission unit 307, a channel measurement unit 309, and a transmission/reception antenna 311. The higher layer processing unit 301 includes a radio resource control unit 3011, an SRS configuration unit 3013, and a transmission power configuration unit 3015. The reception unit 305 includes a decoding unit 3051, a demodulation unit 3053, a demultiplexing unit 3055, and a radio reception unit 3057. The transmission unit 307 includes an encoding unit 3071, a modulation unit 3073, a multiplexing unit 3075, a radio transmission unit 3077, and a downlink reference signal generation unit 3079.

The higher layer processing unit 301 performs processing relating to the Medium Access Control (MAC) layer, Packet Data Convergence Protocol (PDCP) layer, Radio Link Control (RLC) layer, and Radio Resource Control (RRC) layer.

The radio resource control unit 3011 included in the higher layer processing unit 301 generates or obtains from a higher node information to be mapped onto each downlink channel, and outputs the information to the transmission unit 307. The radio resource control unit 3011 allocates a radio resource, among uplink radio resources, onto which the terminal 102 maps a Physical Uplink Shared Channel (PUSCH), which is uplink data information. The radio resource control unit 3011 determines a radio resource, among downlink radio resources, onto which a Physical Downlink Shared Channel (PDSCH), which is downlink data information, is mapped. The radio resource control unit 3011 generates downlink control information that indicates allocation of the radio resource and transmits the information to the terminal 102 via the transmission unit 307. When allocating a radio resource onto which a PUSCH is to be mapped, the radio resource control unit 3011 preferentially allocates a radio resource having good channel quality on the basis of the result of uplink channel measurement received from the channel measurement unit 309.

The higher layer processing unit 301 generates control information in order to control the reception unit 305 and transmission unit 307, on the basis of Uplink Control Information (UCI) communicated from the terminal 102 using a Physical Uplink Control Channel (PUCCH), and the condition of a buffer communicated from the terminal 102 or various pieces of configuration information relating to each terminal 102, which have been configured by the radio resource control unit 3011, and outputs the control information to the control unit 303. Note that UCI includes at least one of Ack/Nack, a Channel Quality Indicator (CQI), and a Scheduling Request (SR).

The SRS configuration unit 3013 configures a sounding subframe, which is a subframe reserved as a radio resource used by the terminal 102 to transmit a Sounding Reference Signal (SRS), and the bandwidth of the radio resource reserved for transmitting an SRS in the sounding subframe, generates information about the configuration as System Information (SI), and broadcasts the information via the transmission unit 307 using a PDSCH. The SRS configuration unit 3013 configures a subframe used to periodically transmit a periodic SRS (P-SRS) to each terminal 102, the frequency band, and the amount of a cyclic shift used for a CAZAC (Constant Amplitude Zero Auto-Correlation) sequence for the P-SRS, generates a signal containing information about the configuration as a Radio Resource control (RRC) signal, and communicates the signal to each terminal 102 via the transmission unit 307 using a PDSCH. Note that a P-SRS may be called a trigger type 0 SRS (type 0 triggered SRS). The system information described above may be called System Information Block (SIB). A sounding subframe may be called an SRS subframe or an SRS transmission subframe.

The SRS configuration unit 3013 configures a frequency band used to transmit an aperiodic SRS (A-SRS) to each terminal 102 and the amount of a cyclic shift used for a CAZAC sequence for the A-SRS, generates a signal containing information about the configuration as a radio resource control signal, and communicates the signal to each terminal 102 via the transmission unit 307 using a PDSCH. In the case of requesting the terminal 102 to transmit an A-SRS, the SRS configuration unit generates an SRS request that specifies whether or not to request the terminal 102 to transmit an A-SRS, and communicates the SRS request to the terminal 102 via the transmission unit 307 using a PDCCH or an E-PDCCH. Here, a PDCCH may be called the first control channel region, and an E-PDCCH may be called the second control channel region.

The SRS request is contained in a Downlink Control Information (DCI) format. A DCI format is transmitted to the terminal 102 using the control channel region (PDCCH, E-PDCCH). A DCI format containing the SRS request contains an uplink grant or a downlink assignment. A plurality of types of DCI formats are available, and the SRS request is contained in at least one of the DCI formats. For example, the SRS request may be contained in DCI format 0, which is an uplink grant. The SRS request may be contained in DCI format 1 A, which is a downlink assignment. The SRS request may be contained in DCI format 4, which is an uplink grant for MIMO. The SRS request applicable only to TDD may be contained in DCI format 2B/2C for DLMIMO. Note that a DCI format for MIMO is a DCI format that is associated with information relating to a transport block or information relating to precoding.

The SRS request may be controlled using one-bit information. That is, whether or not to request transmission of an A-SRS can be controlled using one-bit information. For example, in the case where the base station 101 sets the SRS request to an information bit having the first value (for example, '0'), the base station 101 can perform control so as not to transmit an A-SRS to the terminal 102. In the case where the base station 101 sets the SRS request to an information bit having the second value (for example, '1'), the base station 101 can perform control so as to transmit an A-SRS to the terminal 102. The SRS request may be controlled using two-bit information. That is, various SRS parameters (or a parameter set) in addition to information specifying whether or not to transmit an A-SRS can be associated with an index represented by two-bit information. Here, various SRS parameters may include the transmission bandwidth (srs-BandwidthAp-r10). Various SRS parameters may include the number of antenna ports (srs-AntennaPortAp-r10) for the A-SRS. Various SRS parameters may include the cyclic shift (cyclicShiftAp-r10) for the SRS. Various SRS parameters may include the transmission comb (transmissionCombAp-r10) that is the frequency offset arranged in a comb-like form. Various SRS parameters may include the frequency position (freqDomainPositionAp-r10). Various SRS parameters may include the hopping bandwidth (srs-HoppingBandwidthAp-r11) that indicates the region (bandwidth) of frequency hopping of the SRS. Various SRS parameters may include the number of times of transmission of the SRS (durationAp-r11). Various SRS parameters may include the power offset (pSRS-OffsetAp-r11) of the SRS. Various SRS parameters may include a cell ID that is set for a base sequence. Various SRS parameters described above may be configured as an SRS parameter set. That is, an SRS parameter set may be constituted by various SRS parameters. For example, it is assumed that the SRS request is represented using information bits set to the first value to the fourth value, as information specified by two bits. Then, in the case where the base station 101 sets the SRS request to the information bit having the first value (for example, '01'), the base station 101 can perform control so as to transmit to the terminal 102 an A-SRS generated using the first SRS parameter set. In the case where the base station 101 sets the SRS request to the information bit having the second value (for example, '10'), the base station 101 can perform control so as to transmit to the terminal 102 an A-SRS generated using the second SRS parameter set. In the case where the base station 101 sets the SRS request to the information bit having the third value (for example, '11'), the base station 101 can perform control so as to transmit to the terminal 102 an A-SRS generated using the third SRS parameter set. In the case where the base station 101 sets the SRS request to the information bit having the fourth value (for example, '00'), the base station 101 can perform control so as not to transmit to the terminal 102 an A-SRS. The SRS parameter sets described above are configured so that the value of at least one SRS parameter among various SRS parameters (or an index associated with an SRS parameter) included in each SRS parameter set differs depending on the SRS parameter set. An A-SRS may be called a trigger type 1 SRS (type 1 triggered SRS). An SRS parameter set may be called SRS config (SRS-Config). An SRS request specifying that transmission of an A-SRS is requested to the terminal 102 may be called a positive SRS request. An SRS request specifying that transmission of an A-SRS is not requested to the terminal 102 may be called a negative SRS request.

Furthermore, an SRS parameter set can be configured for each DCI format. In other words, an SRS parameter set corresponding to the SRS request contained in a DCI format can be configured. Specifically, an SRS parameter set corresponding to DCI format 0 can be configured for DCI format 0, and an SRS parameter set corresponding to DCI format 1A can be configured for DCI format 1A. Such configuration information can be configured by SRS5013.

Furthermore, an SRS parameter set can be configured for an A-SRS and a P-SRS independently. However, the SRS configuration unit 3013 may configure some parameters such that the parameters are shared by an A-SRS and a P-SRS. For example, an SRS subframe in a specific cell may be shared by an A-SRS and a P-SRS. The maximum bandwidth of an SRS in a specific cell may be shared by an A-SRS and a P-SRS.

The SRS configuration unit 3013 sets information (srs-ActivateAp-r10) that indicates whether or not the SRS request has been included in a DCI format, and transmits the information to the terminal 102 via the transmission unit 307. The terminal 102 can recognize whether or not the SRS request has been included in the DCI format using the information and appropriately demodulate the received DCI format. For example, in the case where information indicating whether or not the SRS request has been included in a DCI format indicates that the SRS request has been included, the terminal 102 recognizes that the SRS request has been included in DCI format 0 or DCI format 1A/2B/2C, and performs demodulation and decoding processing.

Furthermore, the SRS configuration unit 3013 configures cell IDs necessary for setting the base sequence for an SRS, and transmits the cell IDs to the terminal 102 from the transmission unit 307 via the control unit 303 using an RRC signal. These cell IDs may be configured individually for SRS parameter sets. These cell IDs may be configured for each DCI format.

The transmission power configuration unit 3015 configures the transmission powers of a PUCCH, a PUSCH, a P-SRS, and an A-SRS. Specifically, the transmission power configuration unit 3015 configures the transmission power of the terminal 102 in accordance with information indicating the amount of interference from a neighboring base station, information indicating the amount of interference applied to a neighboring base station 101, this information having been communicated from the neighboring base station, the channel quality received from the channel measurement unit 309, and the like so that the PUSCH and the like satisfy predetermined channel quality, by taking into consideration interference with the neighboring base station, and transmits information indicating the configuration to the terminal 102 via the transmission unit 307.

Specifically, the transmission power configuration unit 3015 configures $P_{0\_PUSCH}$, $\alpha$, $P_{SRS-OFFSET}(0)$, which is the power offset of a P-SRS (first offset value (pSRS-Offset)), and $P_{SRS-OFFSET}(1)$, which is the power offset of an A-SRS (second offset value (pSRS-OffsetAp-r10)) in expression (1) described below, generates a signal containing information indicating the configuration as an RRC signal, and communicates the signal to each terminal 102 via the transmission unit 307 using a PDSCH. The transmission power configuration unit 3015 configures a TPC command for calculating f(i) in expression (1) and expression (4), generates a signal indicating the TPC command, and communicates the signal to each terminal 102 via the transmission unit 307 using a PDCCH. Note that $\alpha$ described here is used in transmission power calculation in expression (1) and expression (4) together with the path loss value, and is a coefficient that represents the degree of compensation of the path loss, namely, a coefficient that determines to what degree the power is to be increased or decreased in accordance with the path loss (attenuation coefficient, path loss compensation coefficient). $\alpha$ usually has a value ranging from 0 to 1. If $\alpha$ is 0, compensation of the power in accordance with the path loss is not performed and, if $\alpha$ is 1, the transmission power of the terminal 102 is increased or decreased so that the path loss does not have an effect on the base station 101. Furthermore, the transmission power configuration unit 3015 configures a TPC command for an SRS by taking into consideration the condition of the terminal 102, generates a signal indicating the TPC command, and communicates the signal to each terminal 102 via the transmission unit 307 using a PDCCH. Furthermore, the transmission power configuration unit 3015 generates a DCI format containing the TPC command and communicates the DCI format to each terminal 102 via the transmission unit 307 using a PDCCH. The DCI format containing the TPC command may be communicated using an E-PDCCH.

The control unit 303 generates a control signal that controls the reception unit 305 and transmission unit 307 on the basis of control information from the higher layer processing unit 301. The control unit 303 outputs the generated control signal to the reception unit 305 and transmission unit 307 to thereby control the reception unit 305 and transmission unit 307.

The reception unit 305 demultiplexes, demodulates, and decodes a reception signal received from the terminal 102 via the transmission/reception antenna 311, in accordance with the control signal received from the control unit 303, and outputs the decoded information to the higher layer processing unit 301. The radio reception unit 3057 converts (down-converts) an uplink signal received via the transmission/reception antenna 311 into an Intermediate Frequency (IF) signal, removes an unwanted frequency component, controls the amplification level so that the signal level is appropriately maintained, orthogonal-demodulates the signal on the basis of the in-phase component and orthogonal component of the received signal, and converts the orthogonal-demodulated analog signal into a digital signal. The radio reception unit 3057 removes portions corresponding to Guard Intervals (GIs) from the converted digital signal. The radio reception unit 3057 performs Fast Fourier Transform (FFT) on the signal from which the guard intervals have been removed, extracts a signal in the frequency domain, and outputs the signal to the demultiplexing unit 3055.

The demultiplexing unit 3055 demultiplexes the signal received from the radio reception unit 3057 into signals, such as a PUCCH, a PUSCH, a UL DMRS (PUSCH DMRS, PUCCH DMRS), an SRS, and the like. The demultiplexing is performed on the basis of radio resource allocation information determined in advance by the base station 101 and communicated to each terminal 102. The demultiplexing unit 3055 performs channel compensation on the PUCCH and PUSCH on the basis of the channel estimation value received from the channel measurement unit 309. The demultiplexing unit 3055 outputs the demultiplexed UL DMRS and SRS to the channel measurement unit 309.

The demodulation unit 3053 performs Inverse Discrete Fourier Transform (IDFT) on the PUSCH, obtains modulation symbols, and performs demodulation on the PUCCH and the modulation symbols of the PUSCH using a predetermined modulation scheme, such as Binary Phase Shift Keying (BPSK), Quadrature Phase Shift Keying (QPSK), 16 Quadrature Amplitude Modulation (16QAM), 64 Quadrature Amplitude Modulation (64QAM), or the like, or a modulation scheme communicated in advance by the base station 101 to each terminal 102 using downlink control information to thereby demodulate the reception signal.

The decoding unit 3051 decodes the coded bits of the demodulated PUCCH and PUSCH using a predetermined coding rate of a predetermined coding scheme or a coding rate communicated in advance by the base station 101 to the terminal 102 in an uplink grant (UL grant), and outputs the decoded data information and the uplink control information to the higher layer processing unit 301.

The channel measurement unit 309 measures the channel estimation value, channel quality, and the like on the basis of the uplink demodulation reference signal UL DMRS and the SRS received from the demultiplexing unit 3055, and outputs the result to the demultiplexing unit 3055 and higher layer processing unit 301.

The transmission unit 307 generates a reference signal in the downlink (downlink reference signal) in accordance with the control signal received from the control unit 303, encodes and modulates the data information and downlink control information received from the higher layer processing unit 301, multiplexes the PDCCH, PDSCH, and downlink reference signal, and transmits the resulting signal to the terminal 102 via the transmission/reception antenna 311.

The encoding unit 3071 performs encoding, such as turbo coding, convolutional coding, block coding, or the like, on the downlink control information and data information received from the higher layer processing unit 301. The modulation unit 3073 modulates the coded bits using a modulation scheme, such as QPSK, 16QAM, 64QAM, or the like. The downlink reference signal generation unit 3079 generates a sequence that is obtained in accordance with a predetermined rule on the basis of a cell ID or the like that identifies the base station 101 and that is known to the terminal 102, as a downlink reference signal. The multiplexing unit 3075 multiplexes each modulated channel with the generated downlink reference signal. Note that a cell ID may be called a cell identity.

The radio transmission unit 3077 performs modulation based on an OFDM scheme by performing Inverse Fast Fourier Transform (IFFT) on the multiplexed modulation symbols, adds guard intervals to the OFDM-modulated OFDM symbols, generates a baseband digital signal, converts the baseband digital signal into an analog signal, generates an in-phase component and an orthogonal component having intermediate frequencies from the analog signal, removes an extra frequency component relative to the intermediate-frequency band, converts (up-converts) the intermediate-frequency signal into a high-frequency (RF: Radio Frequency) signal, removes an extra frequency component, amplifies the power, and outputs the resulting signal to the transmission/reception antenna 311 for transmission. Although not illustrated here, it is assumed that the RRH 103 also has a similar configuration to the base station 101.

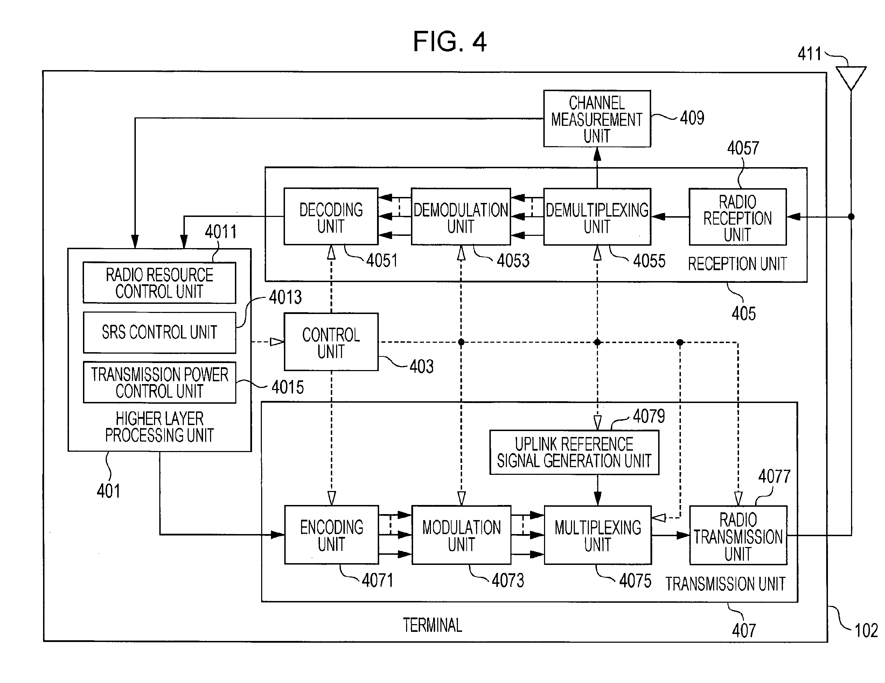

Fig. 4 is a schematic block diagram illustrating a configuration of the terminal 102 according to this embodiment. As illustrated, the terminal 102 includes a higher layer processing unit 401, a control unit 403, a reception unit 405, a transmission unit 407, a channel measurement unit 409, and a transmission/reception antenna 411. The higher layer processing unit 401 includes a radio resource control unit 4011, an SRS control unit 4013, and a transmission power control unit 4015. The reception unit 405 includes a decoding unit 4051, a demodulation unit 4053, a demultiplexing unit 4055, and a radio reception unit 4057. The transmission unit 407 includes an encoding unit 4071, a modulation unit 4073, a multiplexing unit 4075, and a radio transmission unit 4077.

The higher layer processing unit 401 outputs uplink data information generated as a result of operations or the like performed by a user to the transmission unit 407. The higher layer processing unit 401 performs processing relating to the Medium Access Control (MAC) layer, Packet Data Convergence Protocol (PDCP) layer, Radio Link Control (RLC) layer, and Radio Resource Control (RRC) layer.

The radio resource control unit 4011 included in the higher layer processing unit 401 manages various pieces of configuration information of the terminal 102. The radio resource control unit 4011 generates information to be mapped onto each uplink channel, and outputs the information to the transmission unit 407. The radio resource control unit 4011 generates control information in order to control the reception unit 405 and transmission unit 407, on the basis of downlink control information communicated from the base station 101 using a PDCCH, and various pieces of configuration information of the terminal 102 which have been configured on the basis of radio resource control information communicated using a PDSCH and which is managed by the radio resource control unit 4011, and outputs the control information to the control unit 403.

The SRS control unit 4013 included in the higher layer processing unit 401 obtains from the reception unit 405 information which is broadcasted by the base station 101 and which indicates a sounding subframe, the sounding subframe being a subframe reserved as a radio resource used to transmit an SRS, and the bandwidth of the radio resource reserved for transmitting an SRS in the sounding subframe, information communicated by the base station 101 to the terminal 102 which indicates a subframe used to transmit a P-SRS, the bandwidth, and the amount of a cyclic shift used for a CAZAC sequence for the P-SRS, and information communicated by the base station 101 to the terminal 102 which indicates the frequency band used to transmit an A-SRS and the amount of a cyclic shift used for a CAZAC sequence for the A-SRS.

The SRS control unit 4013 controls transmission of an SRS in accordance with the information described above. Specifically, the SRS control unit 4013 controls the transmission unit 407 so as to transmit a P-SRS once or periodically in accordance with the above-described information relating to the P-SRS. In the case where transmission of an A-SRS has been requested by the SRS request received from the reception unit 405, the SRS control unit 4013 transmits an A-SRS a predetermined number of times (for example, once) in accordance with the above-described information relating to the A-SRS.

Regarding the SRS request contained in a specific DCI format, the SRS control unit 4013 controls an uplink reference signal generation unit 4079 so as to generate an A-SRS on the basis of an SRS parameter set associated with the value of the information bit set in the SRS request.

The transmission power control unit 4015 included in the higher layer processing unit 401 outputs control information to the control unit 403 so as to control the transmission power, on the basis of information indicating the configuration of the transmission powers of a PRACH, a PUCCH, a PUSCH, a P-SRS, and an A-SRS. Specifically, the transmission power control unit 4015 controls the transmission power of a P-SRS and the transmission power of an A-SRS using expression (4), on the basis of $P_{0\_PUSCH}$, $\alpha$, $P_{SRS-OFFSET}(0)$, which is the power offset of a P-SRS (first offset value (pSRS-Offset)), $P_{SRS\_OFFSET}(1)$, which is the power offset of an A-SRS (second offset value (pSRS-OffsetApr10)), and a TPC command received from the reception unit 405. Note that the transmission power control unit 4015 switches the parameter $P_{SRS-OFFSET}$ depending on whether the SRS is a P-SRS or an A-SRS. In the case where a plurality of values of $P_{0\_PUSCH}$, $\alpha$, $P_{0\_PUCCH}$, $P_{SRS\_OFFSET}$, and the like are configured, the transmission power control unit 4015 also outputs to the control unit 403 control information indicating that $\alpha$ having what value is to be used to perform uplink transmission power control.

The control unit 403 generates a control signal that controls the reception unit 405 and transmission unit 407 on the basis of the control information from the higher layer processing unit 401. The control unit 403 outputs the generated control signal to the reception unit 405 and transmission unit 407 to thereby control the reception unit 405 and transmission unit 407.

The reception unit 405 demultiplexes, demodulates, and decodes a reception signal received from the base station 101 via the transmission/reception antenna 411, in accordance with the control signal received from the control unit 403, and outputs the decoded information to the higher layer processing unit 401.

The radio reception unit 4057 converts (down-converts) a downlink signal received via each reception antenna into an intermediate-frequency signal, removes an unwanted frequency component, controls the amplification level so that the signal level is appropriately maintained, orthogonal-demodulates the signal on the basis of the in-phase component and orthogonal component of the received signal, and converts the orthogonal-demodulated analog signal into a digital signal. The radio reception unit 4057 removes portions corresponding to guard intervals from the converted digital signal, performs fast Fourier transform on the signal from which the guard intervals have been removed, and extracts a signal in the frequency domain.

The demultiplexing unit 4055 demultiplexes the extracted signal into a Physical Downlink Control Channel (PDCCH), a PDSCH, and a Downlink Reference Signal (DRS). Note that the demultiplexing is performed on the basis of radio resource allocation information communicated in the downlink control information or the like. The demultiplexing unit 4055 performs channel compensation on the PDCCH and PDSCH on the basis of the channel estimation value received from the channel measurement unit 409. The demultiplexing unit 4055 outputs the demultiplexed downlink reference signal to the channel measurement unit 409.

The demodulation unit 4053 performs demodulation based on a QPSK modulation scheme on the PDCCH and outputs the result to the decoding unit 4051. The decoding unit 4051 attempts decoding of the PDCCH and, if the decoding is successful, outputs the decoded downlink control information to the higher layer processing unit 401. The demodulation unit 4053 demodulates the PDSCH using a modulation scheme, such as QPSK, 16QAM, 64QAM, or the like, which has been communicated in the downlink control information, and outputs the result to the decoding unit 4051. The decoding unit 4051 performs decoding using a coding rate communicated in the downlink control information, and outputs the decoded data information to the higher layer processing unit 401.

The channel measurement unit 409 measures the downlink path loss from the downlink reference signal received from the demultiplexing unit 4055, and outputs the measured path loss to the higher layer processing unit 401. The channel measurement unit 409 calculates the downlink channel estimation value from the downlink reference signal, and outputs the calculated value to the demultiplexing unit 4055.

The channel measurement unit 409 measures the reception power (RSRP: Reference Signal Received Power) from at least one downlink reference signal among a Cell-specific Reference Signal (CRS), a terminal-specific reference signal (UE-RS: UE-specific Reference Signal, DL DMRS: Downlink Demodulation Reference Signal), and a Channel State Information Reference Signal (CSI-RS), which are downlink reference signals, and estimates the reception power of the remaining downlink reference signals on the basis of the measurement result. For example, in the case where the transmission power (referenceSignalPower) of a CRS has been communicated from the base station 101, and the power ratio or power offset relative to the CRS or PDSCH has been communicated regarding a UERS and a CSI-RS, the channel measurement unit 409 measures the RSRP of the CRS, and estimates the reception powers of the remaining downlink reference signals from the communicated power ratio. Note that the power ratio may be called an Energy Per Resource Element (EPRE) ratio.

The transmission unit 407 generates a UL DMRS and/or an SRS in accordance with the control signal received from the control unit 403, encodes and modulates the data information received from the higher layer processing unit 401, multiplexes a PUCCH, a PUSCH, and the generated UL DMRS and/or SRS, adjusts the transmission powers of the PUCCH, PUSCH, UL DMRS, and SRS, and transmits the result to the base station 101 via the transmission/reception antenna 411.

The encoding unit 4071 performs encoding, such as turbo coding, convolutional coding, block coding, or the like, on the uplink control information and data information received from the higher layer processing unit 401. The modulation unit 4073 modulates the coded bits received from the encoding unit 4071 using a modulation scheme, such as BPSK, QPSK, 16QAM, 64QAM, or the like.

The uplink reference signal generation unit 4079 generates a CAZAC sequence known to the base station 101 which is obtained in accordance with a rule determined in advance on the basis of a cell ID that identifies the base station 101, the bandwidth in which a UL DMRS and an SRS are to be arranged, and the like. The uplink reference signal generation unit 4079 gives a cyclic shift to the generated CAZAC sequence for the UL DMRS and SRS in accordance with the control signal received from the control unit 403. Note that a CAZAC sequence may be obtained from a base sequence described below.

In the case where a cell ID has been communicated from the base station 101 or RRH 103 via the higher layer, the uplink reference signal generation unit 4079 sets the base sequence for a UL DMRS or an SRS on the basis of the cell ID. The method of configuring a base sequence may be performed in accordance with expression (10) to expression (28).

The multiplexing unit 4075 rearranges the modulation symbols of a PUSCH in parallel in accordance with the control signal received from the control unit 403, performs Discrete Fourier Transform (DFT) on the modulation symbols, and multiplexes the PUCCH and PUSCH signals and the generated UL DMRS and SRS.

The radio transmission unit 4077 performs modulation based on an SC-FDMA scheme by performing inverse fast Fourier transform on the multiplexed signal, adds guard intervals to the SC-FDMA modulated SC-FDMA symbols, generates a baseband digital signal, converts the baseband digital signal into an analog signal, generates an in-phase component and an orthogonal component having intermediate frequencies from the analog signal, removes an extra frequency component relative to the intermediate-frequency band, converts (up-converts) the intermediate-frequency signal into a high-frequency signal, removes an extra frequency component, amplifies the power, and outputs the resulting signal to the transmission/reception antenna 411 for transmission.

Next, the method of calculating the uplink transmission power will be described. The terminal 102 determines the uplink transmission power of a PUSCH in a subframe i in a serving cell c using expression (1).
[Math. 1]

$$P_{\text{PUSCH},c}(i) = \min \left\{ \begin{array}{l} P_{\text{CMAX},c}(i), \\ 10\log_{10}(M_{\text{PUSCH},c}(i)) + P_{\text{O\_PUSCH},c}(j) + \alpha_c(j) \cdot PL_c + \Delta_{\text{TF},c}(i) + f_c(i) \end{array} \right\}$$

$$\ldots (1)$$

$P_{\text{CMAX},c}$ represents the maximum transmission power of the terminal 102 in the serving cell c. $M_{\text{PUSCH},c}$ represents the transmission bandwidth (the number of resource blocks in the frequency direction) of the serving cell c. $P_{\text{O\_PUSCH},c}$ represents the nominal power of the PUSCH in the serving cell c. $P_{\text{O\_PUSCH},c}$ is determined from $P_{\text{O-NOMINAL\_PUSCH},c}$ and $P_{\text{O\_UE\_PUSCH},c}$. $P_{\text{O\_NOMINAL\_PUSCH},c}$ is a parameter relating to cell-specific uplink power control. $P_{\text{O\_UE\_PUSCH},c}$ is a parameter relating to terminal-specific uplink power control. $\alpha$, is an attenuation coefficient (path loss compensation coefficient) used in fractional transmission power control of the entire cell. $PL_c$ is the path loss and is obtained from a reference signal transmitted with a known power and the RSRP. For example, in the case where the path loss (PL) between the base station 101 (or RRH 103) and the terminal 102 is 5 dB, $PL_c$ is a parameter used to compensate for the value. In the present invention, $PL_c$ may be the result of calculation of the path loss obtained in the first embodiment or second embodiment. $\Delta_{\text{TF},c}$ is obtained using expression (2).
[Math. 2]

$$\Delta_{\mathrm{TF},\mathrm{c}}(i) = 10\log_{10}\left(\left(2^{BPRE \cdot K_s} - 1\right) \cdot \beta_{offset}^{PUSCH}\right)$$

$$\ldots (2)$$

BPRE represents the number of bits that can be allocated to a resource element. $K_s$ is a parameter relating to uplink power control, which is communicated from the higher layer using an RRC signal, and is a parameter (deltaMCS-Enabled) that depends on the modulation coding scheme (MCS) for an uplink signal. $f_c$ is determined from accumulation-enabled, which is a parameter relating to uplink power control, and a TPC command contained in an uplink grant (DCI format).

The terminal 102 determines the uplink transmission power of a PUCCH in the subframe i using expression (3).

[Math. 3]

$$P_{\mathrm{PUCCH}}(i) = \min\left\{ \begin{array}{l} P_{\mathrm{CMAX,c}}(i), \\ P_{0\_\mathrm{PUCCH}} + PL_c + h\left(n_{CQI}, n_{HARQ}, n_{SR}\right) + \Delta_{\mathrm{F\_PUCCH}}(F) + \Delta_{TxD}(F') + g(i) \end{array} \right\}$$

$$\ldots (3)$$

$P_{0\_\mathrm{PUCCH}}$ represents the nominal power of the PUCCH. $P_{0\_\mathrm{PUCCH}}$ is determined from $P_{0\_\mathrm{NOMINAL\_PUCCH}}$ and $P_{0\_\mathrm{UE\_PUCCH}}$. $P_{0\_\mathrm{NOMINAL\_PUCCH}}$ is a parameter relating to cell-specific uplink power control. $P_{0\_\mathrm{UE\_PUCCH}}$ is a parameter relating to terminal-specific uplink power control. $n_{\mathrm{CQI}}$ represents the number of bits of the CQI, $n_{\mathrm{HARQ}}$ represents the number of bits of the HARQ, and $n_{\mathrm{SR}}$ represents the number of bits of the SR. $h(n_{\mathrm{CQI}}, n_{\mathrm{HARQ}}, n_{\mathrm{SR}})$ is a parameter defined depending on the numbers of bits, that is, the PUCCH format. $\Delta_{\mathrm{F\_PUCCH}}$ is a parameter communicated from the higher layer (deltaFList-PUCCH). $\Delta_{\mathrm{TxD}}$ is a parameter communicated from the higher layer when transmission diversity has been configured. g is a parameter used in order to adjust the power control for the PUCCH.

The terminal 102 determines the uplink transmission power of an SRS using expression (4).

[Math. 4]

$$P_{\mathrm{SRS,c}}(i) = \min\left\{ \begin{array}{l} P_{\mathrm{CMAX,c}}(i), \\ P_{\mathrm{SRS\_OFFSET,c}}(m) + 10\log_{10}(M_{\mathrm{SRS,c}}) + P_{\mathrm{O\_PUSCH,c}}(j) + \alpha_c(j) \cdot PL_c + f_c(i) \end{array} \right\}$$

$$\ldots (4)$$

$P_{\mathrm{SRS\_OFFSET}}$ is an offset used to adjust the transmission power of the SRS, and is included in the uplink power control parameter (parameter setting relating to terminal-specific uplink power control). $M_{\mathrm{SRS,c}}$ represents the bandwidth (the number of resource blocks in the frequency direction) of the SRS arranged in the serving cell c.

The terminal 102 determines the uplink transmission power of a PRACH using expression (5).

[Math. 5]

$$P_{\text{PRACH}} = \min\left\{\begin{array}{l} P_{\text{CMAX},c}(i), \\ \text{PREAMBLE\_RECEIVED\_TARGET\_POWER} + PL_c \end{array}\right\}$$

$$\dots (5)$$

$P_{cMAX,c}$ of the PRACH is the maximum transmission power in the primary cell. $PL_c$ of the PRACH is the downlink path loss in the primary cell calculated by the terminal 102. $P_{cMAX,c}$ of the PRACH may be the maximum transmission power in the secondary cell. $PL_c$ of the PRACH may be the downlink path loss in the primary cell or secondary cell calculated by the terminal 102.

In the case where the transmission powers of the uplink physical channels described above exceed $P_{CMAX,c}(i)$, which is the maximum transmission power of the terminal 102, on the basis of various transmission power parameters, the result of calculation of the path loss, or the like, the terminal 102 transmits an uplink physical channel with the maximum transmission power.

The terminal 102 determines PREAMBLE_RECEIVED_TARGET_POWER using expression (6).

[Math. 6]

$$\begin{aligned} &\text{PREAMBLE\_RECEIVED\_TARGET\_POWER} \\ &= preambleInitialReceivedPower + \text{DELTA\_PREAMBLE} + \\ &(\text{PREAMBLE\_TRANSMISSION\_COUNTER} - 1) * powerRampingStep \end{aligned}$$

$$\dots (6)$$

preambleInitialReceivedPower is the initial reception power of a random access preamble. DELTA_PREAMBLE is a power offset associated with the preamble format. PREAMBLE_TRANSMISSION_COUNTER represents the number of times of transmission of a PRACH (random access preamble). powerRampingStep is a parameter that indicates the amount of power increase in order to increase, by a certain amount, the transmission power when retransmitting a PRACH in the case where random access fails.

Here, the terminal 102 determines $PL_c$, which is the path loss (downlink path loss) of the serving cell c using expression (7).

[Math. 7]

$$PL_c = referenceSignalPower - \text{higher layer filtered RSRP}$$

$$\dots (7)$$

referenceSignalPower is the value of a power per resource element (EPRE: Energy Per Resource Element) of a reference signal for path loss measurement (for example, a CRS), and is communicated by the higher layer by being contained in PDSCH-Config. That is, referenceSignalPower represents the transmission power of a reference signal for path loss measurement transmitted from the base station 101. higherlayerfilteredRSRP is the RSRP filtered by the higher layer. higherlayerfilteredRSRP is obtained using expression (8).

[Math. 8]

$$F_n = (1-a) \cdot F_{n-1} + a \cdot M_n$$

$$\dots (8)$$

$F_n$ is the measurement result that is updated. The measurement result is based on higherlayerfilteredRSRP. $F_{n-1}$ is the past measurement result and is accumulated on the basis of higherlayerfilteredRSRP that has been measured in the past. $M_n$ is the latest measurement result. a is a measured physical quantity and is determined using expression (9). a represents the degrees of the effects of the measurement results. If the value of a is closer to 1, the measurement result is a result obtained by weighting the latest measurement result.

[Math. 9]

$$a = 1 \big/ 2^{(k/4)}$$

$$\dots (9)$$

k is configured using a filter coefficient filterCoeffieicnt. filterCoeffeicnt is configured in quantityConfig or UplinkPower-Control. In the case where the base station 101 gives weight to the past measurement result, the value of k is made larger so that the value of a becomes smaller. In the case where the base station 101 gives weight to the latest measurement result, the value of k is made smaller so that the value of a becomes larger.

The first embodiment can include performing of transmission power control by switching some parameters or a parameter set used in the transmission power control described above in accordance with the type of the DCI format.

Next, the method of generating the base sequence for an SRS will be described. In the case where the sequence length of an SRS is $3N_{SC}^{RB}$ ($N_{SC}^{RB}$ is 12) or more, the base sequence for the SRS is obtained using expression (10).

[Math. 10]

$$\bar{r}_{u,v}(n) = x_q(n \bmod N_{ZC}^{RS}), \quad 0 \le n < M_{sc}^{RS}$$

$$\dots (10)$$

$x_q$, which is a q-th root Zadoff-Chu sequence (or the q-th root Zadoff-Chu sequence), is obtained using expression (11). [x]mod[y] is used to calculate the remainder obtained when x is divided by y.

[Math. 11]

$$x_q(m) = e^{-j\frac{\pi q m(m+1)}{N_{ZC}^{RS}}}, \quad 0 \le m \le N_{ZC}^{RS} - 1$$

$$\dots (11)$$

q is obtained using expression (12).
[Math. 12]

$$q = \lfloor \bar{q} + 1/2 \rfloor + v \cdot (-1)^{\lfloor 2q \rfloor}$$

$$\bar{q} = N_{ZC}^{RS} \cdot (u+1)/31$$

... (12)

$N_{ZC}^{RS}$, which is the Zadoff-Chu sequence length, is given by selecting the maximum prime number from among prime numbers that are less than the SRS sequence length. u is the sequence group number in the slot number $n_s$, and is obtained using expression (13).
[Math. 13]

$$u = \left( f_{gh}(n_s) + f_{ss} \right) \mod 30$$

... (13)

$f_{gh}(n_s)$ is a group hopping pattern, and $f_{ss}$ is a sequence shift pattern. For example, 17 group hopping patterns and 30 sequence shift patterns are available. Whether or not to perform sequence group hopping can be controlled on the basis of a cell-specific parameter (Group-hopping enabled) communicated from the higher layer. Note that a group hopping pattern may be called a hopping pattern.

The group hopping patterns for a PUSCH and a PUCCH are the same, if the reception points of the PUSCH and PUCCH are the same, and are obtained using expression (14).
[Math. 14]

$$f_{gh}(n_s) = \begin{cases} 0 & \text{if group hopping is disabled} \\ \left( \sum_{i=0}^{7} c(8n_s + i) \cdot 2^i \right) \mod 30 & \text{if group hopping is enabled} \end{cases}$$

... (14)

c(i), which is a pseudo-random sequence, is obtained using expression (15). The pseudo-random sequence is defined by a gold sequence having the length of 31. The length of an output sequence c(n) is $M_{PN}$, where n = 0, 1, ... , $M_{PN}$-1.
[Math. 15]

$$c(n) = \left(x_1(n + N_C) + x_2(n + N_C)\right) \mathrm{mod}\, 2$$

$$x_1(n + 31) = \left(x_1(n + 3) + x_1(n)\right) \mathrm{mod}\, 2$$

$$x_2(n + 31) = \left(x_2(n + 3) + x_2(n + 2) + x_2(n + 1) + x_2(n)\right) \mathrm{mod}\, 2$$

$$\dots (15)$$

For example, $N_c$ is equal to 1600, and $x_1$, which the first m sequence, is initialized with $x_1(0) = 1$ and $x_1(n) = 0$, where n = 1, 2,..., 30. The initial value of the second m sequence is obtained using expression (16).
[Math. 16]

$$c_{\mathrm{init}} = \sum_{i=0}^{30} x_2(i) \cdot 2^i$$

$$\dots (16)$$

The pseudo-random sequence for a group hopping pattern is initialized by a pseudo-random sequence generator using expression (17) at the start of each radio frame.
[Math. 17]

$$c_{\mathrm{init}} = \left\lfloor \frac{N_{\mathrm{ID}}^{\mathrm{cell}}}{30} \right\rfloor$$

$$\dots (17)$$

$N_{\mathrm{ID}}^{\mathrm{cell}}$ is a cell ID and is a parameter communicated by the higher layer. For each terminal 102, sequence group hopping in a PUSCH can be controlled so as not to be performed, in accordance with a parameter (Disable-sequence-grouop-hopping) communicated by the higher layer. That is, even if it is configured in accordance with a parameter (Group-hopping-enabled) communicated by the higher layer to perform sequence group hopping in the entire cell, sequence group hopping can be controlled so as not to be performed for a specific terminal, in accordance with the information.

The sequence shift pattern $f_{\mathrm{SS}}$ is defined for each of a PUSCH and a PUCCH. The sequence shift pattern $f_{\mathrm{SS}}$ for a PUCCH is defined by expression (18).
[Math. 18]

$$f_{\mathrm{SS}}^{\mathrm{PUCCH}} = N_{\mathrm{ID}}^{\mathrm{cell}} \bmod 30$$

$$... (18)$$

The sequence shift pattern $f_{SS}$ for a PUSCH is defined by expression (19).
[Math 19.]

$$f_{\mathrm{SS}}^{\mathrm{PUSCH}} = \left( f_{\mathrm{SS}}^{\mathrm{PUCCH}} + \Delta_{\mathrm{SS}} \right) \bmod 30$$

$$... (19)$$

$\Delta_{SS}$ satisfies $\Delta_{SS} \in \{0, 1, \ldots, 29\}$, is configured by the higher layer, and is communicated from the transmission unit 305.

The sequence group number of an SRS, which is represented by u, is set on the basis of the sequence shift pattern for the PUCCH.

In the first embodiment, the terminal 102 sets the base sequence for an SRS on the basis of a cell ID configured in accordance with the DCI format. In the case where the DCI format containing the SRS request is the first format, the uplink reference signal generation unit 4079 sets the base sequence for an SRS on the basis of the first cell ID. In the case where the DCI format containing the SRS request is the second format, the uplink reference signal generation unit 4079 sets the base sequence for an SRS on the basis of the second cell ID. In the case where the DCI format containing the SRS request is the third format, the uplink reference signal generation unit 4079 sets the base sequence for an SRS on the basis of the third cell ID. Then, the uplink reference signal generation unit 4079 transmits the SRS to the base station 101 or RRH 103.

That is, in the case where a plurality of cell IDs have been communicated from the base station 101 or RRH 103, the uplink reference signal generation unit 4079 may set the base sequence for an SRS on the basis of a cell ID that has been set in accordance with the received DCI format.

In the case where a plurality of cell IDs have been communicated from the base station 101 or RRH 103, the uplink reference signal generation unit 4079 may set the base sequence for a PUSCH DMRS on the basis of a cell ID that has been set in accordance with the received DCI format.

In the case where a plurality of cell IDs have been communicated from the base station 101 or RRH 103, the uplink reference signal generation unit 4079 may set the base sequence for a PUCCH DMRS on the basis of a cell ID that has been set in accordance with the received DCI format.

It is assumed that a cell ID that is configured so as to be SRS-specific is denoted by $X_{SRS}$ ($X_{SRS}$ is an integer). Then, $f_{SS}^{SRS}$, which is the sequence shift pattern for the SRS, is expressed by expression (20).
[Math. 20]

$$f_{\mathrm{SS}}^{\mathrm{SRS}} = X_{\mathrm{SRS}} \bmod 30$$

$$... (20)$$

Furthermore, $f_{SS}^{SRS}$, which is the sequence shift pattern for the SRS, may be expressed by expression (21).
[Math. 21]

$$f_{ss}^{SRS} = X_{SRS} \bmod K$$

$$\dots (21)$$

K is any integer and may be associated with the (number of) types of sequence shift patterns. That is, if there are 30 types of sequence shift patterns, K is equal to 30. If there are 17 types of sequence shift patterns, K is equal to 17. If there are n types of sequence shift patterns, K is equal to n. Similarly, the SRS pseudo-random sequence generator performs initialization as expressed by expression (22) at the start of each radio frame.
[Math. 22]

$$c_{init}^{SRS} = \left\lfloor \frac{X_{SRS}}{K} \right\rfloor$$

$$\dots (22)$$

Sequence hopping is applied only in the case where the length of a reference signal is equal to or larger than $6N_{SC}^{RB}$ (for example, $N_{SC}^{RB}$ is 12). That is, in the case where the length of a reference signal is less than $6N_{SC}^{RB}$ (for example, $N_{SC}^{RB}$ is 12), the base sequence number v of the base sequence group is equal to 0.
Regarding sequence hopping, in the case where the length of a reference signal is equal to or larger than $6N_{SC}^{RB}$ (for example, $N_{SC}^{RB}$ is 12), the base sequence number v of the base sequence group in a slot $n_s$ is obtained using expression (23).

$$v = \begin{cases} c(n_s) & \text{if group hopping is disabled and sequence hopping is enabled} \\ 0 & \text{otherwise} \end{cases}$$

$$\dots (23)$$

The pseudo-random sequence c(i) is obtained using expression (15) and expression (16).
The pseudo-random sequence for sequence hopping is initialized by the pseudo-random sequence generator using expression (24) at the start of each radio frame.
[Math. 24]

$$c_{\mathrm{init}} = \left\lfloor \frac{N_{\mathrm{ID}}^{\mathrm{cell}}}{30} \right\rfloor \cdot 2^5 + f_{\mathrm{ss}}^{\mathrm{PUSCH}}$$

$$\ldots (24)$$

For each terminal 102, sequence hopping can be controlled so as not to be performed, in accordance with the parameter (Disable-sequence-grouop-hopping) communicated by the higher layer similarly to sequence group hopping. That is, even if it is configured in accordance with a parameter (Sequence-hopping-enabled) communicated by the higher layer to perform sequence hopping in the entire cell, sequence hopping can be controlled so as not to be performed for a specific terminal, in accordance with the information.

It is assumed that a cell ID that is configured so as to be SRS-specific is denoted by $X_{\mathrm{SRS}}$ ($X_{\mathrm{SRS}}$ is an integer). Then, the pseudo-random sequence for sequence hopping for the SRS is initialized by the pseudo-random sequence generator at the start of each radio frame using expression (25).
[Math. 25]

$$c_{\mathrm{init}} = \left\lfloor \frac{X_{\mathrm{SRS}}}{30} \right\rfloor \cdot 2^5 + f_{\mathrm{ss}}^{\mathrm{PUSCH}}$$

$$\ldots (25)$$

Expression (25) may be expressed as expression (26) using K and $f_{\mathrm{ss}}^{\mathrm{SRS}}$, similarly to expression (21).
[Math. 26]

$$c_{\mathrm{init}} = \left\lfloor \frac{X_{\mathrm{SRS}}}{K} \right\rfloor \cdot 2^5 + f_{\mathrm{ss}}^{\mathrm{SRS}}$$

$$\ldots (26)$$

The value of $c_{\mathrm{init}}$ itself may be communicated from the higher layer.

The sequence shift patterns for a PUSCH and a PUCCH may be configured using a parameter $X_n$ that is configured for each terminal 102.
[Math. 27]

$$f_{\text{ss}}^{\text{PUCCH}} = X_{\text{n}} \bmod 30$$

$$\dots (27)$$

[Math. 28]

$$f_{\text{ss}}^{\text{PUSCH}} = \left( X_{\text{n}} \bmod 30 + \Delta_{\text{ss}} \right) \bmod 30$$

$$\dots (28)$$

Here, $\Delta_{\text{ss}}$ is a parameter that is configured for each terminal 102.

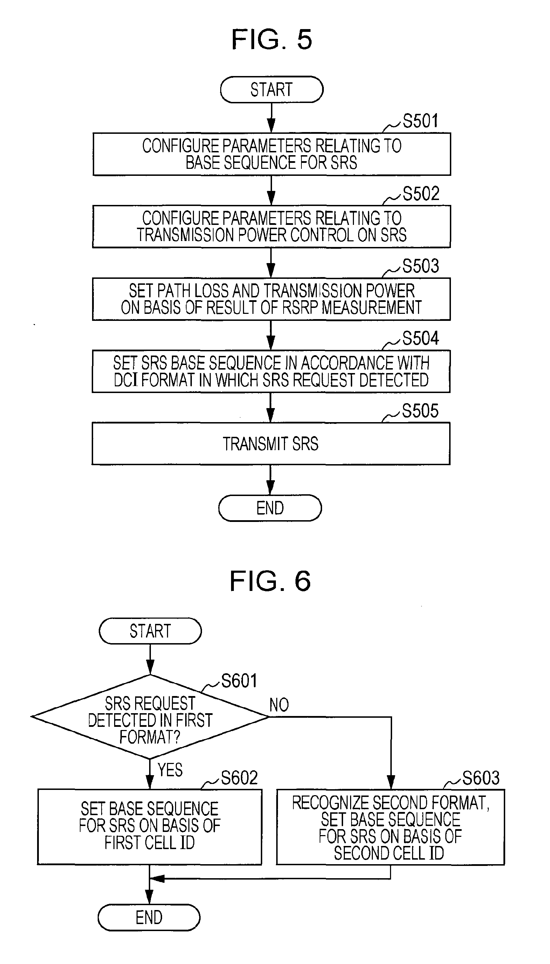

Fig. 5 is a flowchart illustrating the details of SRS transmission processing performed by the terminal according to the first embodiment. The terminal 102 configures various SRS parameters that are contained in an RRC signal transmitted from the base station 101 or RRH 103. At this time, the terminal 102 configures parameters relating to the base sequence for an SRS (S501). The terminal 102 configures parameters relating to transmission power control on the SRS (S502). The terminal 102 sets the path loss and transmission power on the basis of the result of measurement of the RSRP (S503). The terminal 102 sets a cell ID for the SRS base sequence in accordance with the type of the DCI format in which a positive SRS request has been detected (S504). The terminal 102 transmits the SRS having the base sequence and transmission power that have been set (S505).

Fig. 6 is a flowchart illustrating an example of a method of configuring the base sequence for an SRS according to the first embodiment. The terminal 102 receives a PDCCH or an E-PDCCH transmitted from the base station 101 or RRH 103 using the reception unit 405 via the transmission/reception antenna 411, and detects a DCI format using the demodulation unit 4053. The reception unit 405 determines whether or not the DCI format is the first format (step S601). If the received DCI format is the first format and the SRS request contained in the DCI format indicates a transmission request (S601: Yes), the SRS control unit 4013 gives an instruction to the uplink reference signal generation unit 4079 via the control unit 403 so as to generate the base sequence for an SRS on the basis of the first cell ID. The uplink reference signal generation unit 4079 sets the base sequence for the SRS on the basis of the first cell ID in accordance with the instruction (step S602). If it is determined that the received DCI format is not the first format (S601: No), the SRS control unit 4013 recognizes that a positive SRS request has been received in the second format, and gives an instruction to the uplink reference signal generation unit 4079 via the control unit 403 so as to generate the base sequence for the SRS on the basis of the second cell ID. The uplink reference signal generation unit 4079 sets the base sequence for the SRS on the basis of the second cell ID in accordance with the instruction (step S603). In Fig. 6, the method of configuring an SRS base sequence in the case of the first format and second format has been described. Similar processing is performed even if the third format or fourth format is added. That is, the SRS control unit 4013 gives an instruction to the uplink reference signal generation unit 4079 via the control unit 403 so as to set the base sequence for an SRS on the basis of the third cell ID in the case where a DCI format in which a positive SRS request has been detected is the third format, or so as to set the base sequence for an SRS on the basis of the fourth cell ID in the case where a DCI format in which a positive SRS request has been detected is the fourth format. The uplink reference signal generation unit 4079 sets the base sequence for an SRS in accordance with the instruction.

Description will be given with reference to Fig. 1. The terminal 102 can switch a cell ID that is to be set for the base sequence for an SRS to be transmitted via the uplink 106 and a cell ID that is to be set for the base sequence for an SRS to be transmitted via the uplink 108 in accordance with the type of the DCI format. That is, in the case where the DCI format that contains a positive SRS request is the first format, the terminal 102 may set the base sequence for an SRS on the basis of the first cell ID and transmit the SRS via the uplink 106. In the case where the DCI format that contains a positive SRS request is the second format, the terminal 102 may set the base sequence for an SRS on the basis of the second cell ID and transmit the SRS via the uplink 108.

[Second Embodiment]

Next, the second embodiment of the present invention will be described. In the second embodiment, a base station transmits to a terminal an RRC signal that contains a cell ID that has been set for a demodulation reference signal (DMRS: Uplink Demodulation Reference Signal) in a Physical Uplink Shared Channel (PUSCH) and a cell ID that has been set for a demodulation reference signal in a Physical Uplink Control Channel (PUCCH). The base station transmits to the terminal a DCI format that contains the SRS request. In the case where the received DCI format is an uplink grant, the terminal sets the base sequence for an SRS on the basis of the cell ID that has been set for the PUSCH DMRS. In the case where the received DCI format is a downlink assignment, the terminal sets the base sequence for an SRS on the basis of the cell ID that has been set for the PUCCH DMRS. Then, the terminal transmits the SRS to the base station.

In the case where the received DCI format is a predetermined DCI format, the terminal 102 sets the base sequence for an SRS on the basis of a cell ID that has been configured so as to be SRS-specific. That is, in the case where the received DCI format is the first format, the terminal 102 sets the base sequence for an SRS on the basis of the cell ID that has been set for the PUSCH DMRS. In the case where the received DCI format is the second format, the terminal 102 sets the base sequence for an SRS on the basis of the cell ID that has been set for the PUCCH DMRS. In the case where the received DCI format is the third DCI format, the terminal 102 sets the base sequence for an SRS on the basis of the cell ID that has been set for the SRS. Then, the terminal 102 transmits the SRS to the base station 101 or RRH 103.

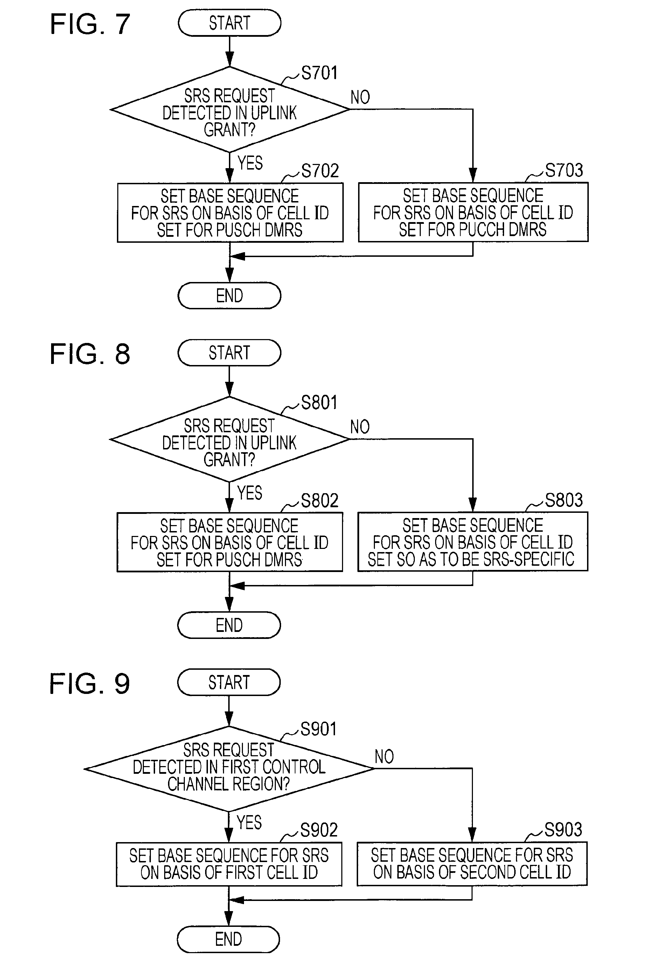

Fig. 7 is a flowchart illustrating an example of a method of configuring the base sequence for an SRS in the second embodiment. The terminal 102 receives a PDCCH or an E-PDCCH transmitted from the base station 101 or RRH 103 using the reception unit 405 via the transmission/reception antenna 411, and detects a DCI format using the demodulation unit 4053. It is determined whether or not the SRS request contained in the detected DCI format indicates a transmission request. The reception unit 405 determines whether or not the DCI format in which a positive SRS request has been detected is an uplink grant (step S701). If the reception unit 405 determines that the DCI format in which a positive SRS request has been detected is an uplink grant (S701: Yes), the SRS control unit 4013 gives an instruction to the uplink reference signal generation unit 4079 via the control unit 403 so as to generate the base sequence for an SRS on the basis of a cell ID that has been set for a PUSCH DMRS. The uplink reference signal generation unit 4079 sets the base sequence for an SRS on the basis of the cell ID that has been set, in accordance with the instruction (step S702). If the reception unit 405 determines that the DCI format in which a positive SRS request has been detected is not an uplink grant (S701: No), the SRS control unit 4013 recognizes that a downlink assignment has been received, and gives an instruction to the uplink reference signal generation unit 4079 via the control unit 403 so as to generate the base sequence for an SRS on the basis of a cell ID that has been set for a PUCCH DMRS. The uplink reference signal generation unit 4079 sets the base sequence for an SRS on the basis of the cell ID that has been set, in accordance with the instruction (step S703).

In the case where a field that specifies a cell ID for a PUSCH DMRS has been configured in an uplink grant, a cell ID for the base sequence for an SRS is also set on the basis of that cell ID. That is, in the case where the field that specifies a cell ID for a PUSCH DMRS indicates the first cell ID, the terminal 102 also sets the base sequence for an SRS on the basis of the first cell ID. In the case where the field that specifies a cell ID for a PUSCH DMRS indicates the second cell ID, the terminal 102 also sets the base sequence for an SRS on the basis of the second cell ID. In the case where the field that specifies a cell ID for a PUSCH DMRS indicates the third cell ID, the terminal 102 also sets the base sequence for an SRS on the basis of the third cell ID.

In the case of switching the base sequence for an SRS in accordance with the type of the DCI format, it becomes unnecessary to transmit to the terminal 102 control information (configuration information) used for the base sequence for an SRS, by using (reusing) a cell ID that is used for the base sequence for another uplink physical channel and therefore overheads caused by the transmission can be reduced.

The transmission power of an SRS, transmission of which is requested by a positive SRS request, may be attained in accordance with a TPC command contained in each DCI format. The SRS offset may be set in accordance with a parameter set associated with each DCI format.

[Third Embodiment]

Next, the third embodiment of the present invention will be described. In the third embodiment, the base station 101 and/or RRH 103 transmits to the terminal 102 an RRC signal that contains a cell ID that has been set for a demodulation reference signal (DMRS: Uplink Demodulation Reference Signal) in a Physical Uplink Shared Channel (PUSCH) and a cell ID that has been set so as to be specific to a Sounding Reference Signal (SRS), and transmits to the terminal 102 a DCI format containing the SRS request. The terminal 102 determines whether or not the SRS request contained in the received DCI format specifies a transmission request. In the case where the SRS request specifies transmission supply, if the received DCI format is an uplink grant, the terminal 102 sets the base sequence for an SRS on the basis of the cell ID that has been set for a PUSCH DMRS and, if the received DCI format is a downlink assignment, the terminal 102 sets the cell ID that has been set so as to be SRS-specific. Then, the terminal 102 transmits the SRS to the base station 101 or RRH 103.

In the third embodiment, a cell ID that is applied to a PUCCH may be configured separately from those for a PUSCH and an SRS.

Fig. 8 is a flowchart illustrating an example of a method of configuring the base sequence for an SRS in the third embodiment. The terminal 102 receives a PDCCH or an E-PDCCH transmitted from the base station 101 or RRH 103 using the reception unit 405 via the transmission/reception antenna 411, and detects a DCI format using the demodulation unit 4053. The reception unit 405 determines whether or not the DCI format is an uplink grant (step S801). If the reception unit 405 determines that the received DCI format is an uplink grant (S801: Yes), the SRS control unit 4013 gives an instruction to the uplink reference signal generation unit 4079 via the control unit 403 so as to generate the base sequence for an SRS on the basis of a cell ID that has been set for a PUSCH DMRS. The uplink reference signal generation unit 4079 sets the base sequence for an SRS on the basis of the cell ID that has been set, in accordance with the instruction (step S802). If the reception unit 405 determines that the received DCI format is not an uplink grant (S801: No), the SRS control unit 4013 recognizes that a downlink assignment has been received, and gives an instruction to the uplink reference signal generation unit 4079 via the control unit 403 so as to generate the base sequence for an SRS on the basis of a cell ID that has been set so as to be SRS-specific. The uplink reference signal generation unit 4079 sets the base sequence for an SRS on the basis of the cell ID that has been set, in accordance with the instruction (step S803). It is assumed that the DCI formats described above each contain a positive SRS request.

In the third embodiment, a cell ID used for the base sequence for an SRS is switched in accordance with the type of the DCI format. In the case where a positive SRS request has been detected in an uplink grant, the terminal 102 recognizes that an SRS is to be transmitted to the same reception point as a PUSCH, and sets the base sequence for the SRS on the basis of a cell ID that is used for the base sequence for a PUSCH DMRS. In the case where a positive SRS request has been detected in a downlink assignment, the terminal 102 assumes that an SRS is to be transmitted to a reception point different from that for a PUSCH, and sets the base sequence for the SRS on the basis of an SRS-specific cell ID. By using a different cell ID for each reception point and setting the base sequence, interference between terminals that transmit SRSs to different reception points can be reduced. That is, even in the case where a reception point A accidentally receives an SRS that is intended to be transmitted to a reception point B, the reception point A can separate the SRS because the base sequence is different and therefore interference with an SRS that is transmitted to the reception point A can be avoided.

[Fourth Embodiment]

Next, the fourth embodiment of the present invention will be described. In the fourth embodiment, a base station transmits to a terminal a Radio Resource Control (RRC) signal that contains a plurality of cell IDs, and transmits to the terminal a Downlink Control Information (DCI) format using the first control channel region (PDCCH: Physical Downlink Control Channel) and/or the second control channel region (E-PDCCH: Enhanced PDCCH) used for scheduling of a Physical Uplink Shared Channel (PUSCH) or a Physical Downlink Shared Channel (PDSCH). In the case where an SRS request (positive SRS request) that specifies an SRS transmission request has been detected in the first control channel region, the terminal sets the base sequence for an SRS on the basis of the first cell ID. In the case where an SRS request (positive SRS request) that specifies an SRS transmission request has been detected in the second control channel region, the terminal sets the base sequence for an SRS on the basis of the second cell ID. Then, the terminal transmits the SRS to the base station.

In the case where a positive SRS request has been detected in the first control channel region, the terminal may set the base sequence for an SRS on the basis of a cell-specific cell ID. In the case where a positive SRS request has been detected in the second control channel region, the terminal may set the base sequence for an SRS on the basis of a terminal-specific cell ID.

In the fourth embodiment, in the case where a positive SRS request has been detected in the first control channel region and in the second control channel region for the same SRS subframe, the terminal need not transmit an SRS. In the case where a positive SRS request has been detected in the first control channel region and in the second control channel region for the same SRS subframe, the terminal may transmit to the base station an SRS for which the base sequence has been set on the basis of the first cell ID. In the case where a positive SRS request has been detected in the first control channel region and in the second control channel region for the same SRS subframe, the terminal may transmit to the base station an SRS for which the base sequence has been set on the basis of the second cell ID.

In the fourth embodiment, in the case where a positive SRS request has been detected in the first control channel region and in the second control channel region for the same serving cell and for the same SRS subframe, the terminal need not transmit an SRS. In the case where a positive SRS request has been detected in the first control channel region and in the second control channel region for the same serving cell and for the same SRS subframe, the terminal may transmit to the base station 101 an SRS for which the base sequence has been set on the basis of the first cell ID. In the case where a positive SRS request has been detected in the first control channel region and in the second control channel region for the same serving cell and for the same SRS subframe, the terminal may transmit to the base station 101 an SRS for which the base sequence has been set on the basis of the second cell ID.

Furthermore, in the fourth embodiment, in the case where a positive SRS request has been detected in the first control channel region and in the second control channel region for the same SRS subframes in different serving cells, the terminal need not transmit an SRS. That is, in the case where a positive SRS request has been detected in the first control channel region for the first subframe in the first serving cell and a positive SRS request has been detected in the first control channel region for the first SRS subframe in the second serving cell, the terminal need not transmit an SRS. Alternatively, the terminal may give priority to either one of the positive SRS requests and transmit to the base station an SRS that has been set on the basis of various parameters associated with the positive SRS request to which priority has been given. Note that various parameters may be a parameter set.

Furthermore, in the fourth embodiment, in the case where a positive SRS request has been detected in the first control channel region and in the second control channel region for the same reception point and for the same SRS subframe, the terminal need not transmit an SRS. Alternatively, the terminal may give priority to either one of the positive SRS requests and transmit to the base station an SRS that has been set on the basis of parameters associated with the positive SRS request to which priority has been given.

In the fourth embodiment, in the case where a DCI format that has been detected in the first control channel region and a DCI format that has been detected in the second control channel region are uplink grants for scheduling of PUSCHs, and the terminal 102 has detected a positive SRS request, the terminal 102 may set the base sequence for an SRS on the basis of cell IDs that have been set for the respective PUSCH DMRSs.

The base station 101 or RRH 103 may perform configuration for the terminal 102 so that a terminal-specific search space (USS: UE-specific Search Space) is detected in either one of the first control channel region and second control channel region. Control information used to give an instruction for the detection may be communicated to the entire cell by means of RRC signaling. Control information used to give an instruction for the detection may be communicated to the entire cell using system information. Control information used to give an instruction for the detection may be individually communicated to each terminal 102 by means of RRC signaling. Control information used to give an instruction for the detection may be broadcasted. Control information used to give an instruction for the detection may be uniquely determined in the system.

Control information used to give an instruction for the detection may be shared among a plurality of component carriers (or component carriers corresponding to the cell). Control information used to give an instruction for the detection may be configured for each component carrier (or each component carrier corresponding to the cell). Even if control information used to give an instruction for the detection is shared among a plurality of component carriers (or component carriers corresponding to the cell), control information used to reconfigure the control information used to give an instruction for the detection may be communicated individually to the component carriers. That is, even if the base station 101 or RRH 103 performs control so that, for a plurality of component carriers, the terminal 102 searches for the second control channel (E-PDCCH) in the USS, the base station 101 or RRH 103 may perform control so that, for a specific component carrier, the terminal 102 searches for the first control channel (PDCCH) in the USS, in accordance with the reconfigured control information.

Furthermore, configuration may be performed for each terminal 102 so that the USS can be always detected only in the first control channel region for some cells or component carriers corresponding to a cell (for example, the primary cell).

Fig. 9 is a flowchart illustrating an example of a method of configuring the base sequence for an SRS in the fourth embodiment. The terminal 102 receives a PDCCH or an E-PDCCH transmitted from the base station 101 or RRH 103 using the reception unit 405 via the transmission/reception antenna 411, and detects a DCI format using the demodulation unit 4053. It is determined whether or not the SRS request contained in the detected DCI format indicates a transmission request. The reception unit 405 determines whether or not the DCI format in which a positive SRS request has been detected has been detected in the first control channel region (step S901). If the DCI format in which a positive SRS request has been detected has been detected in the first control channel region (S901: Yes), the SRS control unit 4013 gives an instruction to the uplink reference signal generation unit 4079 via the control unit 403 so as to generate the base sequence for an SRS on the basis of the first cell ID. The uplink reference signal generation unit 4079 sets the base sequence for an SRS on the basis of the first cell ID in accordance with the instruction (step S902). If the DCI format in which a positive SRS request has been detected has been detected in the second control channel region (S901: No), the SRS control unit 4013 gives an instruction to the uplink reference signal generation unit 4079 via the control unit 403 so as to generate the base sequence for an SRS on the basis of the second cell ID. The uplink reference signal generation unit 4079 sets the base sequence for an SRS on the basis of the second cell ID in accordance with the instruction (step S903). It is assumed that the DCI formats described above each contain a positive SRS request.

Regarding SRSs for which base sequences based on different cell IDs have been set depending on the control channel region, the interference between the SRSs can be reduced. The base station 101 or RRH 103 can separate an SRS transmitted from the terminal 102 that can receive a control signal by using only a PDCCH, from an SRS transmitted from the terminal 102 that can receive a control signal by using an E-PDCCH to thereby perform channel measurement.

[Fifth Embodiment]

Next, the fifth embodiment of the present invention will be described. In the fifth embodiment, a plurality of parameter settings relating to uplink power control are configured for the terminal 102, and the terminal 102 can calculate the uplink transmission powers ($P_{PUSCH}$, $P_{PUCCH}$, $P_{SRS}$, and $P_{PRACH}$) of various uplink signals (a PUSCH, a PUCCH, an SRS, and a PRACH) using the parameter settings relating to uplink power control. A parameter setting relating to uplink power control may be called a parameter set relating to uplink power control or a setting relating to uplink power control.

In the fifth embodiment, the base station 101 configures a plurality of parameter settings relating to uplink power control (for example, the first parameter setting relating to uplink power control and the second parameter setting relating to uplink power control), and communicates the settings to the terminal 102. The terminal 102 calculates the path loss on the basis of the first parameter setting relating to uplink power control, and calculates the uplink transmission power on the basis of the path loss and the first parameter setting relating to uplink power control. The terminal 102 calculates the path loss on the basis of the second parameter setting relating to uplink power control, and calculates the uplink transmission power on the basis of the path loss and the second parameter setting relating to uplink power control. Here, the uplink transmission power calculated on the basis of the first parameter setting relating to uplink power control is assumed to be the first uplink transmission power, and the uplink transmission power calculated on the basis of the second parameter setting relating to uplink power control is assumed to be the second uplink transmission power.

The terminal 102 controls whether to transmit an uplink signal with the first uplink transmission power or to transmit an uplink signal with the second uplink transmission power, in accordance with the frequency resource in which the uplink grant has been detected and in accordance with the timing at which the uplink grant has been detected.

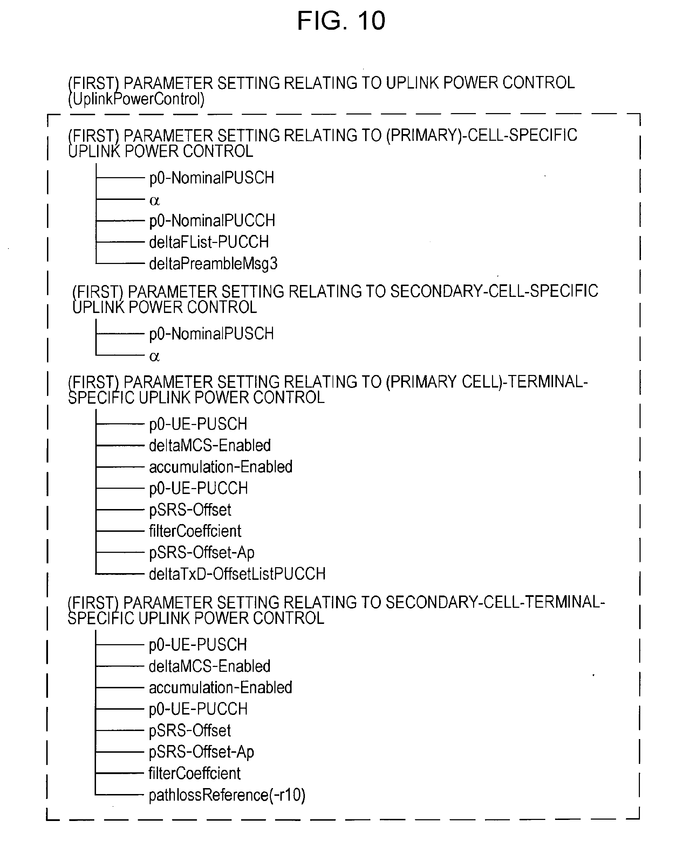

Fig. 10 is a diagram illustrating an example of information elements included in the (first) parameter setting relating to uplink power control (UplinkPowerControl). The parameter setting relating to uplink power control includes a cell-specific setting (parameter setting relating to cell-specific uplink power control (UplinkPowerControlCommon)) and a terminal-specific setting (parameter setting relating to terminal-specific uplink power control (UplinkPowerControlDedicated)), and each of these settings include parameters (information elements) relating to uplink power control, which are configured so as to be cell-specific or terminal-specific. The cell-specific setting includes a nominal PUSCH power (p0-NominalPUSCH), which is a PUSCH power configurable so as to be cell-specific, $\alpha$ (alpha), which is the attenuation coefficient (path loss compensation coefficient) of fractional transmission power control, a nominal PUCCH power (p0-NominalPUCCH), which is a PUCCH power configurable so as to be cell-specific, $\Delta_{F\_PUCCH}$ (deltaFList-PUCCH), which is included in expression (3), and a power adjustment value (deltaPreambleMsg3), which is a power adjustment value used in the case where a preamble message 3 is transmitted. The terminal-specific setting includes a terminal-specific PUSCH power (p0-UE-PUSCH), which is a PUSCH power configurable so as to be terminal-specific, a parameter (deltaMCS-Enabled) relating to the power adjustment value $K_s$, which is used in expression (2) and is dependent on the modulation coding scheme, a parameter (accumulationEnabled) necessary for configuring a TPC command, a terminal-specific PUCCH power (p0-UE-PUCCH), which is a PUCCH power configurable so as to be terminal-specific, power offsets $P_{SRS\_OFFSET}$ (pSRS-Offset, pSRS-OffsetAp-r10) of a P-SRS and an A-SRS, and a filter coefficient (filterCoefficient) of the reception power RSRP of a reference signal. These settings can be configurable for a primary cell, and may be similarly configurable also for a secondary cell. The terminal-specific setting for a secondary cell includes a parameter (pathlossReference-r10) specifying that the path loss is to be calculated using a reference signal for path loss measurement for a primary cell or a secondary cell.

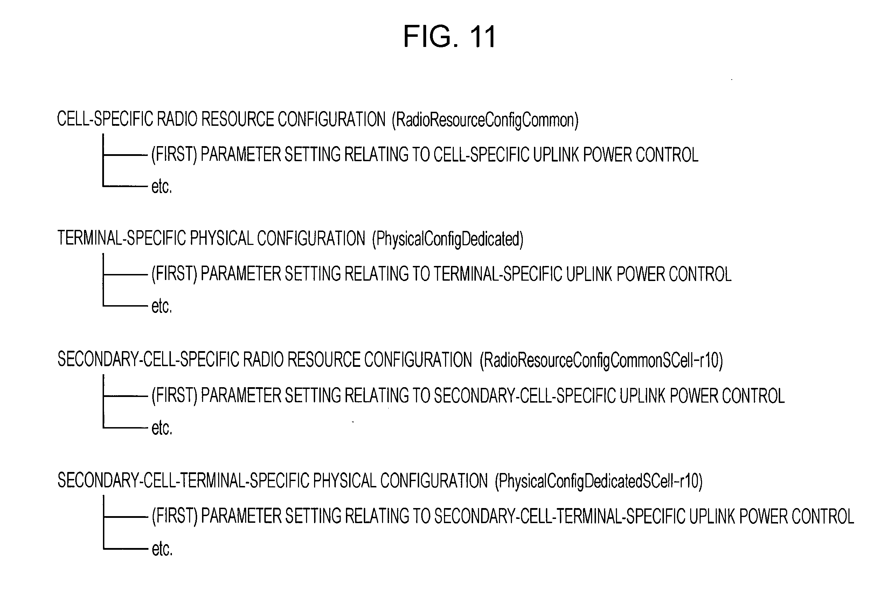

Fig. 11 illustrates an example of pieces of information in which the parameter settings relating to uplink power control (first parameter settings relating to uplink power control) are included. A (first) parameter setting relating to cell-specific uplink power control (UplinkPowerControlCommonl) is included in a cell-specific radio resource configuration (RadioResourceConfigCommon). A (first) parameter setting relating to terminal-specific uplink power control (UplinkPowerControlDedicatedl) is included in a terminal-specific physical configuration (PhysicalConfigDedicated). A (first) parameter setting relating to cell-specific uplink power control (UplinkPowerControlCommonSCell-r10-1) is included in a secondary-cell-specific radio resource configuration (RadioResourceConfigCommonSCell-r10). A (first) parameter setting relating to secondary-cell-terminal-specific uplink power control (UplinkPowerControlDedicatedSCell-r10-1) is included in a secondary-cell-terminal-specific physical configuration (PhysicalConfigDedicatedSCell-r10). A (primary cell)-terminal-specific physical configuration is included in a (primary cell)-terminal-specific radio resource configuration (RadioResourceConfigDedicated). A secondary-cell-terminal-specific physical configuration is included in a secondary-cell-terminal-specific radio resource configuration (RadioResourceConfigDedicatedSCell-r10). The above-described cell-specific radio resource configuration and terminal-specific radio resource configuration may be included in an RRC connection reconfiguration (RRCConnectionReconfigration) or an RRC reestablishment (RRCConnectionReestablishment). The above-described secondary-cell-specific radio resource configuration and secondary-cell-terminal-specific radio resource configuration may be included in an SCell addition/modification list. The above-described cell-specific radio resource configuration and terminal-specific radio resource configuration may be configured for each terminal 102 using an RRC signal (dedicated signaling). The RRC connection reconfiguration and RRC reestablishment may be configured for each terminal using an RRC message. The above-described parameter settings relating to cell-specific uplink power control may be configured for each terminal 102 using system information. The above-described parameter settings relating to terminal-specific uplink power control may be configured for each terminal 102 using an RRC signal (dedicated signaling).

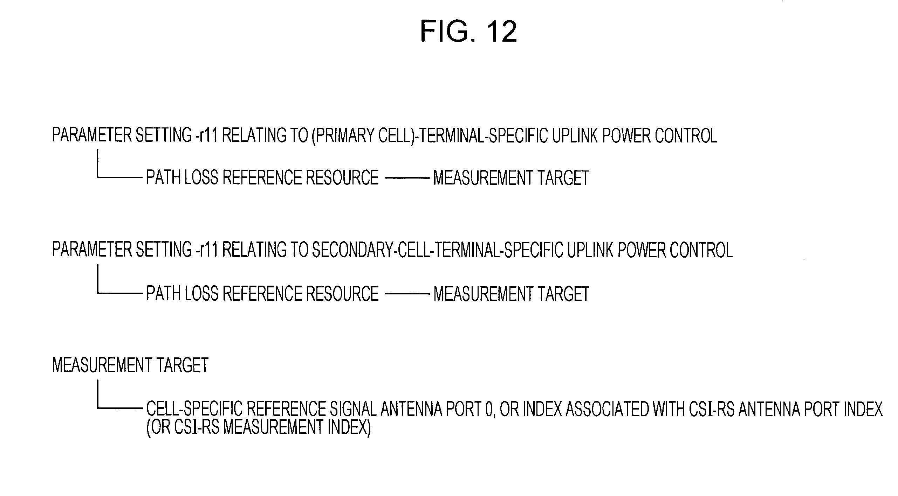

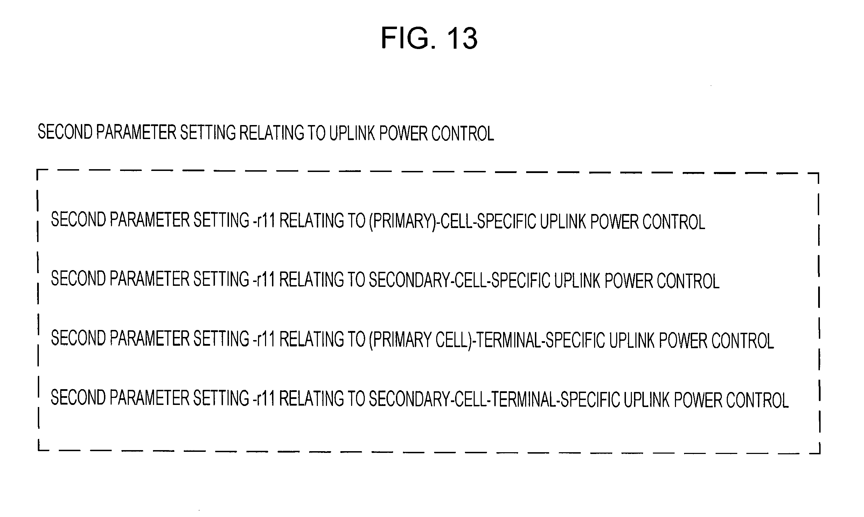

The base station 101 may individually configure information elements respectively included in the first parameter setting relating to uplink power control and the second parameter setting relating to uplink power control. For example, specific description will be given with reference to Figs. 13 to 16. Fig. 13 is a diagram illustrating an example of the second parameter setting relating to uplink power control in this embodiment of the present application. The second parameter setting relating to uplink power control is constituted by a second parameter setting -r11 relating to (primary)-cell-specific uplink power control, a second parameter setting -r11 relating to secondary-cell-specific uplink power control, a second parameter setting -r11 relating to (primary cell)-terminal-specific uplink power control, and a second parameter setting -r11 relating to secondary-cell-terminal-specific uplink power control. Note that the first parameter setting relating to uplink power control is similar to those illustrated in Figs. 10 and 12. In this embodiment of the present application, a first parameter setting -r11 relating to (primary)-cell-specific uplink power control, a first parameter setting -r11 relating to secondary-cell-specific uplink power control, a first parameter setting -r11 relating to (primary cell)-terminal-specific uplink power control, and a first parameter setting -r11 relating to secondary-cell-terminal-specific uplink power control can be included.

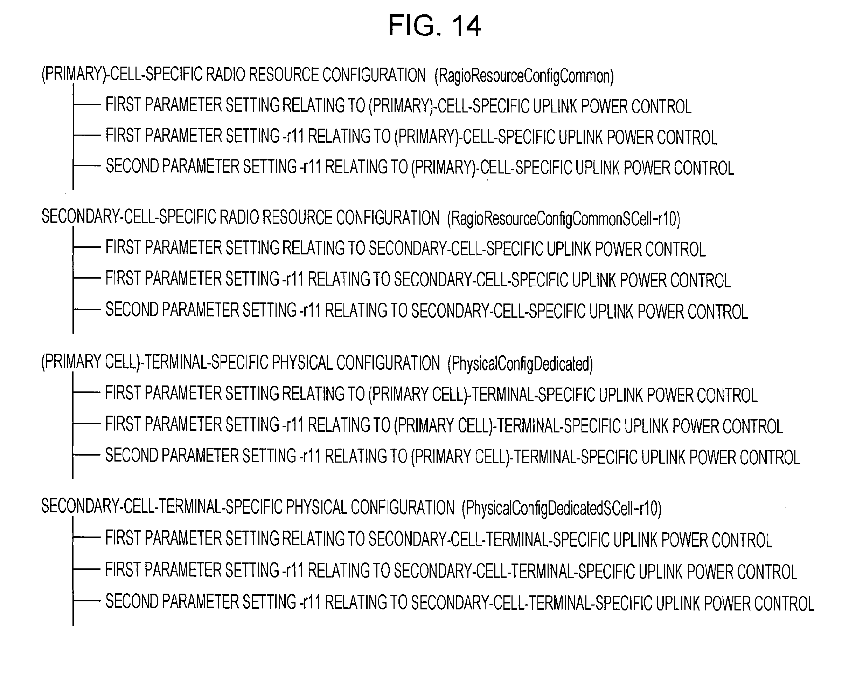

Fig. 14 is a diagram illustrating an example of the first parameter settings relating to uplink power control and the second parameter settings relating to uplink power control which are included in each radio resource configuration. In a (primary)-cell-specific radio resource configuration, a first parameter setting relating to (primary)-cell-specific uplink power control and the second parameter setting -r11 relating to (primary)-cell-specific uplink power control are included. Furthermore, a parameter setting r-11 relating to (primary)-cell-specific uplink power control can be included. In the secondary-cell-specific radio resource configuration, a first parameter setting relating to secondary-cell-specific uplink power control and the second parameter setting -r11 relating to secondary-cell-specific uplink power control are included. Furthermore, a parameter setting -r11 relating to secondary-cell-specific uplink power control can be included. In the (primary cell)-terminal-specific physical configuration, a first parameter setting relating to (primary cell)-terminal-specific uplink power control and the second parameter setting -r11 relating to (primary cell)-terminal-specific uplink power control are included. In the secondary-cell-terminal-specific physical configuration, a first parameter setting relating to secondary-cell-terminal-specific uplink power control and the second parameter setting -r11 1 relating to secondary-cell-terminal-specific uplink power control are included. The (primary cell)-terminal-specific physical configuration is included in the (primary cell)-terminal-specific radio resource configuration (RadioResourceConfigDedicated). The secondary-cell-terminal-specific physical configuration is included in the secondary-cell-terminal-specific radio resource configuration (RadioResourceConfigDedicatedSCell-r10). The above-described cell-specific radio resource configuration and terminal-specific radio resource configuration may be included in the RRC connection reconfiguration (RRCConnectionReconfigration) or RRC reestablishment (RRCConnetionReestablishment). The above-described secondary-cell-specific radio resource configuration and secondary-cell-terminal-specific radio resource configuration may be included in the SCell addition/modification list. The above-described cell-specific radio resource configuration and terminal-specific radio resource configuration may be configured for each terminal 102 using an RRC signal. The RRC connection reconfiguration and RRC reestablishment may be configured for each terminal 102 using an RRC message. An RRC signal may be called a dedicated signal (dedicated signaling) or a higher layer signal (higher layer signaling).

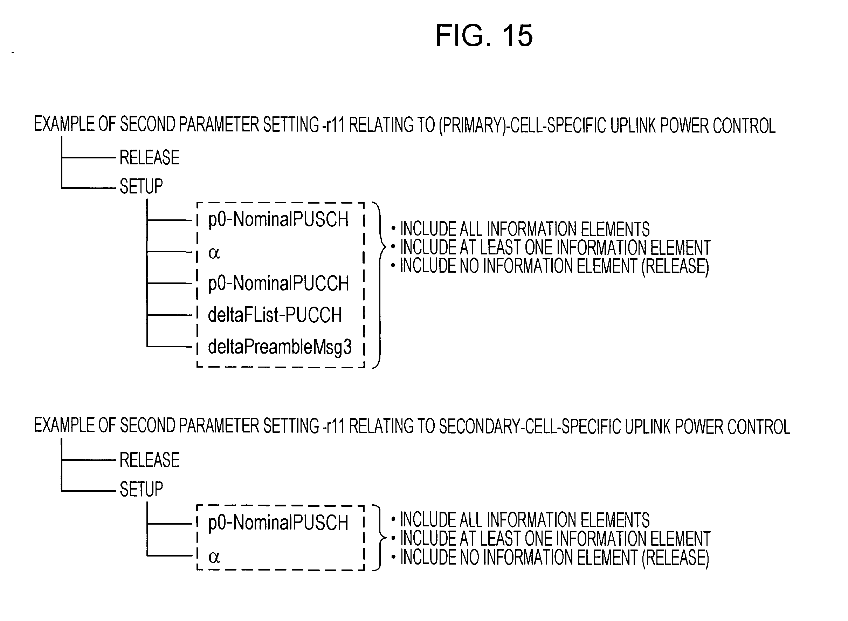

Fig. 15 is a diagram illustrating examples of the second parameter settings relating to cell-specific uplink power control. Information elements to be included in the second parameter setting -r11 relating to (primary)-cell-specific uplink power control or the second parameter setting -r11 relating to secondary-cell-specific uplink power control may be configured so as to include all of the information elements illustrated in Fig. 15. Information elements to be included in the second parameter setting -r11 relating to (primary)-cell-specific uplink power control or the second parameter setting -r11 relating to secondary-cell-specific uplink power control may be configured so as to include at least one information element among the information elements illustrated in Fig. 15. Alternatively, the second parameter setting -r11 relating to (primary)-cell-specific uplink power control or the second parameter setting -r11 relating to secondary-cell-specific uplink power control may include no information element. In this case, the base station 101 selects release and communicates the information to the terminal 102. Regarding an information element that has not been configured in the second parameter setting relating to cell-specific uplink power control, the same information element that has been configured in the first parameter setting relating to cell-specific uplink power control may be shared.

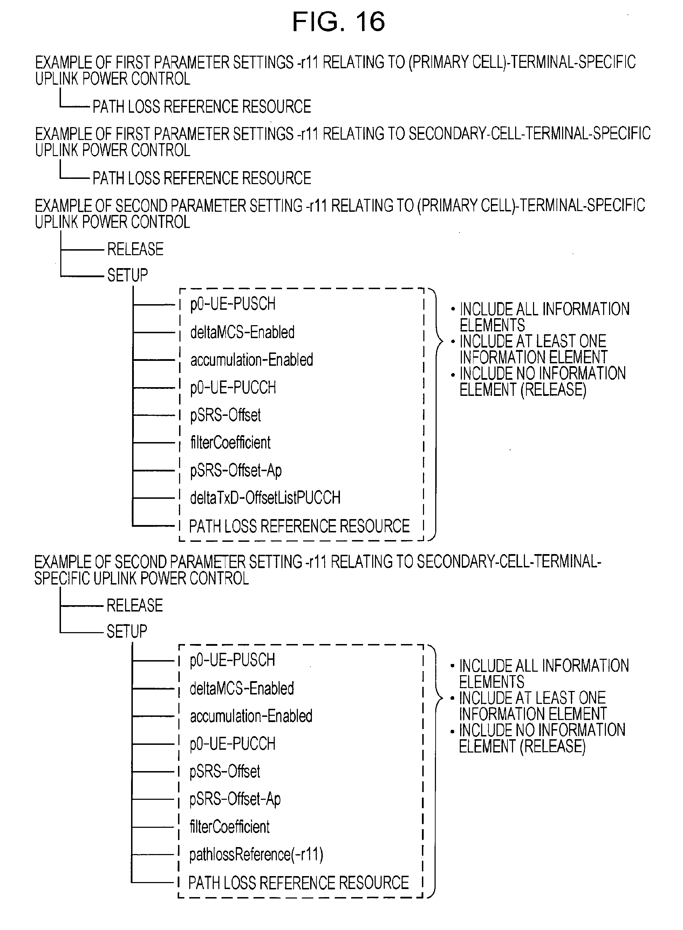

Fig. 16 is a diagram illustrating examples of the first parameter settings relating to terminal-specific uplink power control and the second parameter settings relating to terminal-specific uplink power control. In the first parameter settings relating to primary cell/secondary cell-terminal-specific uplink power control, a path loss reference resource is configured. In the second parameter settings relating to primary cell/secondary cell-terminal-specific uplink power control, a path loss reference resource is configured in addition to the information elements illustrated in Fig. 10. Information elements to be included in the second parameter setting -r11 relating to (primary cell)-terminal-specific uplink power control or the second parameter setting -r11 relating to secondary-cell-terminal-specific uplink power control may be configured so as to include all of the information elements illustrated in Fig. 16. Information elements to be included in the second parameter setting -r11 relating to (primary cell)-terminal-specific uplink power control or the second parameter setting -r11 relating to secondary-cell-terminal-specific uplink power control may be configured so as to include at least one information element among the information elements illustrated in Fig. 16. The second parameter setting -r11 relating to (primary cell)-terminal-specific uplink power control or the second parameter setting -r11 relating to secondary-cell-terminal-specific uplink power control may be configured by including no information element. In this case, the base station 101 selects release and communicates the information to the terminal 102. Regarding an information element that has not been configured in the second parameter setting relating to terminal-specific uplink power control, the same information element that has been configured in the first parameter setting relating to terminal-specific uplink power control may be shared. That is, in the case where a path loss reference resource has not been configured in the second parameter setting relating to terminal-specific uplink power control, the path loss is calculated on the basis of a path loss reference resource that has been configured in the first parameter setting relating to terminal-specific uplink power control.

The path loss reference resource may be the same as that illustrated in Fig. 12. That is, a measurement target that the path loss reference resource specifies may be associated with a cell-specific reference signal antenna port 0 or an index that is associated with a CSI-RS antenna port index (CSI-RS measurement index). As the path loss reference resource, a plurality of measurement targets may be configured. The terminal 102 can calculate the path loss by using at least one of these measurement targets. A measurement target to be added to the path loss reference resource may be added using an addition/modification list. The number of measurement targets to be added may be determined on the basis of the largest measurement target ID. The measurement target ID may be determined on the basis of a measurement objet ID. That is, the number of measurement targets to be added may be the same as the number of measurement target configurations. A measurement target that is not necessary any more can be deleted using a deletion list. An example will be given of a method of calculating the path loss in the case where a plurality of the first measurement target configurations and a plurality of the second measurement target configurations are associated with the path loss reference resource. As the path loss reference resource, a plurality of the first measurement target configurations and second measurement target configurations, such as antenna ports 15 and 16 for channel-state information reference signals, may be specified in a path loss reference resource addition/modification list. In this case, the second path loss may be calculated on the basis of the reception signal power at the antenna ports 15 and 16 for channel-state information reference signals. In this case, the average of the path loss calculated on the basis of the antenna port 15 and the path loss calculated on the basis of the antenna port 16 may be assumed to be the second path loss, or the larger value or the smaller value of the two path loss values may be assumed to be the second path loss. The value obtained by performing linear processing on the two path loss values may be assumed to be the second path loss. In the example described above, the antenna port 0 for cell-specific reference signals and the antenna port 15 for channel-state information reference signals may be used. In another example, as the second path loss reference resource, a plurality of the second measurement target configurations, such as the antenna ports 15 and 16 for channel-state information reference signals, may be specified in the path loss reference resource addition/modification list. In this case, the second path loss and third path loss may be calculated on the basis of the reception signal power at the antenna ports 15 and 16 for channel-state information reference signals. In this case, the first path loss, second path loss, and third path loss may be associated with the first subframe subset, second subframe subset, and third subframe subset respectively. The base station 101 may set the first value for a TPC command (transmission power control command) contained in an uplink grant that is communicated in the first subframe subset, and may set the second value different from the first value for a TPC command contained in an uplink grant that is communicated in the first subframe subset. That is, the first value of a TPC command may be associated with the first subframe subset, and the second value of a TPC command may be associated with the second subframe subset. Here, the first value and second value may be set so as to have different values. That is, the base station 101 may set the first value higher than the second value. Here, the first value and second value are power correction values of the TPC command. Note that the first value and second value may be represented by an information bit.

For example, it is assumed that a downlink subframe is divided into the first subset and second subset. In the case where an uplink grant has been received in a subframe n (n is a natural number), the terminal 102 transmits an uplink signal in a subframe n+4 and therefore it is naturally assumed that an uplink subframe is also divided into the first subset and second subset. The first subset may be associated with the first parameter setting relating to uplink power control, and the second subset may be associated with the second parameter setting relating to uplink power control.

That is, in the case where the terminal 102 has detected an uplink grant in a downlink subframe included in the first subset, the terminal 102 calculates the path loss on the basis of various information elements included in the first parameter setting relating to uplink power control and the path loss reference resource (measurement target) included in the first parameter setting relating to uplink power control to thereby calculate the first uplink transmission power. In the case where the terminal 102 has detected an uplink grant in a downlink subframe included in the second subset, the terminal 102 calculates the path loss on the basis of various information elements included in the second parameter setting relating to uplink power control and the path loss reference resource (measurement target) included in the second parameter setting relating to uplink power control to thereby calculate the second uplink transmission power.

For example, the control channel region in which an uplink grant is included is associated with a parameter setting relating to uplink power control. That is, the base station 101 can switch the parameter setting relating to uplink power control used to calculate the uplink transmission power depending on the control channel region (the first control channel region or second control channel region) in which the terminal 102 has detected an uplink grant. In other words, in the case where the terminal 102 has detected an uplink grant in the first control channel region, the terminal 102 calculates the path loss using the first parameter setting relating to uplink power control to thereby calculate the uplink transmission power. In the case where the terminal 102 has detected an uplink grant in the second control channel region, the terminal 102 calculates the path loss using the second parameter setting relating to uplink power control to thereby calculate the uplink transmission power. Furthermore, for example, the control channel region in which a downlink assignment is included may be associated with a parameter setting relating to uplink power control. Note that each of an uplink grant and a downlink assignment is a type of DCI format.

In the fifth embodiment, the base station 101 communicates the first and second parameter settings relating to uplink power control to the terminal 102. In an example, the terminal 102 calculates the path loss (first path loss) on the basis of the first parameter setting relating to uplink power control in accordance with the communicated information, and calculates the first uplink transmission power on the basis of the first path loss and the first parameter setting relating to uplink power control. The terminal 102 calculates the path loss (second path loss) on the basis of the second parameter setting relating to uplink power control, and calculates the second uplink transmission power on the basis of the second path loss and the second parameter setting relating to uplink power control. That is, the terminal 102 may always calculate the first uplink transmission power on the basis of a measurement target that has been communicated in the first parameter setting relating to uplink power control, and may always calculate the second uplink transmission power on the basis of a measurement target that has been communicated in the second parameter setting relating to uplink power control. The terminal 102 may control whether to transmit an uplink signal with the above-described first uplink transmission power or to transmit an uplink signal with the above-described second uplink transmission power in accordance with the frequency resource in which the uplink grant has been detected and in accordance with the timing at which the uplink grant has been detected. In the case where the base station 101 communicates an uplink grant in a downlink subframe in the first subframe subset, the base station 101 sets the value of the TPC command to the first value. In the case where the base station 101 communicates an uplink grant in a downlink subframe in the second subframe subset, the base station 101 sets the value of the TPC command to the second value. For example, the first value may be set so as to be higher than the second value, so that the power correction value is higher. The base station 101 can also perform demodulation processing on an uplink signal such that the base station 101 demodulates an uplink signal that has been transmitted in an uplink subframe in the first subframe subset, and does not perform demodulation processing on an uplink signal that has been transmitted in an uplink subframe in the second subframe subset.

As described above, the first uplink transmission power and second uplink transmission power may be fixedly associated with the first parameter setting relating to uplink power control and the second parameter setting relating to uplink power control.

In the fifth embodiment, the base station 101 communicates to the terminal 102 a radio resource control signal that contains the first parameter setting relating to uplink power control and the second parameter setting relating to uplink power control, and communicates an uplink grant to the terminal 102. The terminal 102 calculates the first path loss and the first uplink transmission power on the basis of the first parameter setting relating to uplink power control, and calculates the second path loss and the second uplink transmission power on the basis of the second parameter setting relating to uplink power control. In the case where the terminal 102 has detected an uplink grant, the terminal 102 transmits an uplink signal with the first uplink transmission power or second uplink transmission power.

By configuring a plurality of parameter settings relating to uplink power control, the terminal 102 can select an appropriate parameter setting relating to uplink power control for the base station 101 or RRH 103, and can transmit an uplink signal having an appropriate uplink transmission power to the base station 101 or RRH 103. Specific description will be given below. At least one type of information element among information elements included in the first and second parameter settings relating to uplink power control can be configured so as to have different values. For example, in the case where it is desired to perform control differently in the case of control between the base station 101 and the terminal 102 and in the case of control between the RRH 103 and the terminal 102, the first parameter setting relating to uplink power control is associated with transmission power control for the base station 101, and the second parameter setting relating to uplink power control is associated with transmission power control for the RRH 103 so that $\alpha$, which is the attenuation coefficient used in fractional transmission power control in a cell, included in the respective settings can be configured so as to be appropriate $\alpha$. That is, fractional transmission power control can be performed differently in the case of control between the base station 101 and the terminal 102 and in the case of control between the RRH 103 and the terminal 102. Similarly, by setting $P_{O\_NOMINAL\_PUSCH,c}$ and $P_{O\_UE\_PUSCH,c}$ to different values for the first parameter setting relating to uplink power control and for the second parameter setting relating to uplink power control, it is possible to make the nominal power of a PUSCH have different values in the case of control between the base station 101 and the terminal 102 and in the case of control between the RRH 103 and the terminal 102. The same applies to other parameters. That is, it is possible to make each of various parameters included in the first and second parameter settings relating to uplink power control have different values. For various parameters relating to power control, such as $P_{O\_NOMINAL\_PUSCH,c}$ and $P_{O\_UE\_PUSCH,c}$, included in the second parameter setting relating to uplink power control, it may be possible to set ranges wider than those of various parameters relating to power control, such as $P_{O\_NOMINAL\_PUSCH,c}$ and $P_{O\_UE\_PUSCH,c}$, included in the first parameter setting relating to uplink power control. For example, it may be possible to set $P_{O\_UE\_PUSCH,c}$ included in the second parameter setting relating to uplink power control to a value higher and/or lower than $P_{O\_UE\_PUSCH,C}$ included in the first parameter setting relating to uplink power control. It may be possible to set the power offset of an SRS included in the second parameter setting relating to uplink power control to a value higher and/or lower than the power offset of an SRS included in the first parameter setting relating to uplink power control. It may be possible to set $P_{O\_UE\_PUCCH,c}$ included in the second parameter setting relating to uplink power control to a value higher and/or lower than $P_{O\_UE\_PUCCH,c}$ included in the first parameter setting relating to uplink power control. For example, it is assumed that the range of the configurable power value of $P_{O\_UE\_PUSCH,c}$ included in the first parameter setting relating to uplink power control is [-8, 7]. Then, it may be possible to set the range of the configurable power value of $P_{O\_UE\_PUSCH,c}$ included in the second parameter setting relating to uplink power control to [-15, 10]. It is assumed that the range of the configurable power value of $P_{O\_UE\_PUCCH,c}$ included in the first parameter setting relating to uplink power control is [-8, 7]. Then, it may be possible to set the range of the configurable power value of $P_{O\_UE\_PUCCH,c}$ included in the second parameter setting relating to uplink power control to [-15, 10]. It is assumed that the configurable offset range of the SRS power offset included in the first parameter setting relating to uplink power control is [0, 15]. Then, it may be possible to set the configurable offset range of the SRS power offset included in the second parameter setting relating to uplink power control to [-5,20].

The terminal 102 can switch the parameter setting relating to uplink power control used in calculation of the uplink transmission power in accordance with the type of a DCI format contained in the received PDCCH. For example, in the case where a PDCCH that contains the SRS request is DCI format 0 (first DCI format), it is also possible to calculate the transmission power of an A-SRS using the power offset of an A-SRS (first A-SRS power offset) that has been configured in the first parameter setting relating to uplink power control. In the case where a PDCCH that contains the SRS request is DCI format 1A (second DCI format), it is also possible to calculate the transmission power of an A-SRS using the power offset of an A-SRS (second A-SRS power offset) that has been configured in the second parameter setting relating to uplink power control. That is, the terminal 102 can calculate the transmission power of an A-SRS while associating the type of a DCI format that contains the SRS request with a parameter setting relating to uplink power control.

Whether or not to use a different parameter setting relating to uplink power control depending on the type of DCI format may be communicated to each terminal 102 using an RRC signal. In other words, whether or not to use the same parameter setting relating to uplink power control for the first and second DCI formats may be communicated using an RRC signal.

The terminal 102 may set the uplink transmission power on the basis of the first parameter setting relating to uplink power control when the terminal 102 is in the first state, and may set the uplink transmission power on the basis of the second parameter setting relating to uplink power control when the terminal 102 is in the second state. Here, a terminal in the first state is a terminal that sets the RSRP on the basis of a CRS, and a terminal in the second state is a terminal that sets the RSRP on the basis of a CSI-RS. A terminal in the second state is a terminal for which a plurality of pieces of configuration information about parameters of a CSI-RS have been set. Note that the configuration information about parameters of a CSI-RS includes at least one piece of configuration information among configuration information about the port numbers or the number of ports relating to the CSI-RS, configuration information about resources relating to the CSI-RS, and configuration information about subframes relating to the CSI-RS. A terminal in the first state is a terminal that detects Downlink Control Information (DCI) in the first control channel region. A terminal in the second state is a terminal that detects Downlink Control Information in the first control channel region and/or in the second control channel region. A terminal in the first state and a terminal in the second state differ in terms of the difference between the maximum value and the minimum value of a power value that is configurable so as to be terminal-specific. For example, the configuration can be performed such that the difference between the maximum value and the minimum value of a terminal-specific power value is made larger in a terminal in the second state than in a terminal in the first state. That is, a terminal-specific power that is higher than that of a terminal in the first state can be configured for a terminal in the second state, and a terminal-specific power that is lower than that of a terminal in the first state can be configured for a terminal in the second state. An SRS power offset that is larger than that of a terminal in the first state can be configured for a terminal in the second state, and an SRS power offset that is smaller than that of a terminal in the first state can be configuration for a terminal in the second state. A terminal in the first state and a terminal in the second state may have different tables that manage the terminal-specific power. A terminal in the first state and a terminal in the second state may have different tables that manage the SRS power offset. Furthermore, a plurality of second path loss compensation coefficients can be configured. The second path loss compensation coefficient can be configured for each uplink physical channel. A terminal in the first state is a terminal in the first transmission mode, and a terminal in the second state is a terminal in the second transmission mode. For example, a terminal in the first transmission mode measures the path loss using a CRS, and a terminal in the second transmission mode measures the path loss using a CRS and/or a CSI-RS. A terminal in the first transmission mode is a terminal that can access one base station, and a terminal in the second transmission mode is a terminal that can access at least one base station. That is, a terminal in the second transmission mode is a terminal that can simultaneously access a plurality of base stations. A terminal in the second transmission mode is a terminal that can recognize a plurality of base stations to be one base station. A terminal in the second transmission mode is a terminal that can recognize a plurality of cells to be one cell.

Description will be given with reference to Fig. 1. The terminal 102 may be controlled such that the terminal 102 calculates, for the uplink 106, the path loss and uplink transmission power using the first parameter setting relating to uplink power control, and transmits an uplink signal with the transmission power. The terminal 102 may be controlled such that the terminal 102 calculates, for the uplink 108, the path loss and uplink transmission power using the second parameter setting relating to uplink power control, and transmits an uplink signal with the transmission power.

The first path loss and second path loss may be calculated using filter coefficients for which different values have been set. That is, the first path loss and second path loss may be calculated on the basis of the first filter coefficient and second filter coefficient respectively.

[Sixth Embodiment]

Next, the sixth embodiment will be described. In the sixth embodiment, the base station 101 communicates to the terminal 102 an RRC signal containing a plurality of (two or more) parameter settings relating to uplink power control (for example, the first and second parameter settings relating to uplink power control), and communicates to the terminal 102 a DCI format containing uplink signal transmission specification. The terminal 102 receives the DCI format, and determines the type of the DCI format. If the received DCI format is the first DCI format, the terminal 102 calculates the path loss and the transmission power of an uplink signal on the basis of the first parameter setting relating to uplink power control and, if the received DCI format is the second DCI format, the terminal 102 calculates the path loss and the transmission power of an uplink signal on the basis of the second parameter setting relating to uplink power control. Then, the terminal 102 transmits the uplink signal with the uplink transmission power. Here, the first DCI format may be an uplink grant and the second DCI format may be a downlink assignment. Alternatively, the first DCI format may be a downlink assignment and the second DCI format may be an uplink grant. That is, the first and second DCI formats may be different types of DCI formats. For example, the first DCI format may be DCI format 0 and the second DCI format may be DCI format 1 A. The first DCI format may be DCI format 4 and the second DCI format may be DCI format 2B/2C.

Even if the first DCI format and second DCI format are DCI formats of the same type (for example, DCI format 0), the first DCI format and second DCI format can be distinctively regarded as the first DCI format and second DCI format respectively if different values have been set for at least one piece of control information among various pieces of control information (control fields) included in the DCI formats. For example, in DCI format 0, control information about the TPC command is contained. The first and second DCI formats may be distinguished from each other on the basis of the difference in the values (indices) of the TPC command. Here, a case of the TPC command has been described, however, the description may be applicable to other control information. For example, in DCI format 0, information that specifies the cyclic shift for a UL DMRS is contained. If the information that specifies the cyclic shift for a UL DMRS differs between DCI formats, the DCI formats may be distinctively regarded as the first and second DCI formats. For example, if the information that specifies the cyclic shift for a UL DMRS has the first value in a DCI format, the DCI format is regarded as the first DCI format and, if the information that specifies the cyclic shift for a UL DMRS has the second value in a DCI format, the DCI format is regarded as the second DCI format. Note that the first value and second value described above may be represented using an information bit.

An information field (or an information bit) relating to switching between a plurality of parameter settings relating to uplink power control may be configured in a DCI format. That is, two parameter settings relating to uplink power control can be switched, for example, in accordance with the information relating to switching. Here, the base station 101 can configure these two parameter settings relating to uplink power control for different uses. By performing uplink power control of the terminal 102 using a DCI format, more dynamic scheduling can be performed. For example, appropriate uplink transmission power control differs in the case of performing communication only with the RRH 103 and in the case of performing coordinated communication implemented by the base station 101 and RRH 103. The base station 101 can dynamically perform uplink power control using a DCI format in order to more appropriately perform scheduling. It is desirable that a reference signal for channel measurement, such as an SRS, be transmitted with an appropriate transmission power for each reference point.

The base station 101 can select appropriate uplink transmission powers for a plurality of base stations (a base station 1, a base station 2, a base station 3, ...) or a plurality of RRHs (an RRH 1, an RRH 2, an RRH 3, ...) by configuring a plurality of parameter settings relating to uplink power control for one terminal 102 to thereby suppress interference with other terminals connected to a plurality of base stations 101 (or a plurality of RRHs 103). That is, the base station 101 (or RRH 103) can select the base station 101 or RRH 103 that is closer to the terminal 102 (e.g. that has a smaller path loss) as an uplink reception point, and the base station 101 or RRH 103 that is a reception point can configure, for the terminal 102, parameters relating to uplink transmission power control which are appropriate for the closer one. For example, a base station (RRH) closer to a terminal is a base station 101 (RRH 103) that has transmitted a path loss reference resource, the calculated path loss of which is smaller, and a base station far away from a terminal is a base station 101 (RRH 103) that has transmitted a path loss reference resource, the calculated path loss of which is larger. The terminal 102 can identify the base station 101 and RRH 103 (a plurality of downlink transmission points and uplink reception points, a plurality of reference points) on the basis of the difference in the path loss reference resource.

The base station 101 can instruct the terminal 102 to switch between a plurality of parameter settings relating to uplink power control (here, the first parameter setting relating to uplink power control and the second parameter setting relating to uplink power control) which have been communicated using an RRC signal, in accordance with the type of DCI format. The base station 101 can perform appropriate uplink transmission power control in accordance with various parameters that have been configured by a cell (base station 101 or RRH 103) to which the terminal 102 is connected. That is, the terminal 102 that is connected to a plurality of reception points (here, the base stations 101 and RRHs 103) can achieve an optimum throughput by performing appropriate uplink transmission power control for each reception point (reference point). By enabling dynamic switching of the uplink transmission power (uplink transmission power control), interference with other reception points and interference with the terminal 102 that is connected to other reception points can be reduced even in a region where reception points (reference points) are closely spaced. That is, interference with a terminal that performs communication using the same frequency resource can be suppressed.

For example, in the case where the first and second parameter settings relating to uplink power control are configured, the base station 101 may communicate to the terminal 102 via an RRC signal a DCI format in which information related to switching between the parameter settings is included.

In the case where the terminal 102 is connected to the base station 101, the uplink transmission power is calculated using the first parameter setting relating to uplink power control in which an uplink physical channel (i.e. uplink signal) has been configured for the base station 101. In the case where the terminal 102 is connected to the RRH 103, the uplink transmission power is calculated using the second parameter setting relating to uplink power control in which an uplink physical channel has been configured for the RRH 103. As the uplink transmission power obtained from the first and second parameter settings relating to uplink power control, the nominal PUSCH power that compensates for the power attenuated in accordance with the distance between the base station 101 (or RRH 103) and the terminal 102 may be configured in advance. That is, the terminal 102 can switch between an uplink signal having a relatively high transmission power and an uplink signal having a relatively low transmission power and transmit the uplink signal, by switching between the first and second parameter settings relating to uplink power control. Here, a relatively high transmission power is a transmission power, the degree of which is such that the transmission power does not become an interference source with other terminals or the transmission power compensates for a high path loss. A relatively low transmission power is a transmission power, the degree of which is such that a transmission signal can reach a reception point with the transmission power or the transmission power compensates for a low path loss.

A DCI format may contain information (information bit) related to switching between two parameter settings relating to uplink power control. For example, in the case where the information indicating switching has the first value (for example, '0'), the terminal 102 calculates the uplink transmission power on the basis of the first parameter setting relating to uplink control. In the case where the information indicating switching has the second value (for example, '1'), the terminal 102 calculates the uplink transmission power on the basis of the second parameter setting relating to uplink control.

The information indicating switching may be associated with control information contained in a DCI format. For example, the value of the cyclic shift index of a UL DMRS may be associated with the information indicating switching.

The information indicating switching may be represented using a code point with which the terminal 102 recognizes that the information indicating switching is contained in a DCI format in the case where at least one piece of control information contained in the DCI format has a predetermined value. For example, in the case where predetermined information (value) has been set for the first control information contained in a DCI format that has been transmitted from the base station 101 or RRH 103, the terminal 102 can differently interpret information contained in the DCI format. In this case, in a communication system constituted by the terminal 102 and base station 101 (or RRH 103), predetermined information that has been set for the first control information can be defined as a predetermined code point. Here, a predetermined code point used in the case where the first control information is constituted by virtual resource block localized allocation/distributed allocation identification information and resource block allocation information is such that, in the case where the virtual resource block localized allocation/distributed allocation identification information is represented using one bit and the resource block allocation information is represented by five bits, the one bit indicates '0' and all of the five bits indicate '1'. The terminal 102 can recognize that the DCI format contains the information indicating switching only when the terminal 102 has detected the code point. That is, a predetermined code point need not be constituted only by predetermined information of one piece of control information. In other words, only in the case where a plurality of pieces of control information respectively have predetermined pieces of information, the terminal 102 regards the predetermined pieces of information as a predetermined code point, and recognizes that the information indicating switching is contained in the DCI format. For example, in the case where the information identifying localized/distributed allocation of virtual resource blocks and the resource block allocation information are respectively indicated using pieces of predetermined information, the terminal 102 recognizes that the information indicating switching is contained in the DCI format. Otherwise, the terminal 102 performs resource allocation on the basis of the information identifying localized/distributed allocation of virtual resource blocks and the resource block allocation information. For example, the control information that constitutes the code point may be constituted by predetermined pieces of information of information about the cyclic shift for a UL DMRS (cyclic shift for DMRS and OCC index) and PUSCH frequency hopping permission information. In the case where information about Modulation and Coding Scheme (MCS), HARQ process number information, and NDI (New Data Indicator) information contained in a DCI format respectively have predetermined pieces of information, the terminal 102 recognizes the predetermined pieces of information to be a code point, and recognizes that the information indicating switching is contained in the DCI format. In the case where the terminal 102 has detected a code point, the terminal 102 can recognize some or all of pieces of control information in the DCI format which are not used as the code point, as the information indicating switching. For example, control information that is recognized as the information indicating switching may be the virtual resource block localized allocation/distributed allocation identification information. Control information that is recognized as the information indicating switching may be the resource block allocation information. Control information that is recognized as the information indicating switching may be the SRS request. Control information that is recognized as the information indicating switching may be the CSI request. Control information that is recognized as the information indicating switching may be information about the cyclic shift for a UL DMRS. Control information that is recognized as the information indicating switching may be represented using a plurality of pieces of information among the above-described pieces of information.

In the case where only the macro base station 101 transmits a PDCCH or an RRC signal containing control information, the macro base station 101 can give an instruction using a DCI format as to whether the terminal 102 performs uplink signal transmission directed to the macro base station 101 or uplink signal transmission directed to the RRH 103. That is, the macro base station 101 can perform control so that an uplink signal is to be transmitted to an uplink reception point for which appropriate uplink transmission power control can be performed while assuming the position of the terminal 102 or the loss of the transmission power.

Two sets or more of parameter settings relating to uplink power control can be configured for various uplink physical channels (a PUSCH, a PUCCH, an SRS, and a PRACH). For example, in the case where two sets of parameter settings relating to uplink power control have been configured for various uplink physical channels, information indicating switching between the sets is contained in a DCI format. The information may be represented using one bit. For example, in the case where the received information indicating switching has the first value (for example, '0'), the terminal 102 calculates various uplink transmission powers using the first parameter setting relating to uplink power control. In the case where the information indicating switching has the second value (for example, '1'), the terminal 102 calculates various uplink transmission powers using the second parameter setting relating to uplink power control.

For example, a DCI format may contain control information that is associated with the first and second parameter settings relating to uplink power control. That is, in the case where the control information specifies that the uplink transmission power is to be calculated using the first parameter setting relating to uplink power control, in other words, in the case where the first power control is specified, the terminal 102 calculates the uplink transmission power on the basis of the first parameter setting relating to uplink power control. In the case where the control information specifies that the uplink transmission power is to be calculated using the second parameter setting relating to uplink power control, in other words, in the case where the second power control is specified, the terminal 102 calculates the uplink transmission power on the basis of the second parameter setting relating to uplink power control. In this case, the first and second parameter settings relating to uplink power control are contained in an RRC signal and communicated to the terminal 102. Similarly, the information indicating switching may be represented using two bits in a DCI format. In the case where the control information specifies that the uplink transmission power is to be calculated using the third parameter setting relating to uplink power control, in other words, in the case where the third power control is specified, the terminal 102 may calculate the uplink transmission power on the basis of the third parameter setting relating to uplink power control. In the case where the control information specifies that the uplink transmission power is to be calculated using the fourth parameter setting relating to uplink power control, in other words, in the case where the fourth power control is specified, the terminal 102 may calculate the uplink transmission power on the basis of the fourth parameter setting relating to uplink power control. As described above, in the case where the control information specifies that the uplink transmission power is to be calculated using parameters relating to uplink power control selected from among a plurality of parameter settings relating to uplink power control, the terminal 102 may calculate the uplink transmission power on the basis of the selected parameter setting relating to uplink power control.

A parameter set used for an A-SRS is uniquely selected from among a plurality of parameter sets for an A-SRS, in accordance with information indicated by the SRS request (i.e. indicator of SRS transmission) that is contained in a DCI format and specifies an A-SRS transmission request. A parameter set for an A-SRS which is associated with the SRS request may contain a parameter setting relating to uplink power control. That is, the first SRS parameter set may contain the first parameter setting relating to uplink power control, and the second SRS (A-SRS) parameter set may contain the second parameter setting relating to uplink power control. Similarly, the third SRS parameter set may contain the third parameter setting relating to uplink power control, and the fourth SRS parameter set may contain the fourth parameter setting relating to uplink power control. As described above, a plurality of SRS parameter sets may be associated with a plurality of parameter settings relating to uplink power control respectively. Four or more SRS (A-SRS) parameter sets may be respectively associated with four or more parameter settings relating to uplink power control. Note that a parameter set for an SRS includes the cyclic shift for the SRS. A parameter set for an SRS includes the transmission bandwidth of the SRS. A parameter set for an SRS includes the number of antenna ports for the SRS. A parameter set for an SRS includes the transmission comb, which is the frequency offset of the SRS. A parameter set for an SRS includes the hopping bandwidth. A parameter set for an SRS includes an identity (cell ID, parameter) used to set the base sequence for the SRS.

The base station 101 can control switching of the uplink reception point implicitly to the terminal 102 by switching the parameter setting relating to uplink power control for the terminal 102.

In the terminal 102 that is moving fast or in the terminal 102 the transmission/reception point of which is frequently switched, uplink transmission power control can be dynamically performed and an appropriate throughput can be easily achieved.

The plurality of parameter settings relating to uplink power control in this embodiment may each include a path loss reference resource. A path loss reference resource may be that described in the third embodiment. That is, a path loss reference resource may include information associated with an antenna port. A state of being associated with an antenna port may mean a state of being associated with a radio resource associated with the antenna port 0, that is, a state of being associated with a Cell-specific Reference Signal (CRS), or may mean a state of being associated with radio resources associated with the antenna ports 15 to 22, that is, a state of being associated with Channel State Information Reference Signals (CSI-RSs). The first parameter setting relating to uplink power control and the second parameter setting relating to uplink power control in this embodiment may be those described in the third embodiment. That is, the first parameter setting relating to uplink power control and the second parameter setting relating to uplink power control in this embodiment may be $\alpha$, which is the attenuation coefficient used in fractional transmission power control within a cell (that is, the path loss compensation coefficient), or may be $P_{O\_NOMINAL\_PUSCH,c}$ or $P_{O\_UE\_PUSCH,c}$ (that is, a cell-specific or terminal-specific power control parameter relating to the nominal power of a PUSCH). The first parameter setting relating to uplink power control and the second parameter setting relating to uplink power control in this embodiment may be the power offset of a sounding reference signal or the filter coefficient. The first parameter setting relating to uplink power control and the second parameter setting relating to uplink power control in this embodiment may be $P_{O\_NOMINAL\_PUCCH,c}$ or $P_{O\_UE\_PUCCH,c}$ (that is, a cell-specific or terminal-specific power control parameter relating to the nominal power of a PUCCH).

[Seventh Embodiment]

Next, the seventh embodiment will be described. In the seventh embodiment, the base station 101 configures uplink physical channels, configures path loss reference resources for the uplink physical channels respectively, and communicates an RRC signal containing the configuration information to the terminal 102. The terminal 102 configures the uplink physical channels in accordance with the information (configuration information, control information) contained in the RRC signal, configures parameters relating to uplink power control for each of the uplink physical channels, configures the transmission powers of various uplink physical channels on the basis of the parameters relating to uplink power control, and transmits the uplink physical channels with the transmission powers.

In the case where path loss reference resources relating to various uplink physical channels are communicated using an RRC signal, a path loss reference resource used to calculate the transmission power of a PUSCH can be configured in a terminal-specific PUSCH configuration (PUSCH-ConfigDedicated). A path loss reference resource used to calculate the transmission power of a PUCCH can be configured in a terminal-specific PUCCH configuration (PUCCH-ConfigDedicated). A path loss reference resource used to calculate the transmission power of a P-SRS can be configured in a terminal-specific sounding reference signal UL configuration (SoundingRS-UL-ConfigDedicated). A path loss reference resource used to calculate the transmission power of an A-SRS can be configured in aperiodic SRS configuration (SRS-ConfigAp). A path loss reference resource used to calculate the transmission power of a PRACH can be configured in PRACH configuration information (PRACH-ConfigInfo). The above-described pieces of configuration information are communicated from the base station 101 to the terminal 102 using an RRC signal. That is, path loss reference resources can be set in terminal-specific parameter settings for various uplink physical channels. In other words, the base station 101 configures, for each terminal 102, a path loss reference resource for each uplink physical channel that is allocated to the terminal 102, and communicates the configuration information with the information using an RRC signal. A path loss reference resource may contain information associated with an antenna port. A state of being associated with an antenna port may mean a state of being associated with a radio resource associated with the antenna port 0, that is, a state of being associated with a Cell-specific Reference Signal (CRS), or may mean a state of being associated with radio resources associated with the antenna ports 15 to 22, that is, a state of being associated with Channel State Information Reference Signals (CSI-RSs).

Path loss reference resources relating to various uplink physical channels may be configured in cell-specific parameter settings.

Path loss reference resources relating to various uplink physical channels (a PUSCH, a PUCCH, an SRS (P-SRS, A-SRS), and a PRACH) may be each configured in a parameter setting relating to terminal-specific uplink power control (UplinkPowerControlDedicated). Path loss reference resources relating to various uplink physical channels may be each configured in a parameter setting relating to cell-specific uplink power control (UplinkPowerControlCommon). The above-described various uplink signals are synonymous with various uplink physical channels.

In the case where the base station 101 (or RRH 103) that receives an uplink physical channel differs depending on the type of the uplink physical channel, it is assumed that the base station 101 that is closer to the terminal 102 (that is, the base station 101 that has a smaller path loss) among a plurality of base stations is a base station A, the base station 101 that is far away from the terminal 102 (that is, the base station 101 that has a larger path loss) is a base station B, a PUSCH is transmitted to the base station A, and an SRS is transmitted to the base station B. Common path loss reference resources are transmitted from different base stations and therefore the common path reference resources are combined and received by the terminal 102. If the path loss is calculated for either of the uplink physical channels on the basis of the same path loss reference resource, and the transmission power of each uplink physical channel is calculated, then the path loss is calculated from the reception power of the combined path loss reference resource. As a result, an accurate path loss between the base station A and the terminal 102 and an accurate path loss between the base station B and the terminal 102 cannot be obtained. Accordingly, a PUSCH is transmitted to the base station A with a transmission power higher than an appropriate transmission power, and an SRS is transmitted to the base station B with a power lower than an appropriate power. Then, in the base station A, the PUSCH transmitted from the terminal 102 becomes an interference source for other terminals and, in the base station B, channel measurement cannot be appropriately performed from the SRS transmitted from the terminal 102 and scheduling cannot be appropriately performed. Particularly, an SRS is a channel necessary for performing channel measurement between the base station 101 and the terminal 102, and uplink scheduling is performed on the basis of the result of the channel measurement. Accordingly, if channel measurement is not appropriately performed between the base station A and the terminal 102 and between the base station B and the terminal 102, the base station 101 that is closest to the terminal 102 cannot be selected, and it becomes difficult to achieve an appropriate throughput with an appropriate transmission power. In this case, the distance between the terminal 102 and the base station 101 (whether the base station 101 is closer to or far away from the terminal 102) is estimated from the path loss. That is, the base station 101 (or RRH 103) determines that the distance between the base station 101 (or RRH 103) and the terminal 102 is short if the path loss is smaller, and that the distance between the base station 101 (or RRH 103) and the terminal 102 is long if the path loss is larger. Note that the magnitude of the path loss may be determined on the basis of a threshold. The base station 101 performs control so as to connect a reception point that is closer to the terminal 102 with the terminal 102.

The terminal 102 that can calculate path losses from a plurality of path loss reference resources may use the result of calculation of the path losses in transmission power control of various uplink physical channels. That is, the terminal 102 may configure the transmission powers of various uplink physical channels on the basis of the result of calculation of path losses from path loss reference resources configured for the respective uplink physical channels. For example, the first path loss reference resource may be configured for a PUSCH, the second path loss reference resource may be configured for a PUCCH, the third path loss reference resource may be configured for a PRACH, the fourth path loss reference resource may be configured for a P-SRS, and the fifth path loss reference resource may be configured for an A-SRS. These path loss reference resources may be those described in the third embodiment. These path loss reference resources may be downlink reference signals associated with antenna ports. These path loss reference resources may be specified using downlink antenna ports. Here, configuration information about these path loss reference resources may be communicated to the terminal 102 using an RRC signal. Configuration information about these path loss reference resources may be contained in a DCI format and communicated to the terminal 102. Here, configuration information about these path loss reference resources may be included in a cell-specific or terminal-specific configuration for each uplink physical channel. Configuration information about these path loss reference resources may be included in a parameter setting relating to uplink power control which is included in a configuration for each uplink physical channel. Path loss reference resources configured for various uplink physical channels may be configured independently of each other, and the same type of path loss reference resource need not be configured for various uplink physical channels. That is, in these path loss reference resources, information associated with antenna ports need not be the same.

A plurality of path loss reference resources may be configured for some uplink physical channels. For example, a parameter set corresponding to the value of the SRS request can be configured for an A-SRS, and a path loss reference resource can be configured for each parameter. For example, as path loss reference resources for an A-SRS, the first path loss reference resource to fourth path loss reference resource may be configured. For a P-SRS, the fifth path loss reference resource may be configured.

The path loss may be calculated for a PUSCH, a PUCCH, a PRACH, and a P-SRS on the basis of the same path loss reference resource, and the path loss may be calculated for an A-SRS on the basis of a path loss reference resource that is different from that path loss reference resource. That is, a path loss reference resource may be configured independently for some uplink physical channels. A path loss reference resource for at least one of the uplink physical channels may be communicated using an RRC signal. A path loss reference resource for at least one of the uplink physical channels may be communicated in a DCI format.

Path loss reference resources of the same type that have been transmitted by a plurality of base stations 101 and RRHs 103 (a plurality of reference points) are combined in the terminal 102. If the path loss is calculated on the basis of the combined path loss reference resource, the path loss at a reference point that is far away from the terminal 102 cannot be reflected. As a result, if the uplink transmission power is calculated using the calculated path loss and an uplink signal is transmitted, the uplink signal may not reach the reference point that is far away from the terminal 102. If the path loss is calculated on the basis of the reception power of the combined path loss reference resource and the uplink transmission power is calculated, in the case where the transmission power of an uplink signal transmitted from the terminal 102 is relatively low, the uplink signal does not reach the base station 101 or RRH 103 and, in the case where the uplink transmission power of the uplink signal is relatively high, the uplink signal becomes an interference source for other terminals.

Downlink signals transmitted from the base station 101 and RRH 103 (a plurality of downlink transmission points) and combined cannot be separated in the terminal 102 and therefore the path loss cannot be accurately measured on the basis of the downlink signals respectively transmitted from the base station 101 and RRH 103. The base station 101 needs to configure a path loss reference resource for each downlink transmission point in order to measure the path losses of downlink signals transmitted from a plurality of downlink transmission points, as necessary.

In the case where the terminal 102 transmits a PRACH to the base station 101 and RRH 103 (or a plurality of reference points), a path loss reference resource used in calculation of the transmission power of a PRACH for the base station 101 and a path loss reference resource used in calculation of the transmission power of a PRACH for the RRH 103 may be different from each other. That is, transmission power control of a PRACH for the base station 101 and transmission power control of a PRACH for the RRH 103 may be performed on the basis of path loss reference resources transmitted from the base station 101 and RRH 103 respectively. In order for random access to be performed for the base station 101 or RRH 103, the base station 101 can communicate information indicating switching of the path loss reference resources for a PRACH to the terminal 102, and the terminal 102 can configure (reconfigure) the path loss reference resource for a PRACH in accordance with the information about switching contained in the RRC signal, by putting the information in an RRC signal.

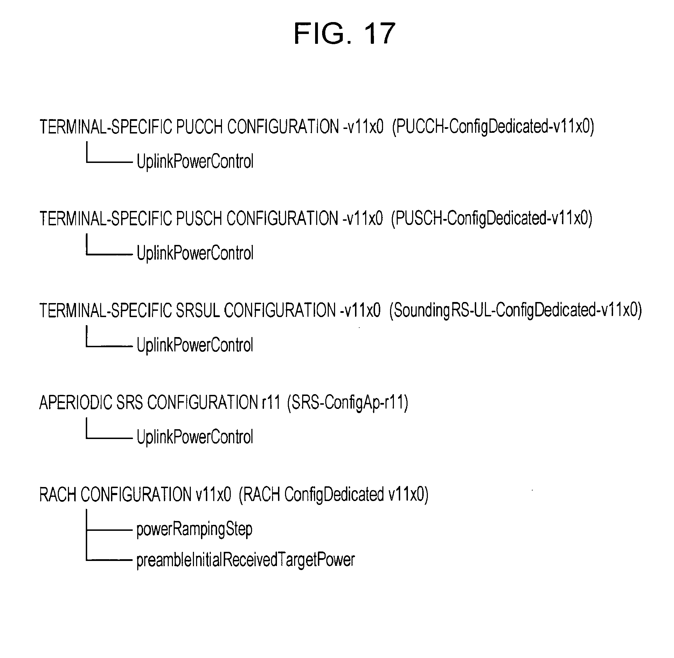

For the terminal 102, parameters or a parameter set relating to uplink power configuration can be configured, the parameters or the parameter set being configured such that different values are set for various uplink physical channels respectively. Fig. 17 illustrates an example of parameters relating to uplink power control which are configured for respective uplink physical channels. In Fig. 17, a parameter setting relating to uplink power control (UplinkPowerControl) is configured for a terminal-specific configuration for each of a PUCCH, a PUSCH, a P-SRS, and an A-SRS (terminal-specific PUCCH configuration -v11x0 (PUCCH-ConfigDedicated-v11x0), terminal-specific PUSCH configuration -v11x0 (PUSCH-ConfigDedicated-v11x0), terminal-specific sounding reference signal UL configuration -v11x0 (SoundingRS-UL-ConfigDedicated-v11x0), and aperiodic SRS configuration -r11 (SRS-ConfigAp-r11)). For a PRACH and a Random Access Channel (RACH), a power ramping step (powerRampingStep) and a preamble initial reception target power (preambleInitialReceivedTargetPower) are configured. Parameter settings relating to uplink power control may be those illustrated in Fig. 10. A path loss reference resource may be configured in these settings. A path loss reference resource may include information associated with an antenna port. A state of being associated with an antenna port may mean a state of being associated with a radio resource associated with the antenna port 0, that is, a state of being associated with a Cell-specific Reference Signal (CRS), or may mean a state of being associated with radio resources associated with the antenna ports 15 to 22, that is, a state of being associated with Channel State Information Reference Signals (CSI-RSs).

For example, in the case where the path loss is not taken into consideration, various power control parameter sets (e.g. first power control parameter set) configured in order to attain a relatively high transmission power and various power control parameter sets (e.g. second power control parameter set) configured in order to attain a relatively low transmission power are configured for the terminal 102. The base station 101 puts in an RRC signal or in a DCI format (i.e. PDCCH) information indicating switching between the first and second power control parameter sets, and communicates the information to the terminal 102. The terminal 102 calculates the uplink transmission powers of various uplink physical channels on the basis of the information, and transmits the uplink physical channels (uplink signals). Note that the values of various parameters included in these power control parameter sets are set by the base station 101 by taking into consideration the result in a measurement report, the result of channel measurement using an SRS, the measurement result included in Power Headroom Reporting (PHR) that reports the value of the reserve power capacity of the terminal 102, or the like.

For example, for each uplink physical channel, information indicating switching of the parameter set relating to uplink power control may be configured. The information indicating switching may be communicated to each terminal 102 using an RRC signal. The information indicating switching may be contained in a DCI format.

A DCI format may contain information (information bit) that indicates switching between two parameter sets relating to uplink power control. For example, in the case where the information indicating switching has the first value (for example, '0'), the terminal 102 calculates the uplink transmission power on the basis of the first parameter setting relating to uplink control and, in the case where the information indicating switching has the second value (for example, '1'), the terminal 102 calculates the uplink transmission power on the basis of the second parameter setting relating to uplink control.

The information indicating switching may be associated with control information contained in a DCI format. For example, the value of the cyclic shift index of a UL DMRS may be associated with the information indicating switching.

The information indicating switching may be represented using a code point with which the terminal 102 recognizes that the information indicating switching is contained in a DCI format in the case where at least one piece of control information contained in the DCI format has a predetermined value. For example, in the case where predetermined information (value) has been set for the first control information contained in a DCI format that has been transmitted from the base station 101 or RRH 103, the terminal 102 can differently interpret information contained in the DCI format. In this case, in a communication system constituted by the terminal 102 and base station 101 (or RRH 103), predetermined information that has been set for the first control information can be defined as a predetermined code point. Here, a predetermined code point used in the case where the first control information is constituted by virtual resource block localized allocation/distributed allocation identification information and resource block allocation information is such that, in the case where the virtual resource block localized allocation/distributed allocation identification information is represented using one bit and the resource block allocation information is represented by five bits, the one bit indicates '0' and all of the five bits indicate '1'. The terminal 102 can recognize that the DCI format contains the information indicating switching only when the terminal 102 has detected the code point. That is, a predetermined code point need not be constituted only by predetermined information of one piece of control information. In other words, only in the case where a plurality of pieces of control information respectively have predetermined pieces of information, the terminal 102 regards the predetermined pieces of information as a predetermined code point, and recognizes that the information indicating switching is contained in the DCI format. For example, in the case where the information identifying localized/distributed allocation of virtual resource blocks and the resource block allocation information are respectively indicated using pieces of predetermined information, the terminal 102 recognizes that the information indicating switching is contained in the DCI format. Otherwise, the terminal 102 performs resource allocation on the basis of the information identifying localized/distributed allocation of virtual resource blocks and the resource block allocation information. For example, the control information that constitutes the code point may be constituted by predetermined pieces of information of information about the cyclic shift for a UL DMRS (cyclic shift for DMRS and OCC index) and PUSCH frequency hopping permission information. In the case where information about Modulation and Coding Scheme (MCS), HARQ process number information, and NDI (New Data Indicator) information contained in a DCI format respectively have predetermined pieces of information, the terminal 102 recognizes the predetermined pieces of information as a code point, and recognizes that the information indicating switching is contained in the DCI format. In the case where the terminal 102 has detected a code point, the terminal 102 can recognize some or all of pieces of control information in the DCI format which are not used as the code point, as the information indicating switching. For example, control information that is recognized as the information indicating switching may be the virtual resource block localized allocation/distributed allocation identification information. Control information that is recognized as the information indicating switching may be the resource block allocation information. Control information that is recognized as the information indicating switching may be the SRS request. Control information that is recognized as the information indicating switching may be the CSI request. Control information that is recognized as the information indicating switching may be information about the cyclic shift for a UL DMRS. Control information that is recognized as the information indicating switching may be represented using a plurality of pieces of information among the above-described pieces of information.

For example, a plurality of values of $P_{O\_NOMINAL\_PUSCH}$ or $P_{O\_UE\_PUSCH}$ are set for a PUSCH. A plurality of values of $P_{O\_NOMINAL\_PUCCH}$ or $P_{O\_UE\_PUCCH}$ are set for a PUCCH. A plurality of values may be set for each of various power control parameters. A plurality of values may be set for each parameter set. A plurality of SRS power offsets may be set for an SRS. A plurality of random access preamble initial reception powers or power ramping steps may be set for a PRACH. The terminal 102 configures the transmission powers of uplink physical channels on the basis of these parameters. That is, for at least some uplink physical channels, a plurality of parameters relating to uplink power control may be configured. In other words, for some uplink physical channels, the first parameter and second parameter relating to uplink power control may be configured. Information about these parameter settings relating to power control may be dynamically controlled in accordance with the information indicating switching.

One parameter relating to uplink power control may be configured for each of various uplink physical channels. The parameter relating to uplink power control may include at least one power control parameter among the above-described parameter settings relating to uplink power control which are configured so as to be cell-specific or terminal-specific. For example, $P_{O\_NOMINAL\_PUSCH}$ or $P_{O\_UE\_PUSCH}$ may be configured as the parameter. $P_{O\_NOMINAL\_PUCCH}$ or $P_{O\_UE\_PUCCH}$ may be configured as the parameter. The SRS power offset may be configured as the parameter. The random access preamble initial reception power or the power ramping step may be configured as the parameter. The filter coefficient or the path loss compensation coefficient $\alpha$ may be configured as the parameter.

The base station 101 can configure, for each terminal 102, the transmission power of a downlink reference signal to be transmitted. The base station 101 may set the second reference signal power (referenceSignalPower2) for a terminal-specific PDSCH configuration (PDSCH-ConfigDedicated), and communicates the configuration information to the terminal 102. For example, the second reference signal power may be configured as the transmission power of a DL DMRS or a CSI-RS. A reference signal power relating to a downlink antenna port may be configured in addition to the second reference signal power. The reference signal power may be configured for each path loss reference resource. Information associated with the antenna port may be associated with the reference signal power.

The base station 101 may configure, for each terminal 102, the transmission powers of various downlink reference signals or the transmission power of a downlink reference signal associated with a downlink antenna port.

The base station 101 may add a path loss reference resource to a cell-specific parameter setting for each uplink physical channel.

The base station 101 may set a path loss reference resource in a terminal-specific parameter setting for each uplink physical channel.

A plurality of path loss reference resources and a plurality of parameter settings relating to uplink power control may be associated with each other. For example, in the case where a path loss reference resource for a PUSCH is associated with a CRS antenna port 0, the terminal 102 may calculate the transmission power of the PUSCH on the basis of the first parameter setting relating to uplink power control. In the case where a path loss reference resource for a PUSCH is associated with a CSI-RS antenna port 15, the terminal 102 may calculate the transmission power of the PUSCH on the basis of the second parameter setting relating to uplink power control.

A plurality of path loss reference resources may be configured for some uplink physical channels. For example, the first path loss reference resource and second path loss reference resource contain pieces of information associated with different antenna ports. Different downlink reference signals are set for the first path loss reference resource and second path loss reference resource. For example, the first path loss reference resource may be a CRS and the second path loss reference resource may be a CSI-RS. For example, the first path loss reference resource may be a resource configured for the antenna port 15, and the first path loss reference resource may be a resource configured for the antenna port 22. The first path loss reference resource and second path loss reference resource may be one piece of information among pieces of information associated with the antenna ports.

A parameter setting relating to uplink power control may be configured for each of various uplink physical channels. For example, the first parameter setting relating to uplink power control may be configured for a PUSCH, the second parameter setting relating to uplink power control may be configured for a PUCCH, the third parameter setting relating to uplink power control may be configured for a PRACH, the fourth parameter setting relating to uplink power control may be configured for a P-SRS, and the fifth parameter setting relating to uplink power control may be configured for an A-SRS. Power control parameters that are configured in the first parameter setting relating to uplink power control to the fifth parameter setting relating to uplink power control need not be the same. For example, in the first parameter setting relating to uplink power control to the third parameter setting relating to uplink power control, only such parameters that are configured in a terminal-specific setting may be included. In the fourth parameter setting relating to uplink power control and the fifth parameter setting relating to uplink power control, such parameters that are configured in cell-specific and terminal-specific settings may be included. In each of the first parameter setting relating to uplink power control to the fifth parameter setting relating to uplink power control, cell-specific and terminal-specific settings may be included, however, the values of various power control parameters need not be the same in the first to fifth parameter settings relating to uplink power control. That is, various power control parameters need not have the same values in the first to fifth parameter settings relating to uplink power control. In other words, a parameter relating to power control for which different values are set may be configured as the first parameter relating to uplink power control and the second parameter relating to uplink power control respectively.

One parameter setting relating to uplink power control may be configured for various uplink physical channels. That is, the same power control parameter set may be configured for various uplink physical channels, however, the value set for each power control parameter may be determined for each uplink physical channel.

For at least some uplink physical channels, a plurality of parameter settings relating to uplink power control may be configured. For example, SRS parameter sets associated with an SRS request that specifies an A-SRS transmission request may each include a parameter setting relating to uplink power control. That is, in the case where four SRS parameter sets are configured, four parameter settings relating to uplink power control are configured. Also for a PRACH, a plurality of parameter settings relating to uplink power control may be configured. For a PUSCH, a plurality of parameter settings relating to uplink power control may be configured.

In the case where the first parameters (or power control parameter set) relating to uplink power control and the second parameters (or power control parameter set) relating to uplink power control are configured for at least some uplink physical channels, different parameters are configured as the first parameters relating to uplink power control and as the second parameters relating to uplink power control. Different values are set for the first parameters relating to uplink power control and the second parameters relating to uplink power control. As various parameters included in the first parameter set relating to uplink power control and various parameters included in the second parameter set relating to uplink power control, the same parameters need not be configured. For example, as various parameters included in the first parameter set relating to uplink power control, only the SRS power offset may be configured, while as various parameters included in the second parameter set relating to uplink power control, the SRS power offset and nominal PUSCH power may be configured. For example, various parameters included in the first parameter set relating to uplink power control may be various parameters included in a parameter setting relating to cell-specific uplink power control, and various parameters included in the second parameter set relating to uplink power control may be various parameters included in a parameter setting relating to terminal-specific uplink power control. For example, as various parameters included in the first and second parameter sets relating to uplink power control, various parameters included in a parameter setting relating to cell-specific uplink power control and a parameter setting relating to terminal-specific uplink power control may be configured. That is, it is necessary that a parameter set relating to uplink power control includes at least one parameter among the parameters illustrated in Fig. 10. A parameter set relating to uplink power control may include only a path loss reference resource. Various parameters included in the first parameter set relating to uplink power control and the second parameter set relating to uplink power control may include a parameter (cell ID) used to generate sequences for various uplink physical channels. For example, a parameter described above may be a cell ID used to generate the base sequence for an SRS (A-SRS, P-SRS). A parameter described above may be a cell ID used to generate the base sequence for a PUSCH DMRS. A parameter described above may be a cell ID used to generate the base sequence for a PUCCH DMRS. A parameter described above may be a cell ID used to generate the base sequence for a PUSCH. A parameter described above may be a cell ID used to generate the base sequence for a PUCCH.

When a parameter setting (parameter set) relating to uplink power control or a path loss reference resource is configured for each of various uplink physical channels, the terminal 102 can calculate the transmission power of each uplink physical channel on the basis of the configuration. A P-SRS or an A-SRS can be used in channel measurement for a backhaul used in switching of a reference point, for fallback, or for preliminary investigation. The base station 101 can perform control so that communication with the terminal 102 is always performed using an appropriate reference point, on the basis of the result of channel measurement using an SRS.

The base station 101 can appropriately perform, for each reference point (uplink reception point), uplink transmission power control for various uplink physical channels by configuring a parameter setting relating to uplink power control for each uplink physical channel. For example, if the terminal 102 can perform communication with a reference point having a small path loss, a transmission power that can be allocated to a PUSCH or a PUCCH becomes high and therefore uplink communication using a modulation scheme, such as 16QAM or 64QAM, having a high modulation factor can be performed, which results in the improvement of the throughput.

In the above-described embodiments, a cell ID may be called a parameter communicated from the higher layer. That is, the first cell ID may be called the first parameter, the second cell ID may be called the second parameter, the third cell ID may be called the third parameter, and the n-th cell ID may be called the n-th parameter. A cell ID may be called a physical quantity (quantity). A cell ID may be called a base sequence identity (BSI: Base Sequence Identity, Base Sequence Index). A cell ID may be called a cell identity. A cell ID may be called a physical cell identity (PCI: Physical layer Cell Identity). A cell ID may be called a terminal-specific cell ID. A cell ID may be called a Virtual Cell ID (VCI). A field may be called control information, a control information field, information, an information field, a bit field, an information bit, or an information bit field. The above-described cell ID may be configured for each of an A-SRS and a P-SRS.

In the above-described embodiments, description has been given while assuming a resource element or a resource block to be a unit of mapping of an information data signal, a control information signal, a PDSCH, a PDCCH, and a reference signal, and assuming a subframe or a radio frame to be a unit of transmission in the time direction, however, assumption is not limited to the above. Even if a domain and a time unit configured by any frequency and any time are used instead of those described above, similar effects can be attained. In the above-described embodiments, description has been given of a case where demodulation is performed using an RS on which precoding processing has been performed, and description has been given while assuming a port equivalent to a MIMO layer to be a port corresponding to an RS on which precoding processing has been performed, however, a case and assumption are not limited to the above. Similar effects can be attained by applying the present invention to ports that correspond to different reference signals. For example, an unprecoded (nonprecoded) RS can be used instead of a precoded RS. As the port, a port equivalent to an output end after precoding processing has been performed or a port equivalent to a physical antenna (or a combination of physical antennas) can be used.

In the above-described embodiments, uplink transmission power control is the transmission power control of uplink physical channels (a PUSCH, a PUCCH, a PRACH, and an SRS), and the transmission power control includes switching or (re)configuration of various parameters used in the calculation of the transmission powers of various uplink physical channels.

In the above-described embodiments, downlink/uplink coordinated communication implemented by the base station 101, terminal 102, and RRH 103 has been described. However, the above-described embodiments are applicable to coordinated communication implemented by two or more base stations 101 and the terminal 102, coordinated communication implemented by two or more base stations 101, the RRH 103, and the terminal 102, coordinated communication implemented by two or more base stations 101 or RRHs 103 and the terminal 102, coordinated communication implemented by two or more base stations 101, two or more RRHs 103, and the terminal 102, and coordinated communication implemented by two or more transmission points/reception points. The above-described embodiments are applicable to coordinated communication implemented by the base stations 101 (a plurality of base stations) having different cell IDs. The above-described embodiments are applicable to coordinated communication implemented by the base station 101 and RRH 103 having different cell IDs. The above-described embodiments are applicable to coordinated communication implemented by the RRHs 103 (a plurality of RRHs) having different cell IDs. That is, the above-described coordinated communication is applicable to a communication system constituted by a plurality of base stations 101, a plurality of terminals 102, and a plurality of RRHs 103. The above-described coordinated communication is applicable to a communication system constituted by a plurality of transmission points and a plurality of reception points. The transmission points and reception points may be constituted by a plurality of base stations 101, a plurality of terminals 102, and a plurality of RRHs 103. In the above-described embodiments, description has been given of a case where uplink transmission power control that is appropriate for either one of the base station 101 and RRH 103 which is closer to the terminal 102 (which has a smaller path loss) is performed on the basis of the result of path loss calculation. However, similar processing can be performed in a case where uplink transmission power control that is appropriate for either one of the base station 101 and RRH 103 which is far away from the terminal 102 (which has a larger path loss) is performed on the basis of the result of path loss calculation.

In the above-described embodiments, the base station 101 and RRH 103 are downlink transmission points and uplink reception points. The terminal 102 is a downlink reception point and an uplink transmission point.

A program that runs in the base station 101 and terminal 102 according to the present invention is a program that controls a CPU or the like (a program that operates a computer) so as to implement the functions in the above-described embodiments of the present invention. Information handled in these apparatuses is temporarily stored in a RAM when the information is processed, is thereafter stored in various ROMs, HDDs, or the like, and is read, modified, and written by the CPU as necessary. A recording medium that stores the program may be any one of a semiconductor medium (for example, a ROM or nonvolatile memory card), an optical recording medium (for example, a DVD, an MO, an MD, a CD, or a BD), a magnetic recording medium (for example, a magnetic tape or a flexible disc), and the like. The functions in the above-described embodiments are implemented by executing the loaded program. Furthermore, the functions of the present invention may be implemented by joint processing with an operating system, other application programs, or the like performed in accordance with instructions given by the program.

In the case where the program is distributed to the market, the program can be distributed by being stored in a portable recording medium or the program can be transferred to a server computer that is connected over a network, such as the Internet. In this case, a storage device of the server computer is included in the present invention. Part or all of the base station 101 and terminal 102 in the above-described embodiments may be typically implemented as an LSI, which is an integrated circuit. The functional blocks of the base station 101 and terminal 102 may be individually implemented as chips, or some or all of the functional blocks may be integrated into a chip. A technique used in integration into a circuit is not limited to LSI, and the integration may be implemented using a dedicated circuit or a general purpose processor. In case a new technique for integration into a circuit, which will replace LSI, emerges with the advancement of semiconductor technology, an integrated circuit based on such a technique can be used.

While embodiments of the present invention have been described in detail with reference to the drawings, specific configurations are not limited to those described in the embodiments, and design modifications or the like without departing from the spirit of the present invention are also included. Various modifications can be made to the present invention within the scope of the claims, and an embodiment obtained by combining, as appropriate, technical means disclosed in different embodiments is also included in the technical scope of the present invention. A configuration in which elements that are described in the above-described embodiments and have similar effects are replaced with each other is also included.

INDUSTRIAL APPLICABILITY

The present invention is preferably used in a radio base station apparatus, a radio terminal apparatus, a wireless communication system, or a wireless communication method.

DESCRIPTION OF REFERENCE NUMERALS

| | |
|---|---|
| 101, 1801 | base station |
| 102, 1802, 1803, 1904, 2004 | terminal |
| 103, 1902, 2002 | RRH |
| 104, 1903,2003 | line |
| 105, 107, 1804, 1805, 1905, 1906 | downlink |
| 106, 108, 2005, 2006 | uplink |
| 301 | higher layer processing unit |
| 303 | control unit |
| 305 | reception unit |
| 307 | transmission unit |
| 309 | channel measurement unit |
| 311 | transmission/reception antenna |
| 3011 | radio resource control unit |
| 3013 | SRS configuration unit |
| 3015 | transmission power configuration unit |
| 3051 | decoding unit |
| 3053 | demodulation unit |
| 3055 | demultiplexing unit |
| 3057 | radio reception unit |
| 3071 | encoding unit |
| 3073 | modulation unit |
| 3075 | multiplexing unit |
| 3077 | radio transmission unit |
| 3079 | downlink reference signal generation unit |
| 401 | higher layer processing unit |
| 403 | control unit |
| 405 | reception unit |
| 407 | transmission unit |
| 409 | channel measurement unit |
| 411 | transmission/reception antenna |
| 4011 | radio resource control unit |
| 4013 | SRS control unit |
| 4015 | transmission power control unit |
| 4051 | decoding unit |
| 4053 | demodulation unit |
| 4055 | demultiplexing unit |
| 4057 | radio reception unit |
| 4071 | encoding unit |
| 4073 | modulation unit |
| 4075 | multiplexing unit |
| 4077 | radio transmission unit |
| 4079 | uplink reference signal generation unit |
| 1901, 2001 | macro base station |

**Claims**

1. A terminal that generates a base sequence for a sounding reference signal (SRS) on the basis of a specific parameter, comprising:

    a reception unit that receives a radio resource control signal containing a first parameter and a second parameter, and
    that receives a downlink control information (DCI) format containing a field (SRS request) that specifies whether or not to request transmission of the SRS; and
    an uplink reference signal generation unit that determines whether the first parameter or the second parameter is to be used as the specific parameter that is applied to the base sequence, on the basis of the DCI format.

2. The terminal according to Claim 1, wherein
    the uplink reference signal generation unit
    uses the first parameter as the specific parameter in a case where the DCI format is a first DCI format, and
    uses the second parameter as the specific parameter in a case where the DCI format is a second DCI format.

3. The terminal according to Claim 1, wherein
    the uplink reference signal generation unit
    determines a subframe in which the SRS is to be transmitted, on the basis of a subframe in which the DCI format has been detected,
    uses the first parameter as the specific parameter in a case where the subframe in which the SRS is to be transmitted is included in a first subframe subset, and
    uses the second parameter as the specific parameter in a case where the subframe in which the SRS is to be transmitted is included in a second subframe subset.

4. The terminal according to Claim 1, wherein
    the uplink reference signal generation unit
    uses the first parameter as the specific parameter in a case where the DCI format that contains the SRS request has been detected in a first control channel region, and
    uses the first parameter as the specific parameter in a case where the DCI format that contains the SRS request has been detected in a second control channel region.

5. The terminal according to any one of Claims 1 to 4, further comprising:

    a transmission power control unit that
    performs transmission power control on the SRS on the basis of a first parameter setting relating to uplink power control in a case where the uplink reference signal generation unit uses the first parameter as the specific parameter, and
    performs transmission power control on the SRS on the basis of a second parameter setting relating to uplink power control in a case where the uplink reference signal generation unit uses the second parameter as the specific parameter.

6. The terminal according to any one of Claims 1 to 5, wherein
    the first parameter is a physical cell ID and the second parameter is a virtual cell ID.

7. A method for a terminal that configures a specific parameter that is applied to a base sequence for a sounding reference signal (SRS), the method comprising:
    receiving a radio resource control signal containing a first parameter and a second parameter;
    receiving a downlink control information (DCI) format containing a field (SRS request) that specifies whether or not to request transmission of the SRS; and
    determining whether the first parameter or the second parameter is to be used as the specific parameter that is applied to the base sequence, on the basis of the DCI format.

8. The method according to Claim 7, wherein
    the first parameter is used as the specific parameter in a case where the DCI format is a first DCI format, and
    the second parameter is used as the specific parameter in a case where the DCI format is a second DCI format.

**9.** The method according to Claim 7, wherein

a subframe in which the SRS is to be transmitted is determined on the basis of a subframe in which the DCI format has been detected,

the first parameter is used as the specific parameter in a case where the subframe in which the SRS is to be transmitted is included in a first subframe subset, and

the second parameter is used as the specific parameter in a case where the subframe in which the SRS is to be transmitted is included in a second subframe subset.

**10.** The method according to Claim 7, wherein

the first parameter is used as the specific parameter in a case where the DCI format that contains the SRS request has been detected in a first control channel region, and

the first parameter is used as the specific parameter in a case where the DCI format that contains the SRS request has been detected in a second control channel region.

**11.** The method according to any one of Claims 7 to 10, further comprising:

performing transmission power control on the SRS on the basis of a first parameter setting relating to uplink power control in a case where the first parameter is used as the specific parameter, and

performing transmission power control on the SRS on the basis of a second parameter setting relating to uplink power control in a case where the uplink reference signal generation unit uses the second parameter as the specific parameter.

**12.** A base station that communicates with a terminal,

the base station configuring a first parameter and a second parameter usable as a specific parameter that is applied to a base sequence for a sounding reference signal (SRS),

the base station transmitting information about the parameters to the terminal.

FIG. 1

EP 2 824 956 A1

EP 2 824 956 A1

FIG. 2

47

# FIG. 3

CHANNEL MEASUREMENT UNIT — 309

311

3057

DECODING UNIT — 3031

DEMODULATION UNIT — 3053

DEMULTIPLEXING UNIT — 3055

RADIO RECEPTION UNIT

RECEPTION UNIT

305

RADIO RESOURCE CONTROL UNIT — 3011

SRS CONFIGURATION UNIT — 3013

TRANSMISSION POWER CONFIGURATION UNIT — 3015

HIGHER LAYER PROCESSING UNIT

301

CONTROL UNIT — 303

HIGHER NODE

OTHER BASE STATION APPARATUSES

DOWNLINK REFERENCE SIGNAL GENERATION UNIT — 3079

3077

ENCODING UNIT — 3071

MODULATION UNIT — 3073

MULTIPLEXING UNIT — 3075

RADIO TRANSMISSION UNIT

TRANSMISSION UNIT

BASE STATION

307

101

EP 2 824 956 A1

# FIG. 4

EP 2 824 956 A1

# FIG. 5

```
                    ( START )
                        │
                        ▼              ⌒S501
    ┌─────────────────────────────────────────┐
    │   CONFIGURE PARAMETERS RELATING TO        │
    │        BASE SEQUENCE FOR SRS              │
    └─────────────────────────────────────────┘
                        │
                        ▼              ⌒S502
    ┌─────────────────────────────────────────┐
    │   CONFIGURE PARAMETERS RELATING TO        │
    │  TRANSMISSION POWER CONTROL ON SRS        │
    └─────────────────────────────────────────┘
                        │
                        ▼              ⌒S503
    ┌─────────────────────────────────────────┐
    │   SET PATH LOSS AND TRANSMISSION POWER    │
    │  ON BASIS OF RESULT OF RSRP MEASUREMENT   │
    └─────────────────────────────────────────┘
                        │
                        ▼              ⌒S504
    ┌─────────────────────────────────────────┐
    │  SET SRS BASE SEQUENCE IN ACCORDANCE WITH │
    │  DCI FORMAT IN WHICH SRS REQUEST DETECTED │
    └─────────────────────────────────────────┘
                        │
                        ▼              ⌒S505
    ┌─────────────────────────────────────────┐
    │              TRANSMIT SRS                 │
    └─────────────────────────────────────────┘
                        │
                        ▼
                    ( END )
```

# FIG. 6

```
                    ( START )
                        │
                        ▼              ⌒S601
                  ◇ SRS REQUEST ◇        NO
                 ◇ DETECTED IN FIRST ◇ ──────────┐
                  ◇  FORMAT?  ◇                   │
                        │ YES                     │
                        ▼      ⌒S602              ▼      ⌒S603
    ┌──────────────────────────┐   ┌──────────────────────────┐
    │   SET BASE SEQUENCE       │   │ RECOGNIZE SECOND FORMAT,  │
    │   FOR SRS ON BASIS OF     │   │    SET BASE SEQUENCE      │
    │     FIRST CELL ID         │   │   FOR SRS ON BASIS OF     │
    │                           │   │     SECOND CELL ID        │
    └──────────────────────────┘   └──────────────────────────┘
                        │                         │
                        ▼◄────────────────────────┘
                    ( END )
```

**FIG. 7**

START

↓

S701

SRS REQUEST DETECTED IN UPLINK GRANT? —NO→

↓ YES

S702
SET BASE SEQUENCE FOR SRS ON BASIS OF CELL ID SET FOR PUSCH DMRS

S703
SET BASE SEQUENCE FOR SRS ON BASIS OF CELL ID SET FOR PUCCH DMRS

↓

END

**FIG. 8**

START

↓

S801

SRS REQUEST DETECTED IN UPLINK GRANT? —NO→

↓ YES

S802
SET BASE SEQUENCE FOR SRS ON BASIS OF CELL ID SET FOR PUSCH DMRS

S803
SET BASE SEQUENCE FOR SRS ON BASIS OF CELL ID SET SO AS TO BE SRS-SPECIFIC

↓

END

**FIG. 9**

START

↓

S901

SRS REQUEST DETECTED IN FIRST CONTROL CHANNEL REGION? —NO→

↓ YES

S902
SET BASE SEQUENCE FOR SRS ON BASIS OF FIRST CELL ID

S903
SET BASE SEQUENCE FOR SRS ON BASIS OF SECOND CELL ID

↓

END

# FIG. 10

(FIRST) PARAMETER SETTING RELATING TO UPLINK POWER CONTROL
(UplinkPowerControl)

(FIRST) PARAMETER SETTING RELATING TO (PRIMARY)-CELL-SPECIFIC
UPLINK POWER CONTROL

- p0-NominalPUSCH
- $\alpha$
- p0-NominalPUCCH
- deltaFList-PUCCH
- deltaPreambleMsg3

(FIRST) PARAMETER SETTING RELATING TO SECONDARY-CELL-SPECIFIC
UPLINK POWER CONTROL

- p0-NominalPUSCH
- $\alpha$

(FIRST) PARAMETER SETTING RELATING TO (PRIMARY CELL)-TERMINAL-
SPECIFIC UPLINK POWER CONTROL

- p0-UE-PUSCH
- deltaMCS-Enabled
- accumulation-Enabled
- p0-UE-PUCCH
- pSRS-Offset
- filterCoeffcient
- pSRS-Offset-Ap
- deltaTxD-OffsetListPUCCH

(FIRST) PARAMETER SETTING RELATING TO SECONDARY-CELL-TERMINAL-
SPECIFIC UPLINK POWER CONTROL

- p0-UE-PUSCH
- deltaMCS-Enabled
- accumulation-Enabled
- p0-UE-PUCCH
- pSRS-Offset
- pSRS-Offset-Ap
- filterCoeffcient
- pathlossReference(-r10)

# FIG. 11

CELL-SPECIFIC RADIO RESOURCE CONFIGURATION (RadioResourceConfigCommon)

    ├──── (FIRST) PARAMETER SETTING RELATING TO CELL-SPECIFIC UPLINK POWER CONTROL

    └──── etc.


TERMINAL-SPECIFIC PHYSICAL CONFIGURATION (PhysicalConfigDedicated)

    ├──── (FIRST) PARAMETER SETTING RELATING TO TERMINAL-SPECIFIC UPLINK POWER CONTROL

    └──── etc.


SECONDARY-CELL-SPECIFIC RADIO RESOURCE CONFIGURATION (RadioResourceConfigCommonSCell-r10)

    ├──── (FIRST) PARAMETER SETTING RELATING TO SECONDARY-CELL-SPECIFIC UPLINK POWER CONTROL

    └──── etc.


SECONDARY-CELL-TERMINAL-SPECIFIC PHYSICAL CONFIGURATION (PhysicalConfigDedicatedSCell-r10)

    ├──── (FIRST) PARAMETER SETTING RELATING TO SECONDARY-CELL-TERMINAL-SPECIFIC UPLINK POWER CONTROL

    └──── etc.

# FIG. 12

PARAMETER SETTING -r11 RELATING TO (PRIMARY CELL)-TERMINAL-SPECIFIC UPLINK POWER CONTROL

    └── PATH LOSS REFERENCE RESOURCE ──── MEASUREMENT TARGET


PARAMETER SETTING -r11 RELATING TO SECONDARY-CELL-TERMINAL-SPECIFIC UPLINK POWER CONTROL

    └── PATH LOSS REFERENCE RESOURCE ──── MEASUREMENT TARGET


MEASUREMENT TARGET

    └── CELL-SPECIFIC REFERENCE SIGNAL ANTENNA PORT 0, OR INDEX ASSOCIATED WITH CSI-RS ANTENNA PORT INDEX
(OR CSI-RS MEASUREMENT INDEX)

EP 2 824 956 A1

# FIG. 13

SECOND PARAMETER SETTING RELATING TO UPLINK POWER CONTROL

SECOND PARAMETER SETTING -r11 RELATING TO (PRIMARY)-CELL-SPECIFIC UPLINK POWER CONTROL

SECOND PARAMETER SETTING -r11 RELATING TO SECONDARY-CELL-SPECIFIC UPLINK POWER CONTROL

SECOND PARAMETER SETTING -r11 RELATING TO (PRIMARY CELL)-TERMINAL-SPECIFIC UPLINK POWER CONTROL

SECOND PARAMETER SETTING -r11 RELATING TO SECONDARY-CELL-TERMINAL-SPECIFIC UPLINK POWER CONTROL

EP 2 824 956 A1

## FIG. 14

(PRIMARY)-CELL-SPECIFIC RADIO RESOURCE CONFIGURATION (RagioResourceConfigCommon)

— FIRST PARAMETER SETTING RELATING TO (PRIMARY)-CELL-SPECIFIC UPLINK POWER CONTROL

— FIRST PARAMETER SETTING -r11 RELATING TO (PRIMARY)-CELL-SPECIFIC UPLINK POWER CONTROL

— SECOND PARAMETER SETTING -r11 RELATING TO (PRIMARY)-CELL-SPECIFIC UPLINK POWER CONTROL

SECONDARY-CELL-SPECIFIC RADIO RESOURCE CONFIGURATION (RagioResourceConfigCommonSCell-r10)

— FIRST PARAMETER SETTING RELATING TO SECONDARY-CELL-SPECIFIC UPLINK POWER CONTROL

— FIRST PARAMETER SETTING -r11 RELATING TO SECONDARY-CELL-SPECIFIC UPLINK POWER CONTROL

— SECOND PARAMETER SETTING -r11 RELATING TO SECONDARY-CELL-SPECIFIC UPLINK POWER CONTROL

(PRIMARY CELL)-TERMINAL-SPECIFIC PHYSICAL CONFIGURATION (PhysicalConfigDedicated)

— FIRST PARAMETER SETTING RELATING TO (PRIMARY CELL)-TERMINAL-SPECIFIC UPLINK POWER CONTROL

— FIRST PARAMETER SETTING -r11 RELATING TO (PRIMARY CELL)-TERMINAL-SPECIFIC UPLINK POWER CONTROL

— SECOND PARAMETER SETTING -r11 RELATING TO (PRIMARY CELL)-TERMINAL-SPECIFIC UPLINK POWER CONTROL

SECONDARY-CELL-TERMINAL-SPECIFIC PHYSICAL CONFIGURATION (PhysicalConfigDedicatedSCell-r10)

— FIRST PARAMETER SETTING RELATING TO SECONDARY-CELL-TERMINAL-SPECIFIC UPLINK POWER CONTROL

— FIRST PARAMETER SETTING -r11 RELATING TO SECONDARY-CELL-TERMINAL-SPECIFIC UPLINK POWER CONTROL

— SECOND PARAMETER SETTING -r11 RELATING TO SECONDARY-CELL-TERMINAL-SPECIFIC UPLINK POWER CONTROL

EP 2 824 956 A1

# FIG. 15

EXAMPLE OF SECOND PARAMETER SETTING -r11 RELATING TO (PRIMARY)-CELL-SPECIFIC UPLINK POWER CONTROL

```
├──── RELEASE
└──── SETUP
         ├──┐ p0-NominalPUSCH ┐     · INCLUDE ALL INFORMATION ELEMENTS
         ├──┤ α               │     · INCLUDE AT LEAST ONE INFORMATION ELEMENT
         ├──┤ p0-NominalPUCCH  │    · INCLUDE NO INFORMATION ELEMENT (RELEASE)
         ├──┤ deltaFList-PUCCH │
         └──┤ deltaPreambleMsg3 ┘
```

EXAMPLE OF SECOND PARAMETER SETTING -r11 RELATING TO SECONDARY-CELL-SPECIFIC UPLINK POWER CONTROL

```
├──── RELEASE
└──── SETUP
         ├──┐ p0-NominalPUSCH ┐     · INCLUDE ALL INFORMATION ELEMENTS
         └──┤ α               ┘     · INCLUDE AT LEAST ONE INFORMATION ELEMENT
                                    · INCLUDE NO INFORMATION ELEMENT (RELEASE)
```

EP 2 824 956 A1

# FIG. 16

EXAMPLE OF FIRST PARAMETER SETTINGS -r11 RELATING TO (PRIMARY CELL)-TERMINAL-SPECIFIC UPLINK POWER CONTROL

└── PATH LOSS REFERENCE RESOURCE

EXAMPLE OF FIRST PARAMETER SETTINGS -r11 RELATING TO SECONDARY-CELL-TERMINAL-SPECIFIC UPLINK POWER CONTROL

└── PATH LOSS REFERENCE RESOURCE

EXAMPLE OF SECOND PARAMETER SETTING -r11 RELATING TO (PRIMARY CELL)-TERMINAL-SPECIFIC UPLINK POWER CONTROL

├── RELEASE

└── SETUP
    ├── p0-UE-PUSCH
    ├── deltaMCS-Enabled
    ├── accumulation-Enabled
    ├── p0-UE-PUCCH
    ├── pSRS-Offset
    ├── filterCoefficient
    ├── pSRS-Offset-Ap
    ├── deltaTxD-OffsetListPUCCH
    └── PATH LOSS REFERENCE RESOURCE

- INCLUDE ALL INFORMATION ELEMENTS
- INCLUDE AT LEAST ONE INFORMATION ELEMENT
- INCLUDE NO INFORMATION ELEMENT (RELEASE)

EXAMPLE OF SECOND PARAMETER SETTING -r11 RELATING TO SECONDARY-CELL-TERMINAL-SPECIFIC UPLINK POWER CONTROL

├── RELEASE

└── SETUP
    ├── p0-UE-PUSCH
    ├── deltaMCS-Enabled
    ├── accumulation-Enabled
    ├── p0-UE-PUCCH
    ├── pSRS-Offset
    ├── pSRS-Offset-Ap
    ├── filterCoefficient
    ├── pathlossReference(-r11)
    └── PATH LOSS REFERENCE RESOURCE

- INCLUDE ALL INFORMATION ELEMENTS
- INCLUDE AT LEAST ONE INFORMATION ELEMENT
- INCLUDE NO INFORMATION ELEMENT (RELEASE)

# FIG. 17

TERMINAL-SPECIFIC PUCCH CONFIGURATION -v11x0 (PUCCH-ConfigDedicated-v11x0)
 └────── UplinkPowerControl


TERMINAL-SPECIFIC PUSCH CONFIGURATION -v11x0 (PUSCH-ConfigDedicated-v11x0)
 └────── UplinkPowerControl


TERMINAL-SPECIFIC SRSUL CONFIGURATION -v11x0 (SoundingRS-UL-ConfigDedicated-v11x0)
 └────── UplinkPowerControl


APERIODIC SRS CONFIGURATION r11 (SRS-ConfigAp-r11)
 └────── UplinkPowerControl


RACH CONFIGURATION v11x0 (RACH ConfigDedicated v11x0)
 ├────── powerRampingStep
 └────── preambleInitialReceivedTargetPower

# FIG. 18

EP 2 824 956 A1

# FIG. 19

1901

1905

1906

1902

1904

1903

EP 2 824 956 A1

FIG. 20

## INTERNATIONAL SEARCH REPORT

| | International application No. |
|---|---|
| | PCT/JP2013/055785 |

A.    CLASSIFICATION OF SUBJECT MATTER
*H04W16/28*(2009.01)i, *H04W28/16*(2009.01)i, *H04W72/04*(2009.01)i, *H04W72/12* (2009.01)i

According to International Patent Classification (IPC) or to both national classification and IPC

B.    FIELDS SEARCHED

Minimum documentation searched (classification system followed by classification symbols)
H04W16/28, H04W28/16, H04W72/04, H04W72/12

Documentation searched other than minimum documentation to the extent that such documents are included in the fields searched
    Jitsuyo Shinan Koho          1922-1996    Jitsuyo Shinan Toroku Koho    1996-2013
    Kokai Jitsuyo Shinan Koho    1971-2013    Toroku Jitsuyo Shinan Koho    1994-2013

Electronic data base consulted during the international search (name of data base and, where practicable, search terms used)

C.    DOCUMENTS CONSIDERED TO BE RELEVANT

| Category* | Citation of document, with indication, where appropriate, of the relevant passages | Relevant to claim No. |
|---|---|---|
| X | JP 2012-034145 A  (Sharp Corp.), 16 February 2012 (16.02.2012), | 1,2,4,5,7,8, 10-12 |
| Y | claim 7; paragraphs [0146] to [0155], [0170] to [0205] (Family: none) | 3,6,9 |
| Y | WO 2011/155361 A1  (Sharp Corp.), 15 December 2011 (15.12.2011), paragraphs [0078] to [0088]; fig. 8 & JP 2011-259258 A | 3,9 |
| Y | CATT, SRS enhancement for CoMP, 3GPP TSG RAN WG1 Meeting #68 R1-120170, 2012.02.10 | 6 |
| A | Texas Instruments, Resource Allocation and Signaling for Aperiodic Sounding, 3GPP R1-105291, 2010.10.15 | 1-12 |

☒  Further documents are listed in the continuation of Box C.          ☐  See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search    25 March, 2013 (25.03.13) | Date of mailing of the international search report    02 April, 2013 (02.04.13) |
|---|---|
| Name and mailing address of the ISA/    Japanese Patent Office | Authorized officer |
| Facsimile No. | Telephone No. |

Form PCT/ISA/210 (second sheet) (July 2009)

**EP 2 824 956 A1**

**INTERNATIONAL SEARCH REPORT**

International application No.

PCT/JP2013/055785

C (Continuation).   DOCUMENTS CONSIDERED TO BE RELEVANT

| Category* | Citation of document, with indication, where appropriate, of the relevant passages | Relevant to claim No. |
|---|---|---|
| A | NTT DOCOMO, Views on SRS Enhancement for LTE-Advanced, 3GPP TSG RAN WG1 Meeting #60bis R1-102305, 2010.04.16 | 1-12 |

Form PCT/ISA/210 (continuation of second sheet) (July 2009)

**EP 2 824 956 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Technical Specification Group Radio Access Network; Evolved Universal Terrestrial Radio Access (E-UTRA); Physical layer procedures (Release 10). *3GPP TS 36.212 V10.1.0,* March 2011

- Further Advancements for E-UTRA Physical Layer Aspects (Release 9). *3GPP TR 36.814 V9.0.0,* March 2010